# EUROPÄISCHE PATENTSCHRIFT

(11) **EP 0 586 331 B1**
(45) Veröffentlichungstag und Bekanntmachung des Hinweises auf die Patenterteilung: **07.01.1999**
(21) Anmeldenummer: 93810530.1
(22) Anmeldetag: 22.07.1993
(51) Int. Cl.: C09B 62/503, D06P 3/24

(54) **Verfahren zum Färben von synthetischen Polyamidfasermaterialien**
Process for dyeing synthetic polyamid fibre materials
Procédé de teinture de matériaux en fibres synthétiques à base de polyamide

(30) Priorität: 31.07.1992 CH 2414/92
(43) Veröffentlichungstag der Anmeldung: 09.03.1994
(73) Patentinhaber: Ciba Specialty Chemicals Holding Inc., 4057 Basel (CH)
(72) Erfinder: Galafassi, Pierre, Dr., F-68220 Hegenheim (FR); Adam, Jean-Marie. Dr., F-68300 Rosenau (FR)

(56) Entgegenhaltungen:
- EP-A- 0 208 655
- EP-A- 0 385 204

## Beschreibung

Die vorliegende Erfindung betrifft ein neues Verfahren zum Färben von synthetischen Polyamidfasermaterialien mit sulfogruppenhaltigen Reaktivfarbstoffen.

Reaktivfarbstoffe werden seit langem in grossem Umfang für das Färben von Textilien aus Fasermaterialien eingesetzt. Angesichts der steigenden Anforderungen an Reaktivfärbungen in bezug auf Wirtschaftlichkeit, Applikationstechnik, Echtheitsniveau und Egalität der erhaltenen Färbungen ist der erreichte technische Stand vielfach noch nicht voll befriedigend.

Gegenstand der vorliegenden Erfindung ist ein Verfahren zum Färben von synthetischen Polyamidfasermaterialien, welches dadurch gekennzeichnet ist, dass man diese Fasermaterialien mit Reaktivfarbstoffen der Formel

HO₃S―Fa(̵X - SO₂CH₂CH₂OSO₃H)ₘ (1),

worin Fa ein Farbstoffrest, X die direkte Bindung oder ein Rest der Formel -CONHCH₂CH₂-, m die Zahl 1 oder 2 ist und der Farbstoff der Formel (1) nur eine Sulfogruppe enthält, aus wässriger Flotte bei einem pH-Wert von 5 bis 9 färbt und zur Einstellung der Färbetemperatur innerhalb eines Zeitraumes von mindestens 20 Minuten die Temperatur von 80°C auf eine Temperatur von mindestens 95°C erhöht.

Das erfindungsgemässe Verfahren liefert faser- und flächenegale Färbungen, die sich durch den guten Echtheitsstandard sowie insbesondere durch gutes Aufzieh- und Fixiervermögen auszeichnen.

In der EP-A-208 655 werden Farbstoffe der obigen Formel (1) offenbart. Die in der EP-A-208 655 offenbarten Färbeverfahren unterscheiden sich jedoch von dem Färbeverfahren der vorliegenden Erfindung hinsichtlich der verwendeten Verfahrensparameter.

In den definierten Reaktivfarbstoffen der Formel (1) bedeutet der Farbstoffrest Fa beispielsweise den Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes, vorzugsweise ist Fa der Rest eines Monoazo-, Polyazo- oder Anthrachinon-Farbstoffes.

Der Rest Fa in Formel (1) kann an seinem Grundgerüst die bei organischen Farbstoffen üblichen Substituenten gebunden enthalten.

Als Beispiele für weitere Substituenten im Rest Fa seien genannt: Alkylgruppen mit 1 bis 8, vorzugsweise 1 bis 4 Kohlenstoffatomen, wie Methyl, Aethyl, Propyl, Isopropyl oder Butyl, Alkoxygruppen mit 1 bis 8, vorzugsweise 1 bis 4 Kohlenstoffatomen, wie Methoxy, Aethoxy, Propoxy, Isopropoxy oder Butoxy, Acylaminogruppen mit 1 bis 8 Kohlenstoffatomen, insbesondere Alkanoylaminogruppen und Alkoxycarbonylaminogruppen mit 2 bis 4 Kohlenstoffatomen, wie Acetylamino, Propionylamino, Methoxycarbonylamino oder Aethocycarbonylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, Amino, Ureido, Hydroxy, Carboxy, Phenyl, Naphthyl, Phenylamino, N-Alkylphenylamino mit 1 bis 8, vorzugsweise 1 bis 4 Kohlenstoffatomen im Alkylrest, Benzylamino, N-Alkylbenzylamino mit 1 bis 8, vorzugsweise 1 bis 4 Kohlenstoffatomen im Alkylrest, Phenylaminosulfonyl, am Stickstoffatom durch C₁-C₈-Alkyl, insbesondere durch C₁-C₄-Alkyl substituiertes Phenylaminosulfonyl, Phenylamino weiches im Phenylring durch Phenylaminosulfonyl oder durch N-Alkylphenylaminosulfonyl mit 1 bis 8, vorzugsweise 1 bis 4 Kohlenstoffatomen im Alkylrest substituiert ist, wobei die Phenyl- oder Naphthylringe der oben genannten Substituenten durch C₁-C₄-Alkyl, C₁-C₄-Alkoxy, C₂-C₄-Alkanoylamino; Halogen oder Sulfo weitersubstituiert sein können. Gegebenenfalls können zwei Substituenten der genannten Ringsysteme zusammen mit den sie verbindenden Atomen weitere ankondensierte Ringsysteme bilden.

Als Farbstoffe der Formel (1) verwendet man in dem erfindungsgemässen Verfahren bevorzugt Reaktivfarbstoffe der Formeln (2) bis (8) wie nachfolgend angegeben: 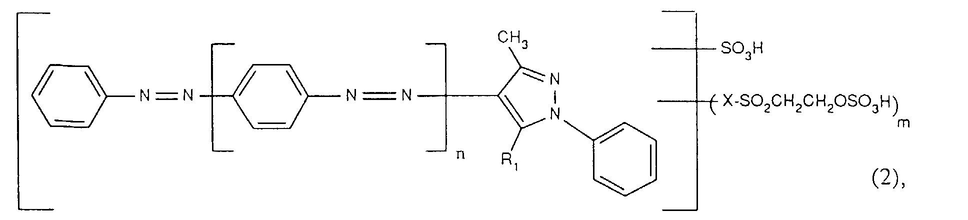 worin R₁ Wasserstoff, C₁-C₄-Alkyl, Amino oder Hydroxyl und n die Zahl 0 oder 1 bedeutet, 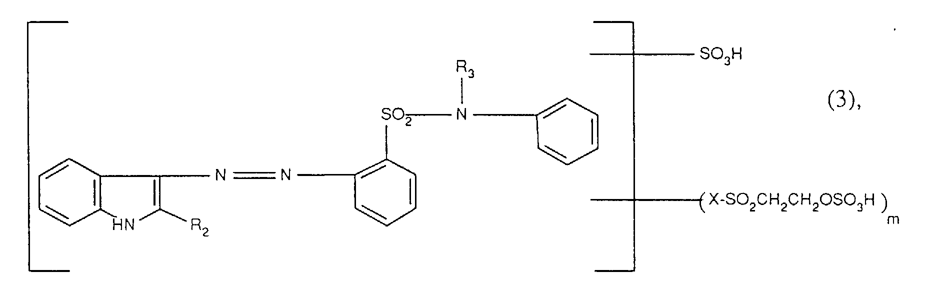 worin R₂ Wasserstoff, C₁-C₄-Alkyl oder gegebenenfalls durch C₁-C₄-Alkyl, C₁-C₄-Alkoxy, C₂-C₄-Alkanoylamino oder Halogen substituiertes Phenyl und R₃ Wasserstoff oder C₁-C₄-Alkyl ist, 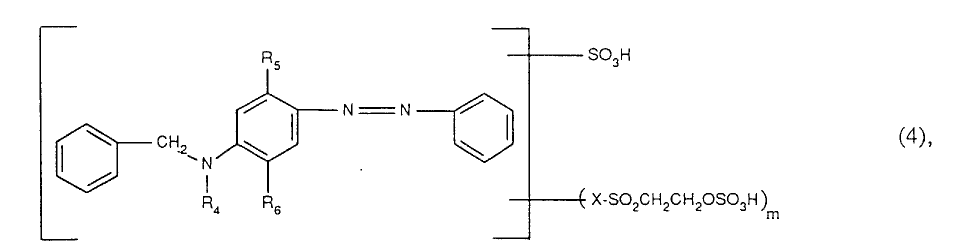 worin R₄ Wasserstoff oder C₁-C₄-Alkyl, R₅ und R₆ Wasserstoff, C₁-C₄-Alkyl, C₁-C₄-Alkoxy, C₂-C₄-Alkanoylamino oder Halogen sind und R₄ und R₆ gegebenenfalls zusammen mit den sie verbindenden Atomen einen Tetrahydropyridinring bilden, 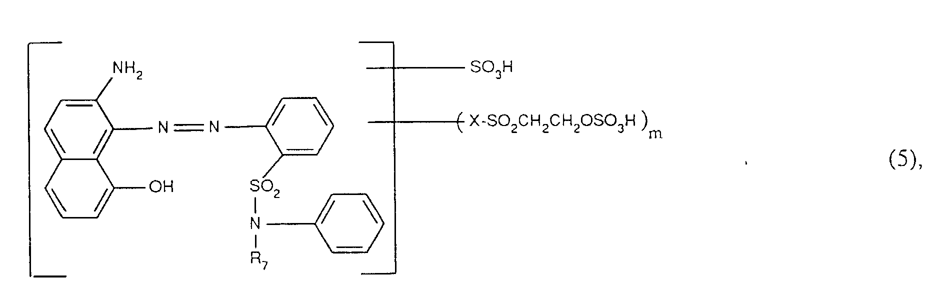 worin R₇ Wasserstoff oder C₁-C₄-Alkyl ist, 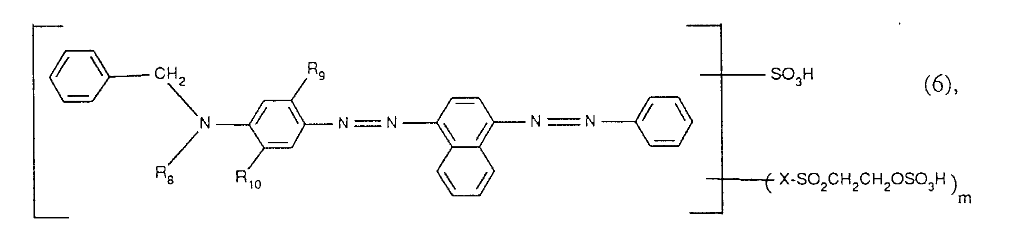 worin R₈ Wasserstoff oder C₁-C₄-Alkyl, R₉ und R₁₀ Wasserstoff, C₁-C₄-Alkyl, C₁-C₄-Alkoxy, C₂-C₄-Alkanoylamino oder Halogen sind und R₈ und R₁₀ gegebenenfalls zusammen mit den sie verbindenden Atomen einen Tetrahydropyridinring bilden, 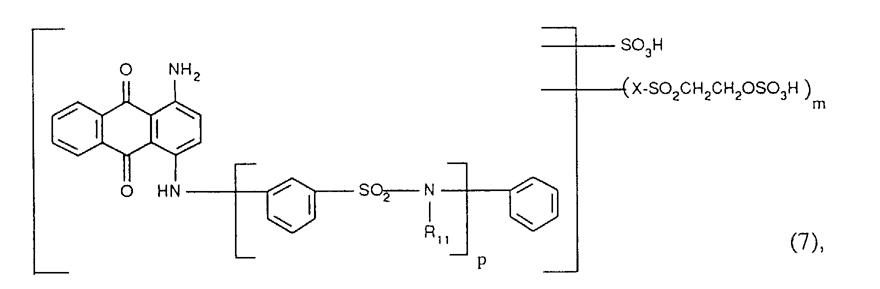 worin R₁₁ Wasserstoff oder C₁-C₄-Alkyl und p die Zahl 0 oder 1 ist,
oder 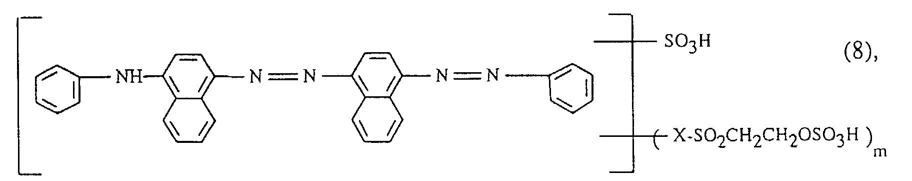 wobei in den Farbstoffen der Formeln (2) bis (8) X die direkte Bindung oder ein Rest der Formel -CONHCH₂CH₂- und m die Zahl 1 oder 2 ist, und die Farbstoffe der Formeln (2) bis (8) gegebenenfalls durch C₁-C₄-Alkyl, C₁-C₄-Alkoxy, C₂-C₄-Alkanoylamino oder Halogen, insbesondere Methyl, Methoxy, Acetylamino oder Chlor, weitersubstituiert sind.

Als C₁-C₄-Alkyl kommt für R₁, R₂, R₃, R₄, R₅, R₆, R₇, R₈, R₉, R₁₀, R₁₁ sowie als weiterer Substituent der Farbstoffe der Formeln (2) bis (8) Methyl, Äthyl, Propyl, Isopropyl, Butyl, Isobutyl, sek.-Butyl oder tert.-Butyl, insbesondere Methyl, in Betracht.

Als C₁-C₄-Alkoxy kommt für R₅, R₆, R₉, R₁₀ sowie als weiterer Substituent der Farbstoffe der Formeln (2) bis (8) Methoxy, Äthoxy, Propoxy, Isopropoxy, Butoxy, Isobutoxy, sek.-Butoxy oder tert.-Butoxy, insbesondere Methoxy, in Betracht.

Als C₂-C₄-Alkanoylamino kommt für R₅, R₆, R₉, R₁₀ sowie als weiterer Substituent der Farbstoffe der Formeln (2) bis (8) z.B. Acetylamino oder Propionylamino, insbesondere Acetylamino, in Betracht.

Als Halogen kommt für R₅, R₆, R₉, R₁₀ sowie als weiterer Substituent der Farbstoffe der Formeln (2) bis (8) z.B. Fluor, Chlor oder Brom, insbesondere Chlor, in Betracht.

Als Phenyl kommt für R₂ ein unsubstituierter oder ein durch C₁-C₄-Alkyl, wie Methyl, Äthyl, Propyl, Isopropyl, Butyl, Isobutyl, sek.-Butyl oder tert.-Butyl, C₁-C₄-Alkoxy, wie Äthoxy, Propoxy, Isopropoxy, Butoxy, Isobutoxy, sek.-Butoxy oder tert.-Butoxy, C₂-C₄-Alkanoylamino, wie z.B. Acetylamino oder Propionylamino, oder Halogen, wie z.B. Fluor, Chlor oder Brom, substituierter Phenylrest in Betracht.

Als Farbstoffe der Formel (1) verwendet man in dem erfindungsgemässen Verfahren besonders bevorzugt Reaktivfarbstoffe der Formel (1), insbesondere Reaktivfarbstoffe der Formeln (2) bis (8), worin m die Zahl 1 ist.

Ganz besonders bevorzugt für das erfindungsgemässe Verfahren sind
a) als Reaktivfarbstoffe der Formel (2) die Farbstoffe der Formeln 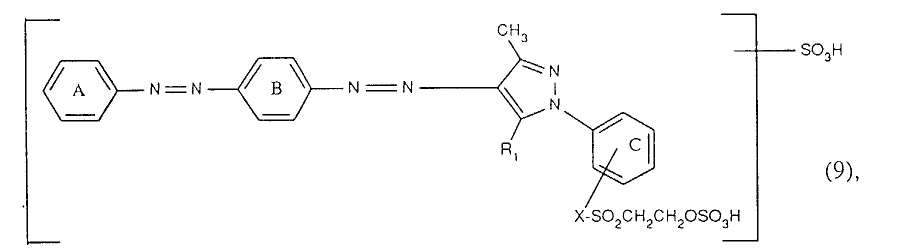 worin R₁ Wasserstoff, C₁-C₄-Alkyl, Amino oder Hydroxyl, insbesondere C₁-C₄-Alkyl, ist, die Benzolringe A, B und C unabhängig voneinander gegebenenfalls durch C₁-C₄-Alkyl, C₁-C₄-Alkoxy, C₂-C₄-Alkanoylamino oder Halogen substituiert sind und X die direkte Bindung oder ein Rest der Formel -CONHCH₂CH₂- ist, und worin die Sulfogruppe vorzugsweise an den Benzolring A gebunden ist,
   und 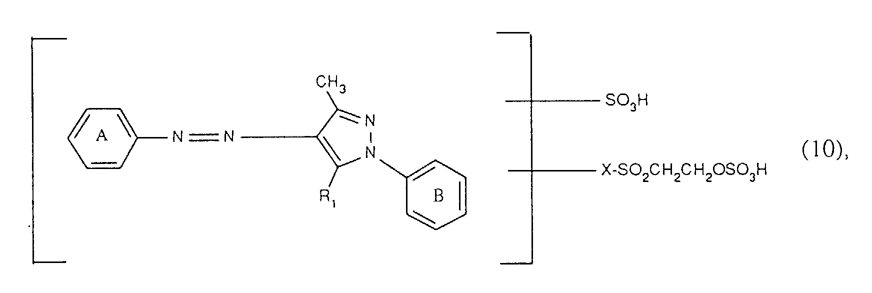 worin R₁ Amino oder Hydroxyl ist, die Benzolringe A und B unabhängig voneinander gegebenenfalls durch C₁-C₄-Alkyl, C₁-C₄-Alkoxy, C₂-C₄-Alkanoylamino oder Halogen substituiert sind und X die direkte Bindung oder ein Rest der Formel -CONHCH₂CH₂- ist;
b) als Reaktivfarbstoff der Formel (3) der Farbstoff der Formel 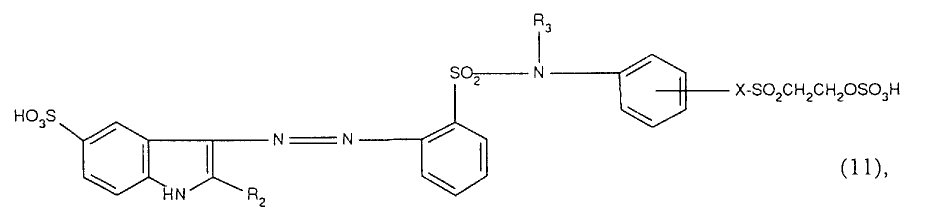 worin R₂ C₁-C₄-Alkyl oder Phenyl, R₃ Wasserstoff oder C₁-C₄-Alkyl und X die direkte Bindung oder ein Rest der Formel -CONHCH₂CH₂- ist;
c) als Reaktivfarbstoff der Formel (4) der Farbstoff der Formel 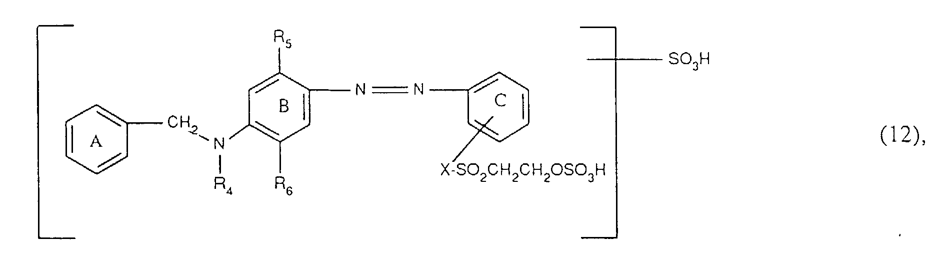 worin R₄ Wasserstoff oder C₁-C₄-Alkyl, R₅ Wasserstoff, C₁-C₄-Alkyl, C₁-C₄-Alkoxy oder C₂-C₄-Alkanoylamino, R₆ Wasserstoff, C₁-C₄-Alkyl, C₁-C₄-Alkoxy oder Halogen ist, X die direkte Bindung oder ein Rest der Formel -CONHCH₂CH₂- ist, der Benzolring C gegebenenfalls durch C₁-C₄-Alkyl, C₁-C₄-Alkoxy oder Halogen substituiert ist und die Sulfogruppe an den Benzolring A, B oder C, insbesondere an den Benzolring A, gebunden ist;
d) als Reaktivfarbstoff der Formel (5) der Farbstoff der Formel 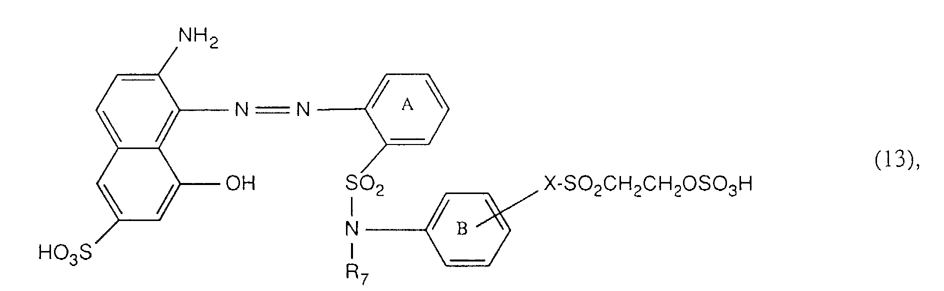 worin R₇ Wasserstoff oder C₁-C₄-Alkyl, X die direkte Bindung oder ein Rest der Formel -CONHCH₂CH₂- ist und die Benzolringe A und B unabhängig voneinander gegebenenfalls durch C₁-C₄-Alkyl, C₁-C₄-Alkoxy oder Halogen substituiert sind;
e) als Reaktivfarbstoff der Formel (6) der Farbstoff der Formel 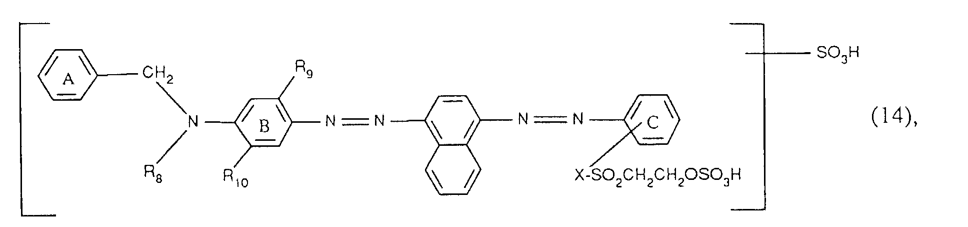 worin R₈ Wasserstoff oder C₁-C₄-Alkyl, R₉ Wasserstoff, C₁-C₄-Alkyl, C₁-C₄-Alkoxy oder C₂-C₄-Alkanoylamino, R₁₀ Wasserstoff, C₁-C₄-Alkyl, C₁-C₄-Alkoxy oder Halogen sind, X die direkte Bindung oder ein Rest der Formel -CONHCH₂CH₂- ist und die Benzolringe A, B und C unabhängig voneinander gegebenenfalls durch C₁-C₄-Alkyl, C₁-C₄-Alkoxy oder Halogen substituiert sind und die Sulfogruppe an den Benzolring A, B oder C, insbesondere an den Benzolring A oder C, gebunden ist;
f) als Reaktivfarbstoff der Formel (7) der Farbstoff der Formel 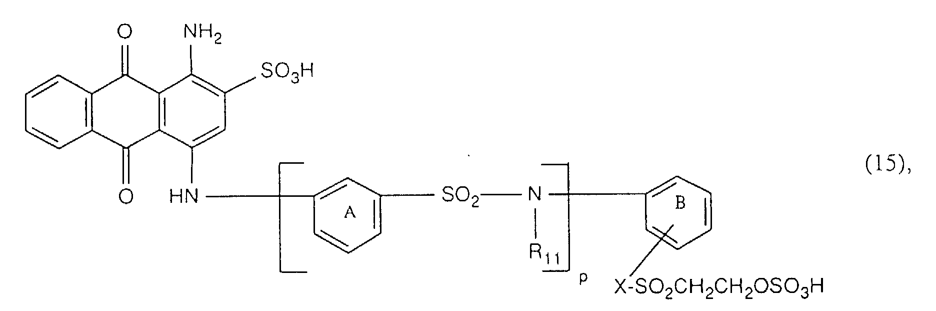 worin R₁₁ Wasserstoff oder C₁-C₄-Alkyl, p die Zahl 0 oder 1, X die direkte Bindung oder ein Rest der Formel -CONHCH₂CH₂- ist und die Benzolringe A und B unabhängig voneinander gegebenenfalls durch C₁-C₄-Alkyl, C₁-C₄-Alkoxy oder Halogen substituiert sind, und
g) als Reaktivfarbstoff der Formel (8) der Farbstoff der Formel 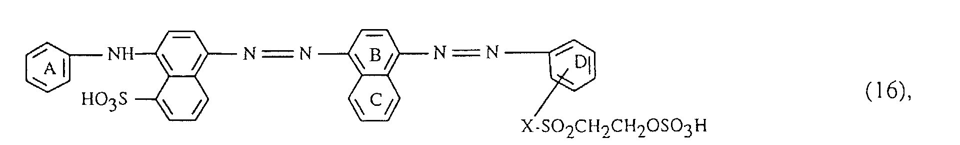 worin X die direkte Bindung oder ein Rest der Formel -CONHCH₂CH₂- ist und die Benzolringe A, B, C und D, insbesondere nur die Benzolringe A und D, unabhängig voneinander gegebenenfalls durch C₁-C₄-Alkyl, C₁-C₄-Alkoxy oder Halogen substituiert sind.

Die Färbeflotten können ausser Wasser und den Farbstoffen weitere Zusätze, beispielsweise Netzmittel, Antischaummittel, Egalisiermittel oder die Eigenschaft des Textilmaterials beeinflussende Mittel, wie z.B. Weichmachungsmittel, Zusätze zum Flammfestausrüsten oder schmutz-, wasser- und ölabweisende Mittel, sowie wasserenthärtende Mittel enthalten.

Das Flottenverhältnis kann innerhalb eines weiten Bereichs gewählt werden, beispielsweise von 1:5 bis 1:80, vorzugsweise von 1:10 bis 1:50.

Die Mengen, in denen die definierten Reaktivfarbstoffe der Formel (1) in den Färbebädern verwendet werden, können je nach der gewünschten Farbtiefe in weiten Grenzen schwanken, im allgemeinen haben sich Mengen von 0,01 bis 10 Gewichtsprozent, bezogen auf das Färbegut, als vorteilhaft erwiesen.

Das Färben erfolgt aus wässriger Flotte, z.B. nach dem Ausziehverfahren, z.B. bei Temperaturen von 95 bis 130°C, insbesondere 95 bis 110°C, vorzugsweise 95 bis 102°C.

Eine bevorzugte Ausführungsform des erfindungsgemässen Verfahrens ist dadurch gekennzeichnet, dass man zur Einstellung der Färbetemperatur innerhalb eines Zeitraumes von mindestens 20 Minuten die Temperatur von 80°C auf eine Temperatur von 95 bis 110°C, insbesondere 95 bis 102°C, erhöht. Vorzugsweise erfolgt die genannten Erhöhungen der Temperatur innerhalb eines Zeitraumes von mindestens 30 Minuten. Als obere Grenze für den Zeitraum der Erhöhung der Temperatur seien z.B. 3 Stunden, insbesondere 1 Stunde und vorzugsweise 45 Minuten genannt.

Für das erfindungsgemässe Verfahren hat sich die Einhaltung eines möglichst konstanten pH-Wertes während des Färbens als vorteilhaft erwiesen.

Zur Konstanthaltung des pH-Wertes färbt man beispielsweise in Gegenwart eines Puffers oder dosiert während des Färbens eine zur Konstanthaltung des pH-Wertes erforderliche Menge einer Base, wie z.B. Natrium- oder Kaliumhydroxid, zu. Als Puffer können die allgemein üblichen Puffersysteme, wie z.B. Dinatriumcarbonat/Natriumhydroxid, Natriumhydrogencarbonat/Natriumhydroxid, Dinatriumhydrogenphosphat/Natriumhydroxid oder Natriumdihydrogenphosphat/Natriumhydroxid, verwendet werden. Die Zudosierung einer Base kann z.B durch kontinuierliche Bestimmung des pH-Wertes während des Färbens und der Zugabe der zur Konstanthaltung des pH-Wertes erforderlichen Menge einer Base mit geeigneten Dosiersystemen erfolgen.

Vorzugsweise färbt man bei einem pH-Wert von 5,5 bis 8, insbesondere 6 bis 7.

Das erfindungsgemässe Verfahren ist besonders zum Färben nach der Ausziehmethode geeignet.

Zur Vervollständigung der Fixierung bzw. des Aufziehens kann gegebenenfalls im Anschluss an den Färbeprozess der pH abgesenkt werden, wie z.B. auf einen Wert von 3 bis 5.

Eine ganz besonders bevorzugte Ausführungsform des erfindungsgemässen Verfahrens ist dadurch gekennzeichnet, dass man nach der Ausziehmethode bei einer Temperatur von 95 bis 110°C, insbesondere 95 bis 102°C, färbt, in Gegenwart eines Puffers färbt oder während des Färbens eine zur Konstanthaltung des pH-Wertes erforderliche Menge einer Base zudosiert, und zur Einstellung der Färbetemperatur innerhalb eines Zeitraumes von mindestens 20 Minuten, insbesondere mindesten 30 Minuten, die Temperatur von 80°C auf eine Temperatur von 95 bis 110°C, insbesondere 95 bis 102°C, erhöht.

Als Fasermaterial aus synthetischen Polyamiden, das erfindungsgemäss gefärbt werden kann, kommt solches aus allen bekannten, dafür geeigneten synthetischen Polyamiden, wie z.B. Polyamid 6 oder Polyamid 6.6, in Betracht. Das Fasermaterial kann dabei in den verschiedensten Aufmachungsformen vorliegen, wie z.B. als Faser, Garn, Gewebe, Gewirke oder in Form von Teppichen.

Die in dem erfindungsgemässen Verfahren eingesetzten Reaktivfarbstoffe sind teilweise bekannt oder können in Analogie zu bekannten Verbindungen hergestellt werden. Die noch neuen Reaktivfarbstoffe der Formeln (2) bis (8) stellen einen weiteren Gegenstand der Erfindung dar.

Gegenstand der vorliegenden Erfindung sind somit ferner Reaktivfarbstoffe der Formel

HO₃S―Fa'―X-SO₂CH₂CH₂OSO₃H (17),

worin X die direkte Bindung oder ein Rest der Formel -CONHCH₂CH₂- ist und Fa' ein Rest der Formel 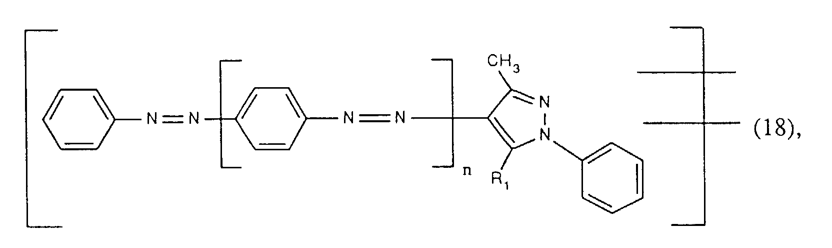 worin R₁ Wasserstoff, C₁-C₄-Alkyl, Amino oder Hydroxyl und n die Zahl 0 oder 1 ist, wobei X den Rest der Formel -CONHCH₂CH₂- bedeutet wenn n die Zahl 0 ist,
oder 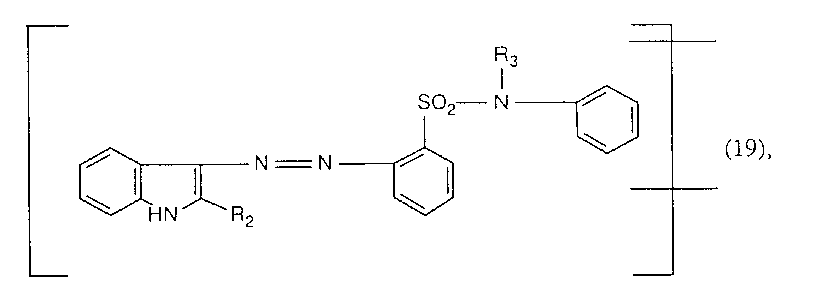 worin R₂ Wasserstoff, C₁-C₄-Alkyl oder gegebenenfalls durch C₁-C₄-Alkyl, C₁-C₄-Alkoxy, C₂-C₄-Alkanoylamino oder Halogen substituiertes Phenyl und R₃ Wasserstoff oder C₁-C₄-Alkyl ist,
oder 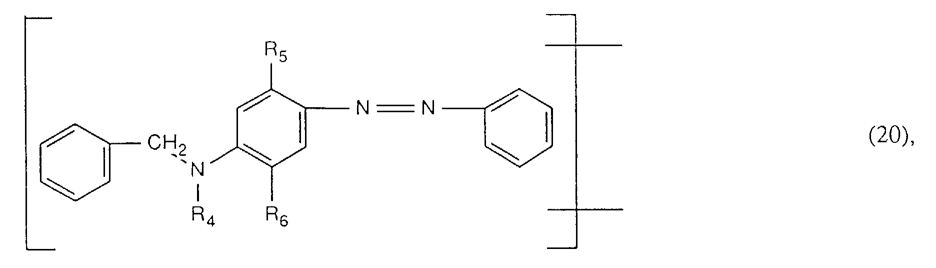 worin R₄ Wasserstoff oder C₁-C₄-Alkyl, R₅ und R₆ Wasserstoff, C₁-C₄-Alkyl, C₁-C₄-Alkoxy, C₂-C₄-Alkanoylamino oder Halogen sind und R₄ und R₆ gegebenenfalls zusammen mit den sie verbindenden Atomen einen Tetrahydropyridinring bilden,
oder 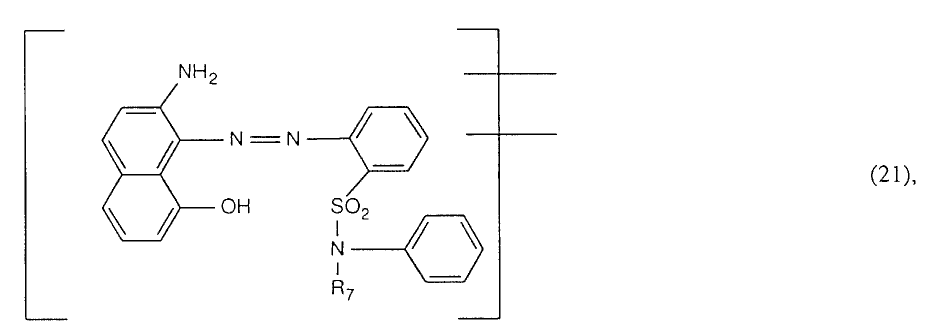 worin R₇ Wasserstoff oder C₁-C₄-Alkyl ist,
oder 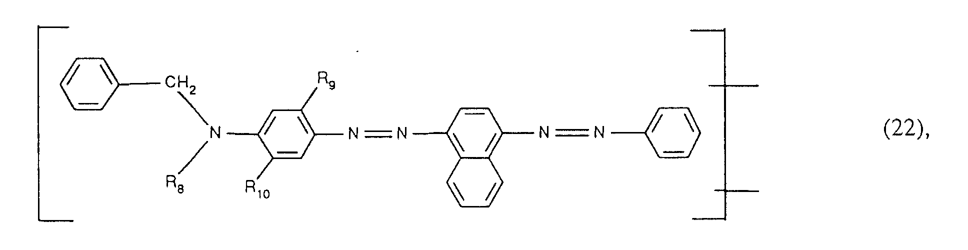 worin R₈ Wasserstoff oder C₁-C₄-Alkyl, R₉ und R₁₀ Wasserstoff, C₁-C₄-Alkyl, C₁-C₄-Alkoxy, C₂-C₄-Alkanoylamino oder Halogen sind und R₈ und R₁₀ gegebenenfalls zusammen mit den sie verbindenden Atomen einen Tetrahydropyridinring bilden,
oder 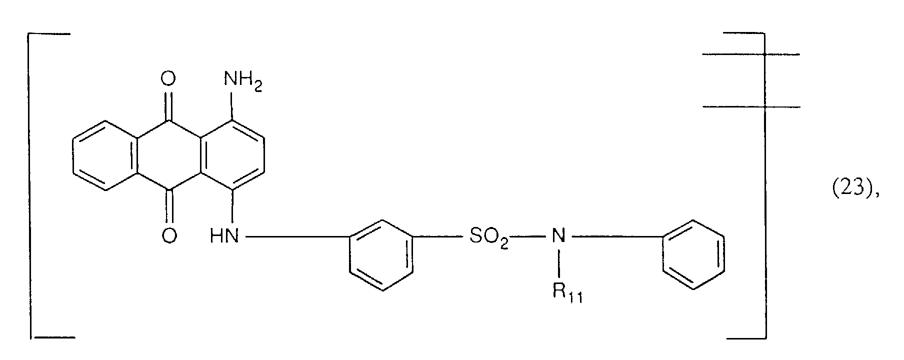 worin R₁₁ Wasserstoff oder C₁-C₄-Alkyl ist,
oder 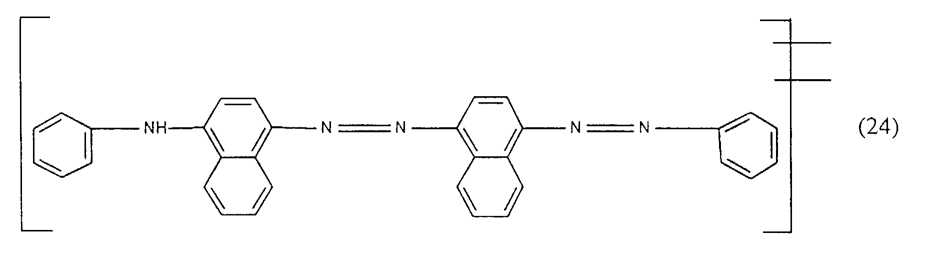 ist, wobei die Reste Fa' der Formeln (18) bis (24) jeweils unabhängig voneinander gegebenenfalls durch C₁-C₄-Alkyl, C₁-C₄-Alkoxy, C₂-C₄-Alkanoylamino oder Halogen substituiert sind,
oder Reaktivfarbstoffe der Formel 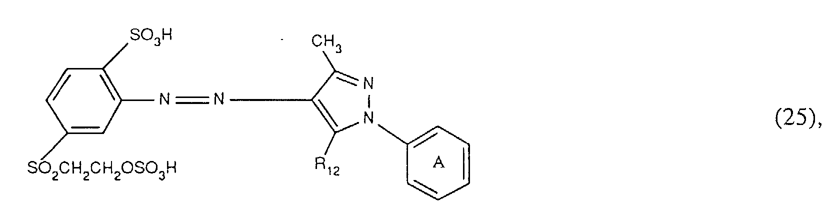 worin R₁₂ Amino oder Hydroxyl ist und der Benzolring A gegebenenfalls durch C₁-C₄-Alkyl, C₁-C₄-Alkoxy, C₂-C₄-Alkanoylamino oder Halogen substituiert ist.

Als C₁-C₄-Alkyl gelten für R₁, R₂, R₃, R₄, R₅, R₆, R₇, R₈, R₉, R₁₀, R₁₁ sowie als weiterer Substituent der Verbindungen der Formeln (18) bis (25) und als C₁-C₄-Alkoxy, C₂-C₄-Alkanoylamino und Halogen für R₅, R₆, R₉, R₁₀ sowie als weiterer Substituent der Verbindungen der Formeln (18) bis (25) die unter den Formeln (2) bis (8) angegebenen Bedeutungen und Bevorzugungen.

Als Phenyl kommt für R₂ ein unsubstituierter oder ein durch C₁-C₄-Alkyl, wie Methyl, Äthyl, Propyl, Isopropyl, Butyl, Isobutyl, sek.-Butyl oder tert.-Butyl, C₁-C₄-Alkoxy, wie Äthoxy, Propoxy, Isopropoxy, Butoxy, Isobutoxy, sek.-Butoxy oder tert.-Butoxy, C₂-C₄-Alkanoylamino, wie Acetylamino oder Propionylamino, oder Halogen, wie Fluor, Chlor oder Brom, substituierter Phenylrest in Betracht.

Bevorzugt sind als Reaktivfarbstoffe der Formel (17)
a) Farbstoffe der Formel (9), worin R₁ C₁-C₄-Alkyl, Amino oder Hydroxyl, insbesondere C₁-C₄-Alkyl ist, die Benzolringe A, B und C unabhängig voneinander gegebenenfalls durch C₁-C₄-Alkyl, C₁-C₄-Alkoxy, C₂-C₄-Alkanoylamino oder Halogen substituiert sind und X die direkte Bindung oder ein Rest der Formel -CONHCH₂CH₂- ist, vorzugsweise worin die Sulfogruppe an den Benzolring A gebunden ist und die Benzolringe A, B und C keine weiteren Substituenten enthalten;
b) Farbstoffe der Formel (10), worin R₁ Amino oder Hydroxyl, X ein Rest der Formel -CONHCH₂CH₂- ist und die Benzolringe A und B unabhängig voneinander gegebenenfalls durch C₁-C₄-Alkyl, C₁-C₄-Alkoxy, C₂-C₄-Alkanoylamino oder Halogen substituiert sind, vorzugsweise worin die Benzolringe A und B unabhängig voneinander gegebenenfalls durch Halogen substituiert sind;
c) Farbstoffe der Formel (11), worin R₂ C₁-C₄-Alkyl oder Phenyl, R₃ Wasserstoff oder C₁-C₄-Alkyl und X die direkte Bindung oder ein Rest der Formel -CONHCH₂CH₂- ist;
d) Farbstoffe der Formel (12), worin R₄ Wasserstoff oder C₁-C₄-Alkyl, R₅ Wasserstoff, C₁-C₄-Alkyl, C₁-C₄-Alkoxy oder C₂-C₄-Alkanoylamino, R₆ Wasserstoff, C₁-C₄-Alkyl, C₁-C₄-Alkoxy oder Halogen ist, X die direkte Bindung oder ein Rest der Formel -CONHCH₂CH₂- ist, der Benzolring C gegebenenfalls durch C₁-C₄-Alkyl, C₁-C₄-Alkoxy oder Halogen substituiert ist und die Sulfogruppe an den Benzolring A, B oder C gebunden ist, vorzugsweise worin R₆ Wasserstoff, X der Rest der Formel -CONHCH₂CH₂- ist, die Sulfogruppe an den Benzolring A gebunden ist und die Benzolringe A, B und C keine weiteren Substituenten enthalten;
e) Farbstoffe der Formel (13), worin R₇ Wasserstoff oder C₁-C₄-Alkyl, X die direkte Bindung oder ein Rest der Formel -CONHCH₂CH₂- ist und die Benzolringe A und B unabhängig voneinander gegebenenfalls durch C₁-C₄-Alkyl, C₁-C₄-Alkoxy oder Halogen substituiert sind, vorzugsweise worin die Benzolringe A und B keine weiteren Substituenten enthalten;
f) Farbstoffe der Formel (14), worin R₈ Wasserstoff oder C₁-C₄-Alkyl, R₉ Wasserstoff, C₁-C₄-Alkyl, C₁-C₄-Alkoxy oder C₂-C₄-Alkanoylamino, R₁₀ Wasserstoff, C₁-C₄-Alkyl, C₁-C₄-Alkoxy oder Halogen sind, X die direkte Bindung oder ein Rest der Formel -CONHCH₂CH₂- ist und die Benzolringe A, B und C unabhängig voneinander gegebenenfalls durch C₁-C₄-Alkyl, C₁-C₄-Alkoxy oder Halogen substituiert sind und die Sulfogruppe an den Benzolring A, B oder C gebunden ist, vorzugsweise worin R₁₀ Wasserstoff ist, die Sulfogruppe an den Benzolring A oder C gebunden ist und die Benzolringe A und C keine weiteren Substituenten enthalten;
g) Farbstoffe der Formel 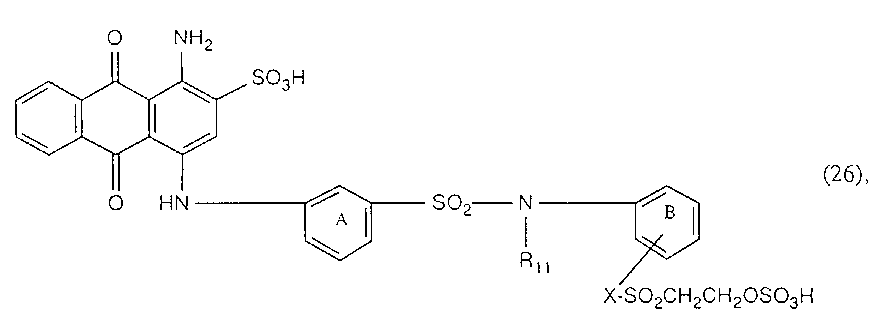 worin R₁₁ Wasserstoff oder C₁-C₄-Alkyl, X die direkte Bindung oder ein Rest der Formel -CONHCH₂CH₂- ist und die Benzolringe A und B unabhängig voneinander gegebenenfalls durch C₁-C₄-Alkyl, C₁-C₄-Alkoxy oder Halogen substituiert sind, vorzugsweise worin die Benzolringe A und B keine weiteren Substituenten enthalten;
h) Farbstoffe der Formel (16), worin X die direkte Bindung oder ein Rest der Formel -CONHCH₂CH₂- ist und die Benzolringe A, B, C und D, insbesondere nur die Benzolringe A und D, unabhängig voneinander gegebenenfalls durch C₁-C₄-Alkyl, C₁-C₄-Alkoxy oder Halogen substituiert sind;
i) Farbstoffe der Formel (25), worin R₁₂ Amino oder Hydroxyl ist und der Benzolring A gegebenenfalls durch Methyl, Methoxy oder Chlor substituiert ist.

Die neuen Reaktivfarbstoffe der Formel (17), worin Fa' der Rest der Formel (18) ist, werden hergestellt, indem man ein Amin der Formel 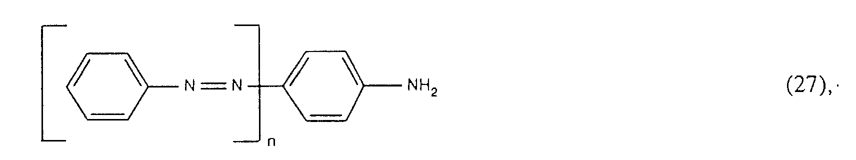 worin n die Zahl 0 der 1 ist, diazotiert und auf eine Kupplungskomponente der Formel 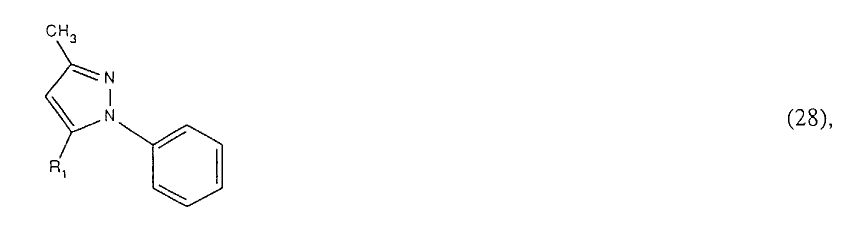 worin R₁ Amino oder Hydroxyl ist, kuppelt,
oder
ein Amin der Formel (27) diazotiert und auf eine Kupplungskomponente der Formel 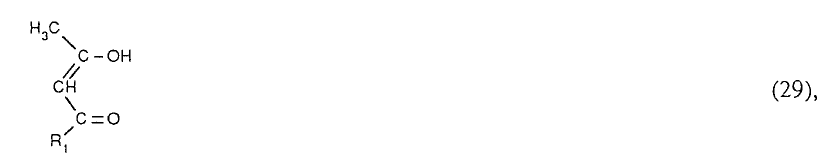 worin R₁ Wasserstoff oder C₁-C₄-Alkyl ist, kuppelt und das Reaktionsprodukt mit einem Hydrazin der Formel 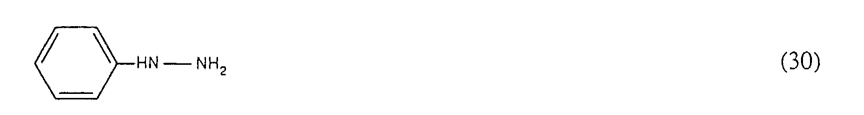 umsetzt, wobei das Amin der Formel (27), die Kupplungskomponenten der Formeln (28) und (29) und das Hydrazin der Formel (30) gegebenenfalls durch C₁-C₄-Alkyl, C₁-C₄-Alkoxy, C₂-C₄-Alkanoylamino, Halogen, Sulfo oder den Rest der Formel -X-SO₂CH₂CH₂OSO₃H, worin X die direkte Bindung oder -CONHCH₂CH₂- bedeutet, substituiert sind, und das Amin der Formel (27) und die Kupplungskomponente der Formel (28) oder das Amin der Formel (27) und die Kupplungskomponente der Formel (29) und das Hydrazin der Formel (30) zusammen nur eine Sulfogruppe und zusammen nur einen Rest der Formel -X-SO₂CH₂CH₂OSO₃H enthalten, wobei X den Rest der Formel -CONHCH₂CH₂- bedeutet wenn n die Zahl 0 ist.

Die neuen Reaktivfarbstoffe der Formel (17), worin Fa' der Rest der Formel (19) oder (21) ist, werden hergestellt, indem man ein Amin der Formel 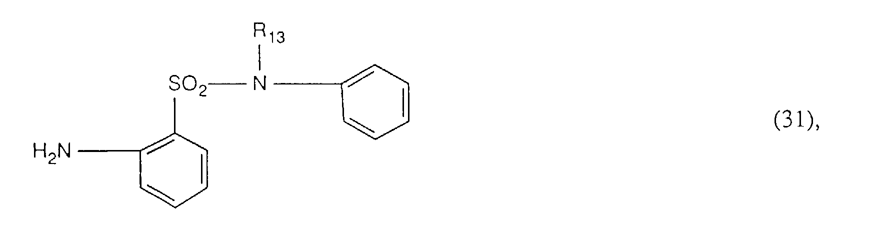 worin R₁₃ Wasserstoff oder C₁-C₄-Alkyl ist, diazotiert und auf eine Kupplungskomponente der Formel 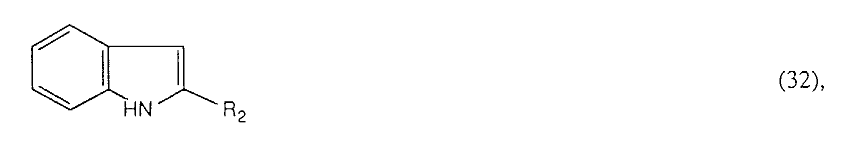 worin R₂ Wasserstoff, C₁-C₄-Alkyl oder gegebenenfalls durch C₁-C₄-Alkyl, C₁-C₄-Alkoxy, C₂-C₄-Alkanoylamino oder Halogen substituiertes Phenyl ist,
oder auf eine Kupplungskomponente der Formel 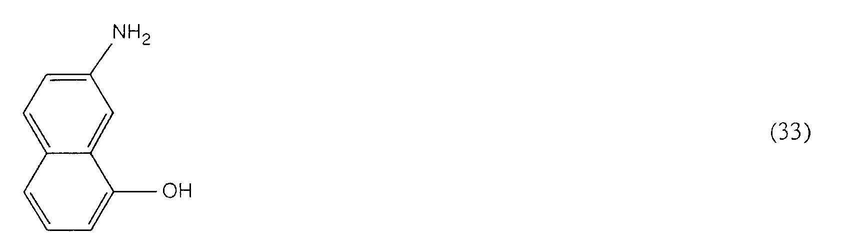 kuppelt, wobei das Amin der Formel (31) und die Kupplungskomponenten der Formeln (32) und (33) gegebenenfalls durch C₁-C₄-Alkyl, C₁-C₄-Alkoxy, C₂-C₄-Alkanoylamino, Halogen, Sulfo oder den Rest der Formel -X-SO₂CH₂CH₂OSO₃H, worin X die direkte Bindung oder -CONHCH₂CH₂- bedeutet, substituiert sind, und das Amin der Formel (31) und die Kupplungskomponente der Formel (32) oder das Amin der Formel (31) und die Kupplungskomponente der Formel (33) zusammen nur eine Sulfogruppe und zusammen nur einen Rest der Formel -X-SO₂CH₂CH₂OSO₃H enthalten.

Die neuen Reaktivfarbstoffe der Formel (17), worin Fa' der Rest der Formel (20) ist, werden hergestellt, indem man ein Amin der Formel 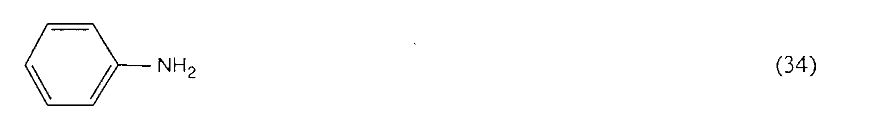 diazotiert und auf eine Kupplungskomponente der Formel 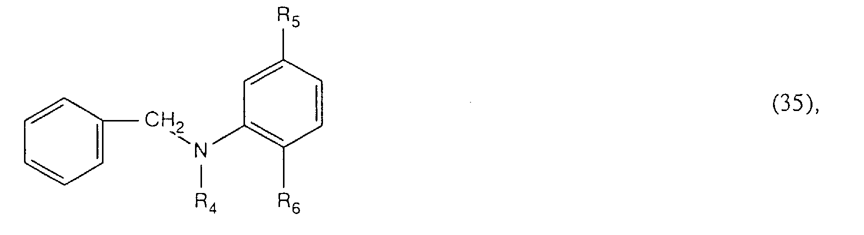 worin R₄ Wasserstoff oder C₁-C₄-Alkyl, R₅ und R₆ Wasserstoff, C₁-C₄-Alkyl, C₁-C₄-Alkoxy, C₂-C₄-Alkanoylamino oder Halogen sind und R₄ und R₆ gegebenenfalls zusammen mit den sie verbindenden Atomen einen Tetrahydropyridinring bilden, kuppelt, wobei das Amin der Formel (34) und die Kupplungskomponente der Formel (35) gegebenenfalls durch C₁-C₄-Alkyl, C₁-C₄-Alkoxy, C₂-C₄-Alkanoylamino, Halogen, Sulfo oder den Rest der Formel -X-SO₂CH₂CH₂OSO₃H, worin X die direkte Bindung oder -CONHCH₂CH₂- bedeutet, substituiert sind, und das Amin der Formel (34) und die Kupplungskomponente der Formel (35) zusammen nur eine Sulfogruppe und zusammen nur einen Rest der Formel -X-SO₂CH₂CH₂OSO₃H enthalten.

Die neuen Reaktivfarbstoffe der Formel (17), worin Fa' der Rest der Formel (22) oder (24) ist, werden hergestellt, indem man ein Amin der Formel 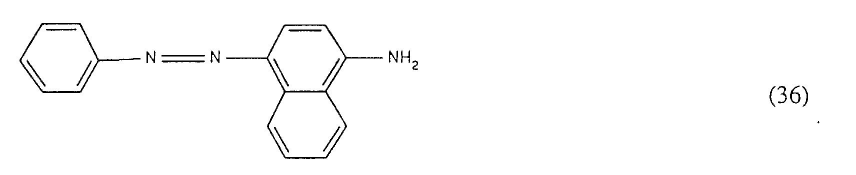 diazotiert und auf eine Kupplungskomponente der Formel 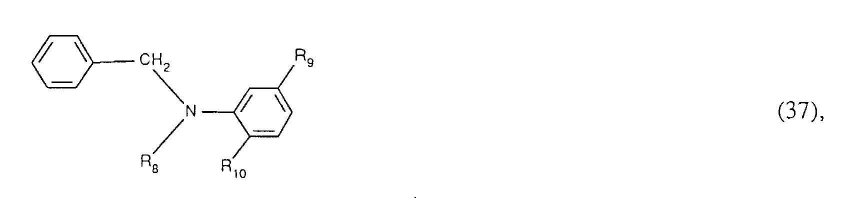 worin R₈ Wasserstoff oder C₁-C₄-Alkyl, R₉ und R₁₀ Wasserstoff, C₁-C₄-Alkyl, C₁-C₄-Alkoxy, C₂-C₄-Alkanoylamino oder Halogen sind und R₈ und R₁₀ gegebenenfalls zusammen mit den sie verbindenden Atomen einen Tetrahydropyridinring bilden,
oder auf eine Kupplungskomponente der Formel 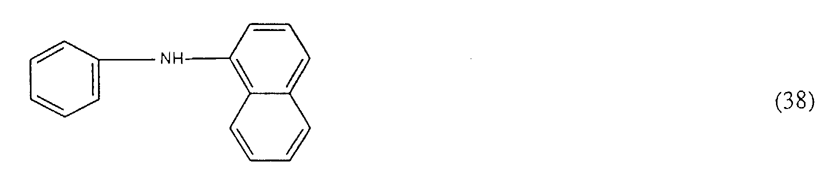 kuppelt, wobei das Amin der Formel (36) und die Kupplungskomponenten der Formeln (37) und (38) gegebenenfalls durch C₁-C₄-Alkyl, C₁-C₄-Alkoxy, C₂-C₄-Alkanoylamino, Halogen, Sulfo oder den Rest der Formel -X-SO₂CH₂CH₂OSO₃H, worin X die direkte Bindung oder -CONHCH₂CH₂- bedeutet, substituiert sind, und das Amin der Formel (36) und die Kupplungskomponente der Formel (37) oder das Amin der Formel (36) und die Kupplungskomponente der Formel (38) zusammen nur eine Sulfogruppe und zusammen nur einen Rest der Formel -X-SO₂CH₂CH₂OSO₃H enthalten.

Die neuen Reaktivfarbstoffe der Formel (17), worin Fa' der Rest der Formel (23) ist, werden hergestellt, indem man eine Verbindung der Formel 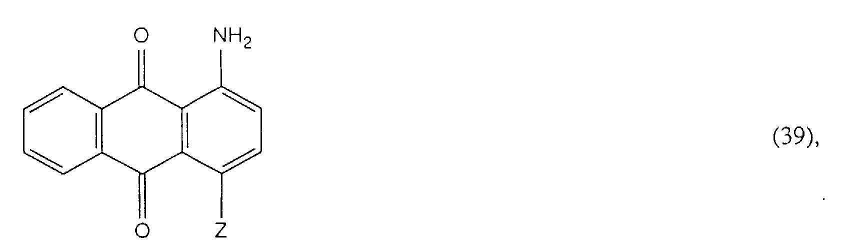 worin Z eine anionische Abgangsgruppe ist, mit einer Verbindung der Formel 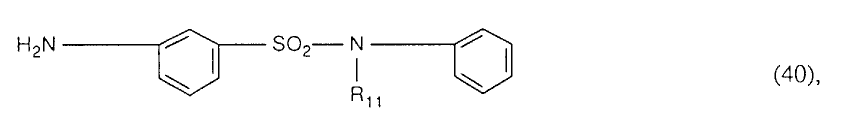 worin R₁₁ Wasserstoff oder C₁-C₄-Alkyl ist, umsetzt, wobei die Verbindungen der Formeln (39) und (40) gegebenenfalls durch C₁-C₄-Alkyl, C₁-C₄-Alkoxy, C₂-C₄-Alkanoylamino, Halogen, Sulfo oder den Rest der Formel -X-SO₂CH₂CH₂OSO₃H, worin X die direkte Bindung oder -CONHCH₂CH₂- bedeutet, substituiert sind, und die Verbindungen der Formeln (39) und (40) zusammen nur eine Sulfogruppe und zusammen nur einen Rest der Formel -X-SO₂CH₂CH₂OSO₃H enthalten.

Die neuen Reaktivfarbstoffe der Formel (17), worin Fa' der Rest der Formel (25) ist, werden hergestellt, indem man ein Amin der Formel 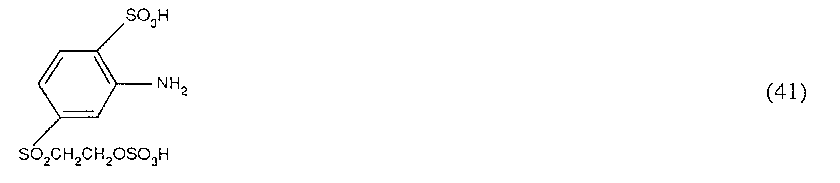 diazotiert und auf eine Kupplungskomponente der Formel 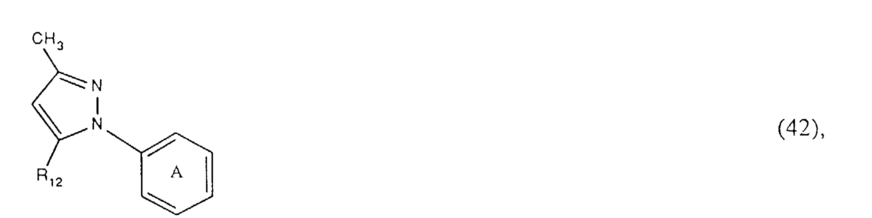 worin R₁₂ Amino oder Hydroxyl ist und der Phenylring A gegebenenfalls durch C₁-C₄-Alkyl, C₁-C₄-Alkoxy, C₂-C₄-Alkanoylamino oder Halogen substituiert ist, kuppelt.

Für die Substituenten der zur Herstellung der Reaktivfarbstoffe der Formel (17) eingesetzten Verbindungen der Formeln (27) bis (42) gelten auch die für die Reaktivfarbstoffe der Formel (17) angegebenen Bevorzugungen.

Als anionische Abgangsgruppe Z in der Verbindung der Formel (39) kommt z.B. Halogen, insbesondere Brom, in Betracht.

Die Amine der Formeln (27), (31), (34), (36) und (41), die Kupplungskomponenten der Formeln (28), (29), (32), (33), (35), (37), (38) und (42) und die Verbindungen der Formeln (30), (39) und (40) sind an sich bekannt oder können in Analogie zu bekannten Verbindungen hergestellt werden.

Die Diazotierung der Amine der Formeln (27), (31), (34), (36) und (41) erfolgt in der Regel durch Einwirken salpetriger Säure in wässrig-mineralsaurer Lösung bei tiefer Temperatur, die Kupplung auf die Kupplungskomponenten der Formeln (28), (29), (32), (33), (35), (37), (38) und (42) bei sauren, neutralen bis schwach alkalischen pH-Werten.

Die Umsetzung der Verbindung der Formel (39) mit der Verbindung der Formel (40) erfolgt z.B. in wässriger Lösung oder einem Gemisch von Wasser und einem organischen Lösungsmittel, wie z.B. Wasser/Äthanol, unter Zusatz säurebindender Mittel, wie z.B. Alkalihydroxide, -carbonate oder -bicarbonate, bei Temperaturen von z.B. 50 bis 100°C, vorzugsweise in Gegenwart eines Gemisches von Kupferchlorid und Kupfer.

Die Umsetzung mit einem Hydrazin der Formel (30) erfolgt in Wasser, einem organischen Lösungsmittel, wie z.B. Methanol, Aethanol, Pyridin oder Eisessig oder einer Mischung von Wasser und einem organischen Lösungsmittel, wie z.B. Wasser/Eisessig, bei einer Temperatur von z.B. 40 bis 100°C.

Weiterhin können Disazofarbstoffe der Formel (17), worin Fa' der Rest der Formel (22) ist, durch Diazotierung von Anilin, Kupplung auf 1-Aminonaphthalin, Diazotierung des erhaltenen Reaktionsproduktes und Kupplung auf eine Kupplungskomponente der Formel (37) erhalten werden, wobei das Anilin, 1-Aminonaphthalin und die Kupplungskomponente der Formel (37) gegebenenfalls durch C₁-C₄-Alkyl, C₁-C₄-Alkoxy, C₂-C₄-Alkanoylamino, Halogen, Sulfo oder den Rest der Formel -X-SO₂CH₂CH₂OSO₃H, worin X die direkte Bindung oder ein Rest der Formel -CONHCH₂CH₂- ist, substituiert sind und das Anilin, 1-Aminonaphthalin und die Kupplungskomponente der Formel (37) zusammen nur eine Sulfogruppe und zusammen nur einen Rest der Formel -X-SO₂CH₂CH₂OSO₃H enthalten.

Ferner können Disazofarbstoffe der Formel (17), worin Fa' der Rest der Formel (24) ist, durch Diazotierung von Anilin, Kupplung auf 1-Aminonaphthalin, Diazotierung des erhaltenen Reaktionsproduktes und Kupplung auf 1-Phenylaminonaphthalin erhalten werden, wobei das Anilin, 1-Aminonaphthalin und 1-Phenylaminonaphthalin gegebenenfalls durch C₁-C₄-Alkyl, C₁-C₄-Alkoxy, C₂-C₄-Alkanoylamino, Halogen, Sulfo oder den Rest der Formel -X-SO₂CH₂CH₂OSO₃H, worin X die direkte Bindung oder ein Rest der Formel -CONHCH₂CH₂- ist, substituiert sind und das Anilin, 1-Aminonaphthalin und 1-Phenylaminonaphthalin zusammen nur eine Sulfogruppe und zusammen nur einen Rest der Formel -X-SO₂CH₂CH₂OSO₃H enthalten.

Eine abgewandelte Ausführungsform des Verfahrens zur Herstellung der Reaktivfarbstoffe der Formel (17) besteht darin, von einer Vorstufe des Farbstoffes, wie z.B. einer Diazo- oder Kupplungskomponente, auszugehen, welche einen Rest der Formel -X-SO₂CH₂CH₂OH, worin X die direkte Bindung oder -CONHCH₂CH₂- ist, enthält. Nach Herstellung des Farbstoffes oder einer Vorstufe des Farbstoffes wird dann der Rest der Formel -X-SO₂CH₂CH₂OH mit konzentrierter Schwefelsäure oder Oleum umgesetzt, so dass die Hydroxygruppe in die Sulfatogruppe überführt wird.

Die erfindungsgemässen Farbstoffe der Formel (17) sowie die in dem erfindungsgemässen Verfahren zum Färben verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Farbstoffe der Formel (17) eignen sich für die üblichen Färbe-bzw. Druckverfahren. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten. Insbesondere eignen sich die erfindungsgemässen Farbstoffe der Formel (17) für das Verfahren der vorliegenden Erfindung zum Färben von synthetischen Polyamidfasermaterialien.

Die erfindungsgemässen Farbstoffe der Formel (17) zeichnen sich durch gleichmässigen Farbaufbau, gutes Aufzieh und Fixiervermögen sowie gute Allgemeinechtheiten, wie Reib-, Nass-, Nassreib- und Lichtechtheit, aus.

Die erfindungsgemässen Farbstoffe der Formel (17) eignen sich zum Färben oder Bedrucken sowohl von natürlichen Polyamidfasermaterialien wie z.B. Wolle, wie insbesondere von synthetischen Polyamidfasermaterialien, wie z.B. Polyamid 6 oder Polyamid 6.6, und sind auch geeignet zum Färben oder Bedrucken von Mischgeweben oder -Garnen auf der Basis von Wolle oder synthetischen Polyamidfasermaterialien.

Das genannte Fasermaterial kann dabei in den verschiedensten, in der Regel textilen Verarbeitungsformen vorliegen, wie z.B. als Faser, Garn, Gewebe, Gewirke oder in Form von Teppichen.

In den folgenden Beispielen stehen Teile für Gewichtsteile. Die Temperaturen sind in Celsiusgraden angegeben. Die Beziehung zwischen Gewichtsteilen und Volumenteilen ist dieselbe wie diejenige zwischen Gramm und Kubikzentimeter.

Beispiel 1: 35 Teile 3-Amino-2'-(2-sulfatoäthylsulfonyl)-äthyl-benzamid werden in 200 Teilen Wasser mit 25 Teilen Salzsäure (32%) gelöst und bei einer Temperatur von 0 bis 5° mit 25 Teilen einer 4-normalen Natriumnitritlösung diazotiert. Nach vollständiger Diazotierung wird die erhaltene Reaktionsmischung bei einer Temperatur von 0 bis 5° langsam in eine Lösung von 26 Teilen 1-(4'-Sulfophenyl)-3-methyl-5-pyrazolon in 200 Teilen Wasser zugetropft, wobei der pH durch Zugabe einer wässrigen Natriumcarbonatlösung (20%) bei einem Wert von 5 bis 6 gehalten wird. Nach erfolgter Kupplung wird das Reaktionsgemisch mit Natriumcarbonat neutralisiert und das Reaktionsprodukt durch Zugabe von Natriumchlorid ausgesalzen. Nach Filtration und Trocknung erhält man den in Form der freien Säure der Formel 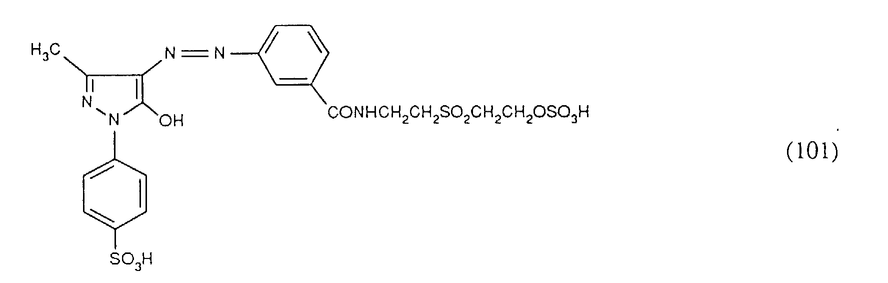 entsprechenden Farbstoff. Der Farbstoff der Formel (101) färbt natürliches und synthetisches Polyamidfasermaterial in gelben Farbtönen.

Beispiele 2 bis 8: Verfährt man wie in Beispiel 1 angegeben, verwendet jedoch statt 26 Teile 1-(4'-Sulfophenyl)-3-methyl-5-pyrazolon eine äquimolare Menge einer der in Tabelle 1 in Spalte 2 angegebenen Kupplungskomponenten und statt 35 Teile 3-Amino-2'-(2-sulfatoäthylsulfonyl)-äthyl-benzamid eine äquimolare Menge eines der in Tabelle 1 in Spalte 3 angegebenen Amine, so erhält man analoge Farbstoffe, die natürliches und synthetisches Polyamidfasermaterial in gelben Farbtönen färben.

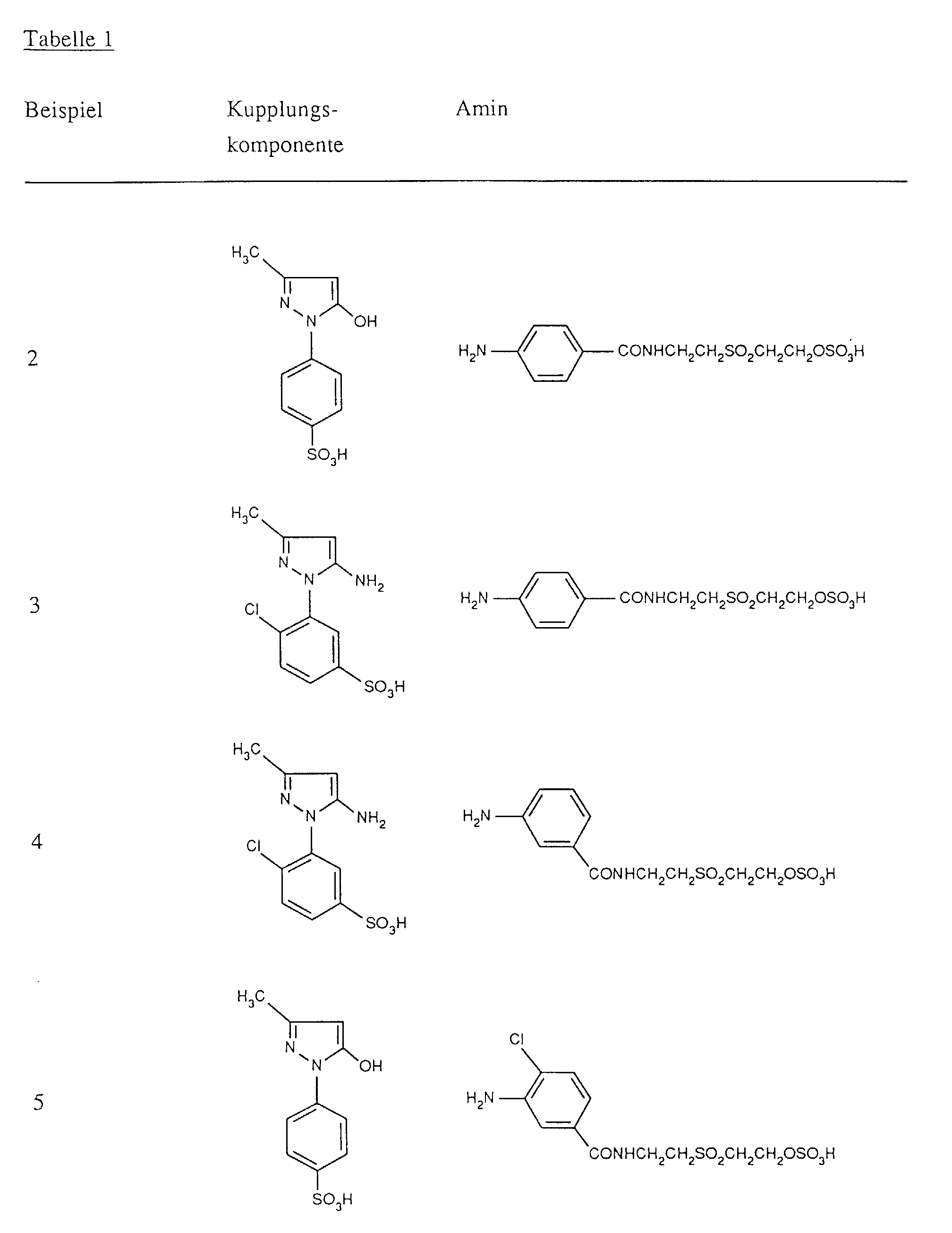

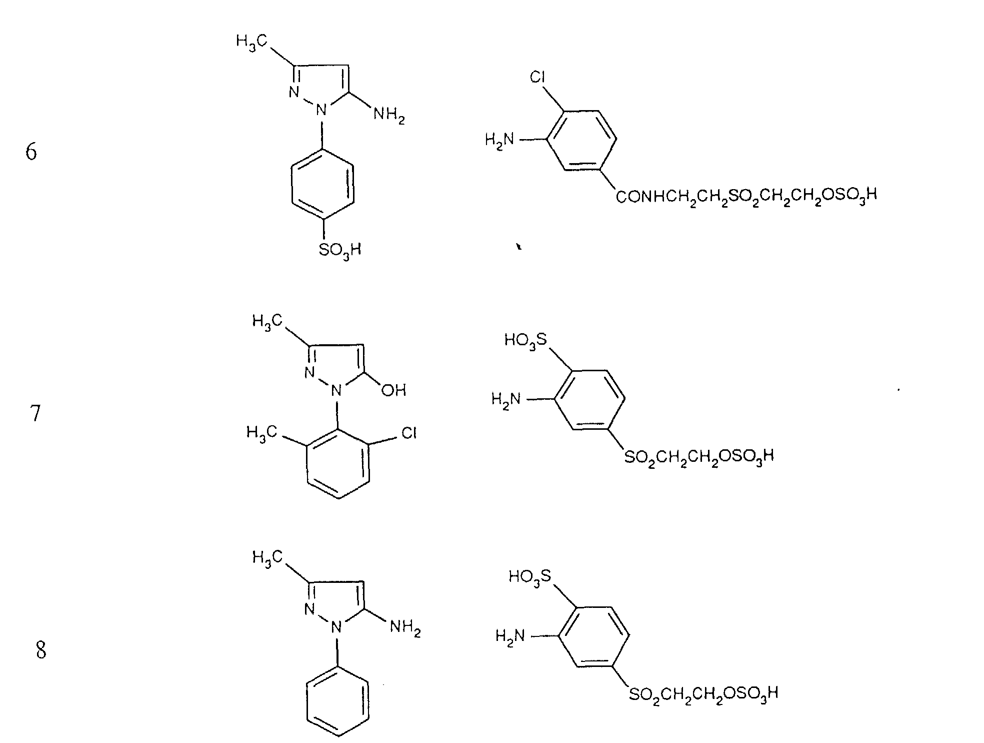

Beispiele 9 bis 17: Verfährt man wie in Beispiel 1 angegeben, verwendet jedoch statt 26 Teile 1-(4'-Sulfophenyl)-3-methyl-5-pyrazolon eine äquimolare Menge einer der in Tabelle 2 in Spalte 2 angegebenen Kupplungskomponenten und statt 35 Teile 3-Amino-2'-(2-sulfatoäthylsulfonyl)-äthyl-benzamid eine äquimolare Menge eines der in Tabelle 2 in Spalte 3 angegebenen Amine, so erhält man analoge Farbstoffe, die natürliches und synthetisches Polyamidfasermaterial in orangen Farbtönen färben.

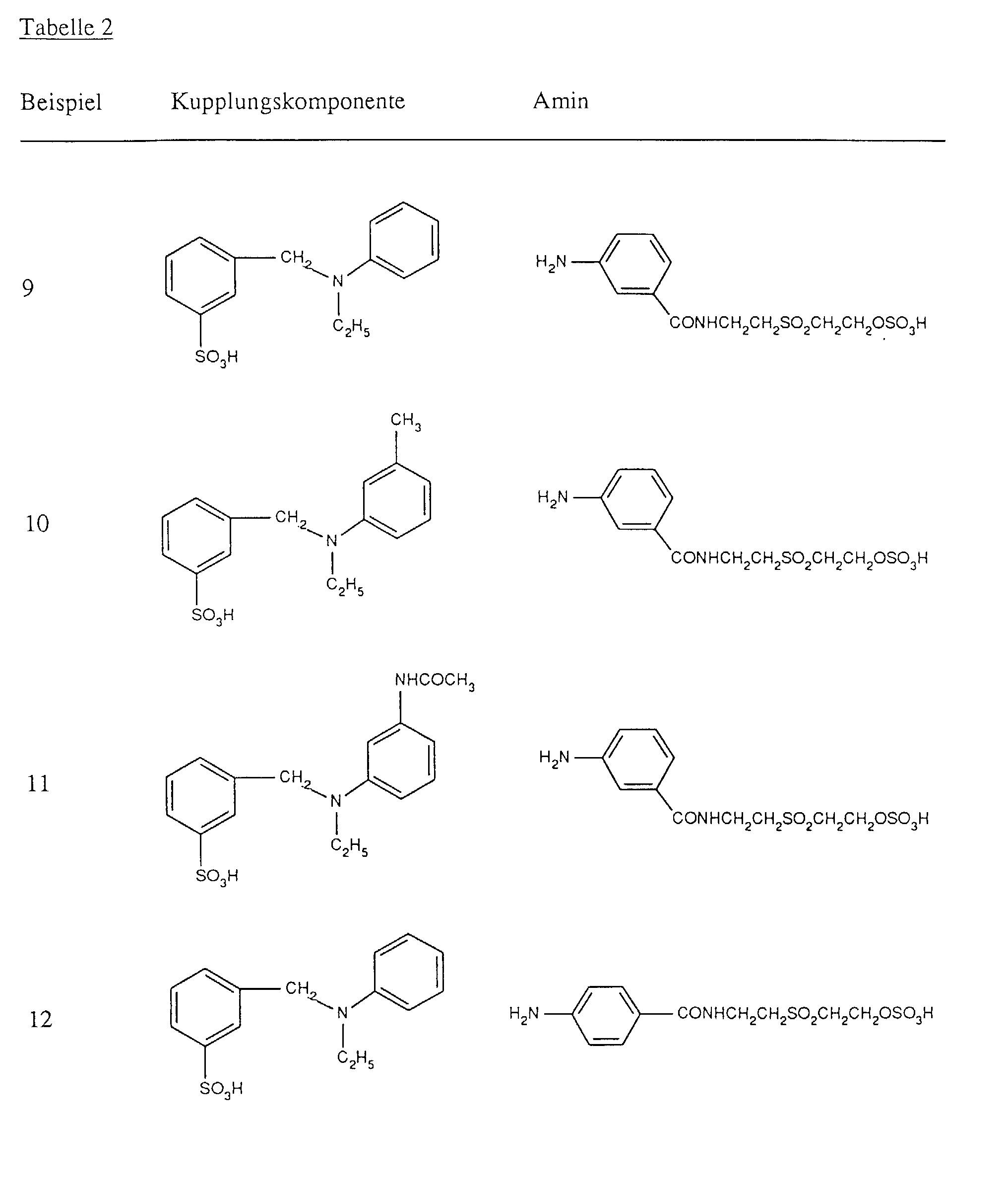

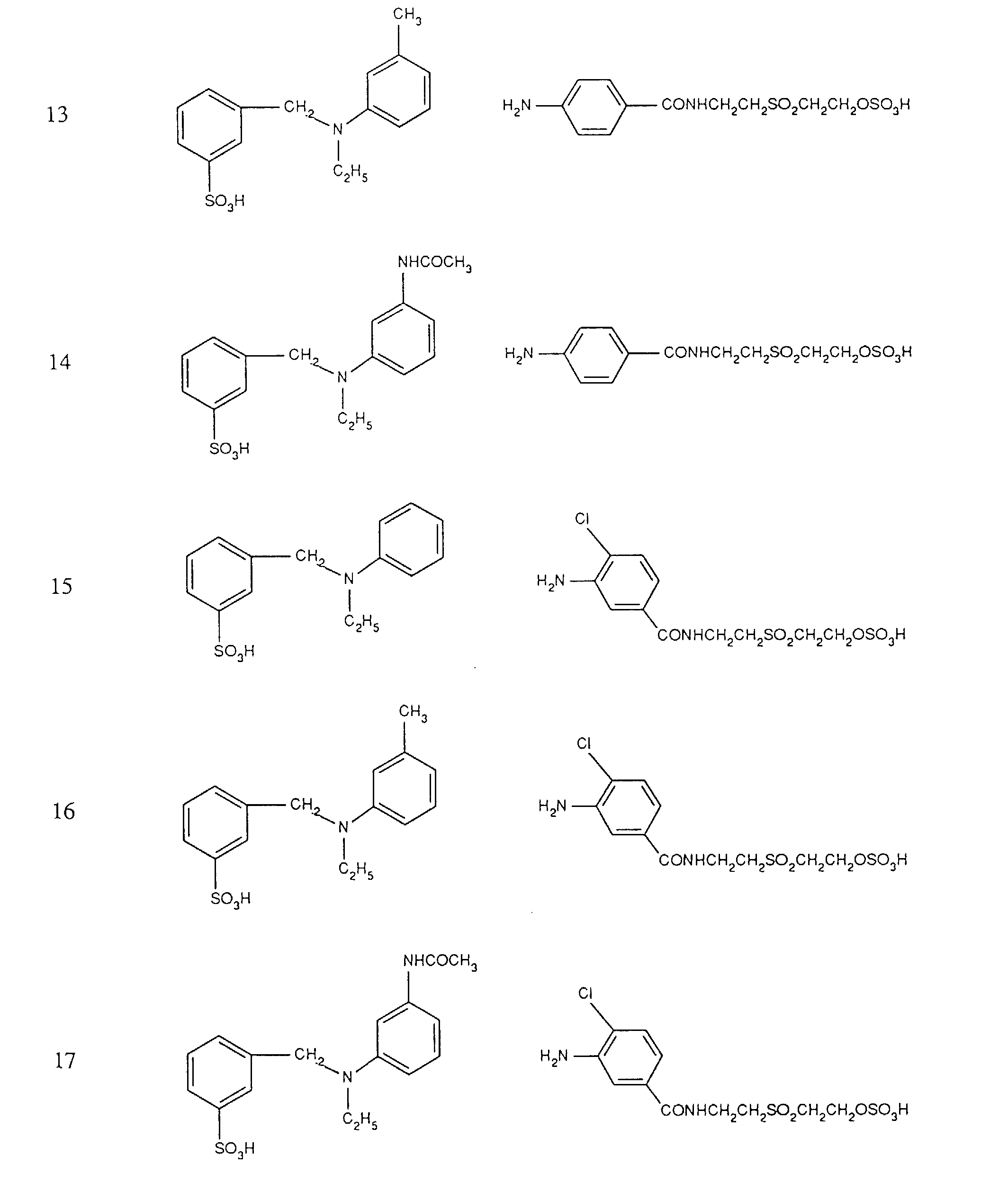

Beispiel 18: 32 Teile 3-Amino-2'-(2-sulfatoäthylsulfonyl)-äthyl-benzamid werden in 200 Teilen Wasser mit 25 Teilen Salzsäure (32%) gelöst und bei einer Temperatur von 0 bis 5° mit 25 Teilen einer 4-normalen Natriumnitritlösung diazotiert. Nach vollständiger Diazotierung wird die erhaltene Reaktionsmischung bei einer Temperatur von 0 bis 5° langsam in eine Lösung von 14,3 Teilen 1-Aminonaphthalin und 12 Teilen Salzsäure (32%) in 200 Teilen Wasser zugetropft. Nach dreistündigem Rühren tropft man innerhalb von zwei Stunden 10 Teile einer wässrigen Natriumcarbonatlösung (20%) in die Reaktionsmischung. Nach beendeter Kupplung gibt man 300 Teile Eis und 30 Teile Salzsäure (32%) hinzu und diazotiert durch Zugabe von 25 Teilen einer 4-normalen Natriumnitritlösung. Nach vollständiger Diazotierung versetzt man mit 30 Teilen N-Äthyl-N-Benzyl-anilin-3'-sulfonsäure, wobei der pH durch Zugabe von 40 Teilen Natriumacetat bei einem Wert von ca. 4 gehalten wird. Nach erfolgter Kupplung wird das Reaktionsgemisch mit Natriumcarbonat neutralisiert und das Reaktionsprodukt durch Zugabe von Natriumchlorid ausgesalzen. Nach Filtration und Trocknung erhält man den in Form der freien Säure der Formel 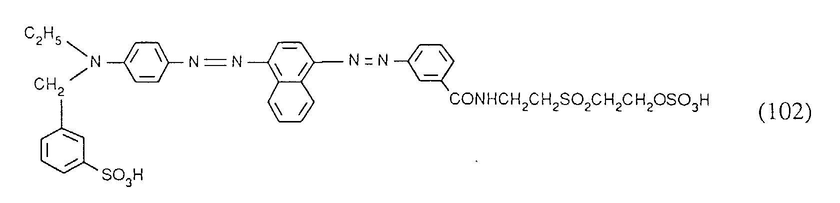 entsprechenden Farbstoff. Der Farbstoff der Formel (102) färbt natürliches und synthetisches Polyamidfasermaterial in rubinroten Farbtönen.

Beispiele 19 bis 29: Verfährt man wie in Beispiel 18 angegeben, verwendet jedoch gegebenenfalls statt 32 Teile 3-Amino-2'-(2-sulfatoäthylsulfonyl)-äthyl-benzamid eine äquimolare Menge 4-Amino-2'-(2-sulfatoäthylsulfonyl)-äthyl-benzamid oder 3- oder 4-(2-Sulfatoäthylsulfonyl)-anilin und gegebenenfalls statt 30 Teile N-Äthyl-N-Benzyl-anilin-3'-sulfonsäure eine äquimolare Menge N-Äthyl-N-Benzyl-3-methyl-anilin-3'-sulfonsäure oder N-Äthyl-N-Benzyl-3-acetylamino-anilin-3'-sulfonsäure, so erhält man die in Tabelle 3 in Form der freien Säure angegebenen Farbstoffe, die natürliches und synthetisches Polyamidfasermaterial in rubinroten Farbtönen färben.

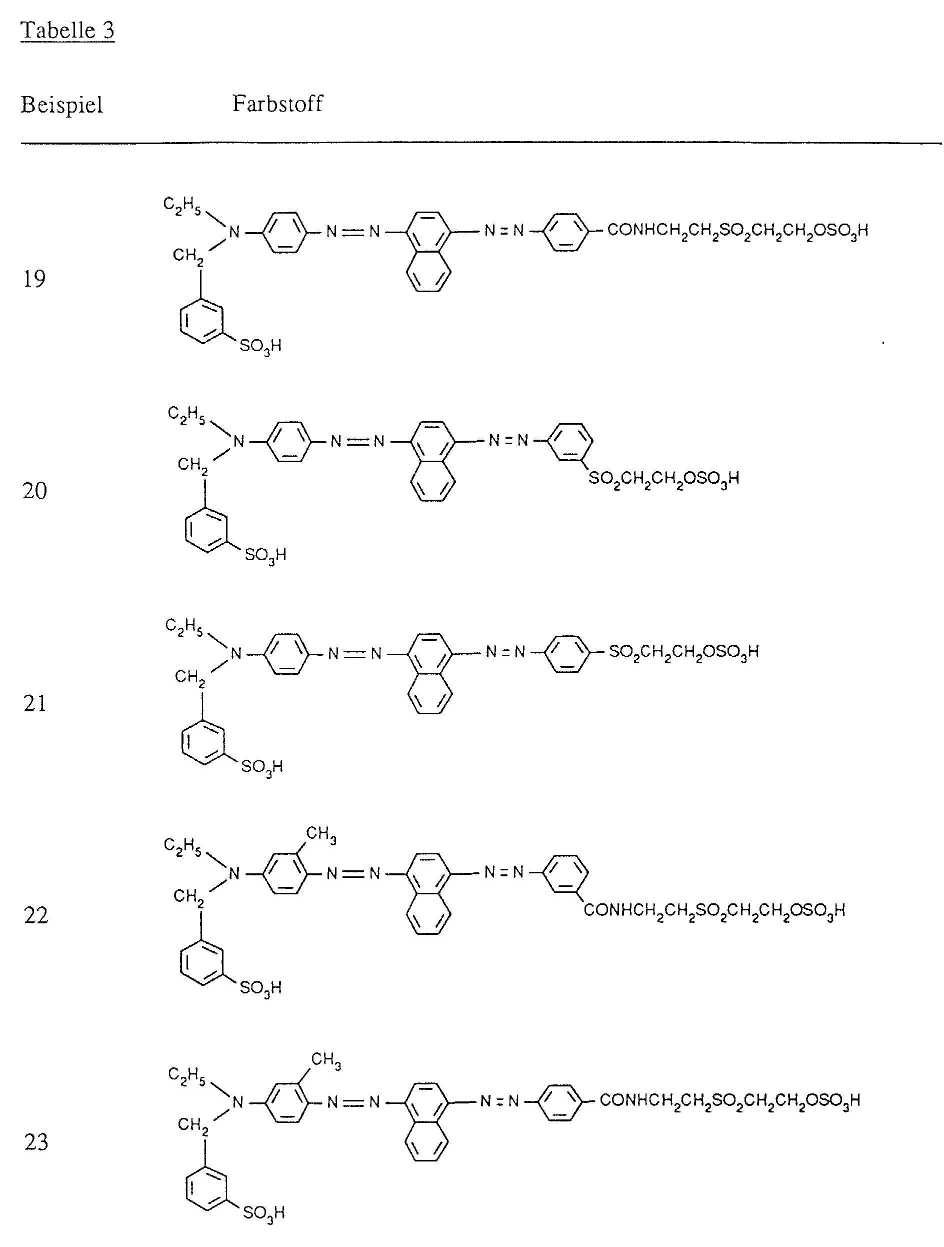

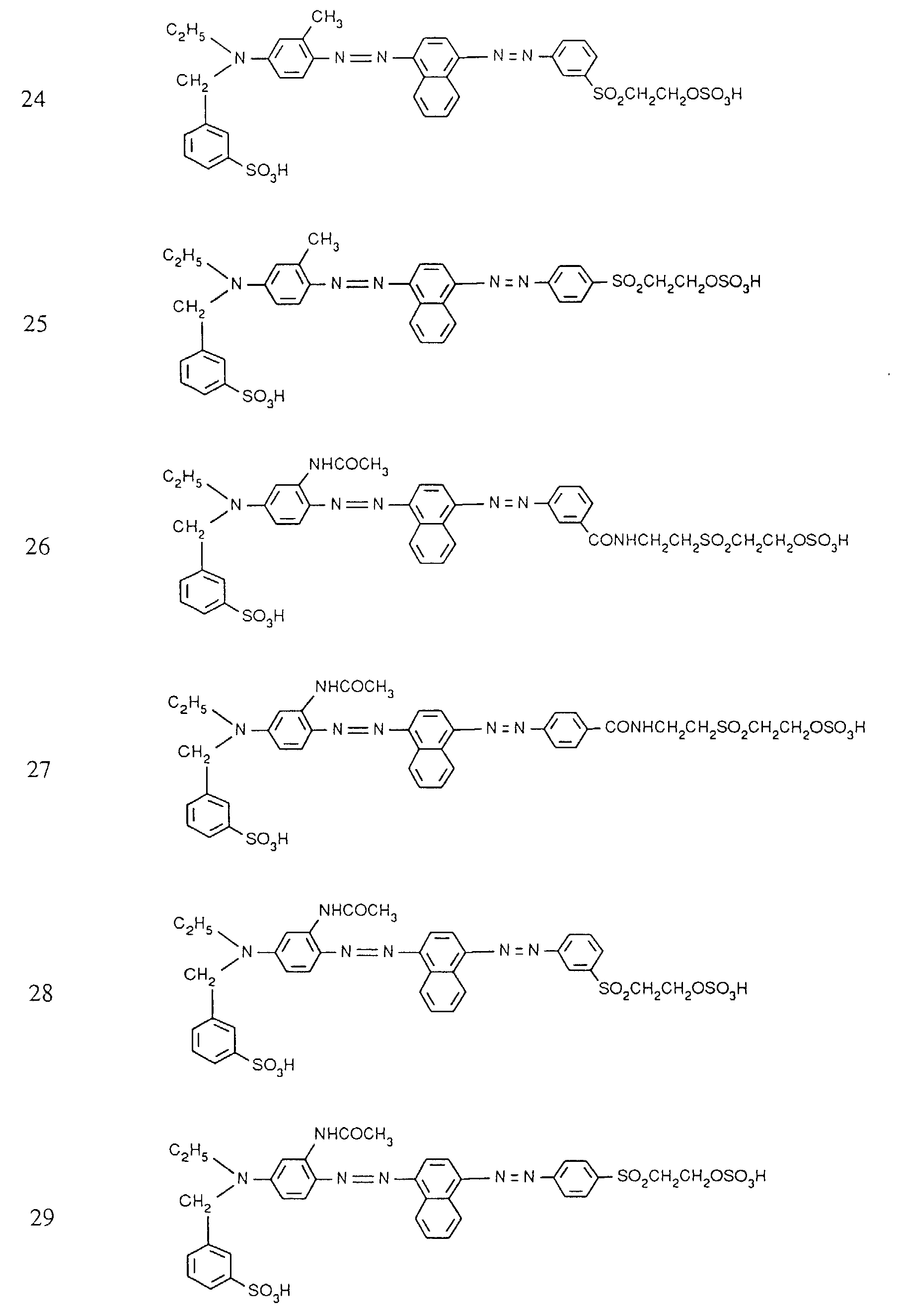

Beispiele 30 bis 32: Verfährt man wie in Beispiel 18 angegeben, verwendet jedoch statt 32 Teile 3-Amino-2'-(2-sulfatoäthylsulfonyl)-äthyl-benzamid eine äquimolare Menge 5-(2-Sulfatoäthylsulfonyl)-anilin-2-sulfonsäure und statt 30 Teile N-Äthyl-N-Benzyl-anilin-3'-sulfonsäure eine äquimolare Menge N-Äthyl-N-Benzyl-anilin, N-Äthyl-N-Benzyl-3-methyl-anilin oder N-Äthyl-N-Benzyl-3-acetylamino-anilin, so erhält man die in Tabelle 4 in Form der freien Säure angegebenen Farbstoffe, die natürliches und synthetisches Polyamidfasermaterial in rubinroten Farbtönen färben.

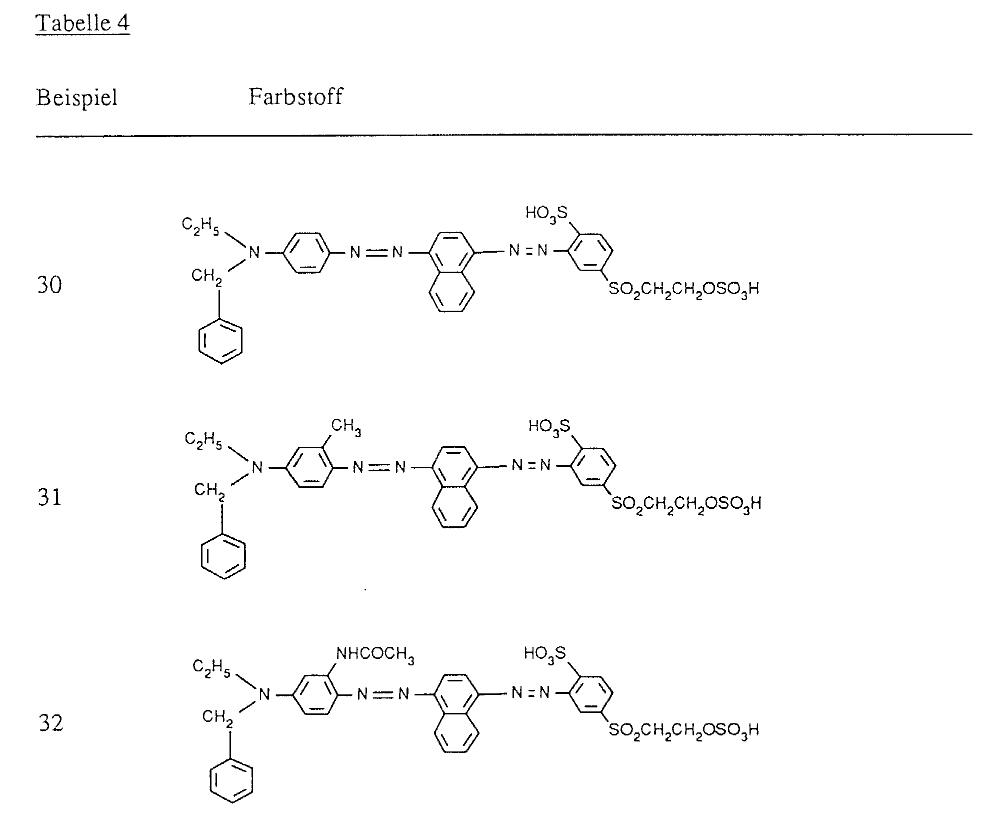

Beispiele 33 bis 36: Verfährt man wie in Beispiel 18 angegeben, verwendet jedoch gegebenenfalls statt 32 Teile 3-Amino-2'-(2-sulfatoäthylsulfonyl)-äthyl-benzamid eine äquimolare Menge 4-Amino-2'-(2-sulfatoäthylsulfonyl)-äthyl-benzamid oder 3- oder 4-(2-Sulfatoäthylsulfonyl)-anilin und statt 30 Teile N-Äthyl-N-Benzyl-anilin-3'-sulfonsäure eine äquimolare Menge 1-Phenylamino-naphthalin-8-sulfonsäure, so erhält man die in Tabelle 5 in Form der freien Säure angegebenen Farbstoffe, die natürliches und synthetisches Polyamidfasermaterial in marineblauen Farbtönen färben.

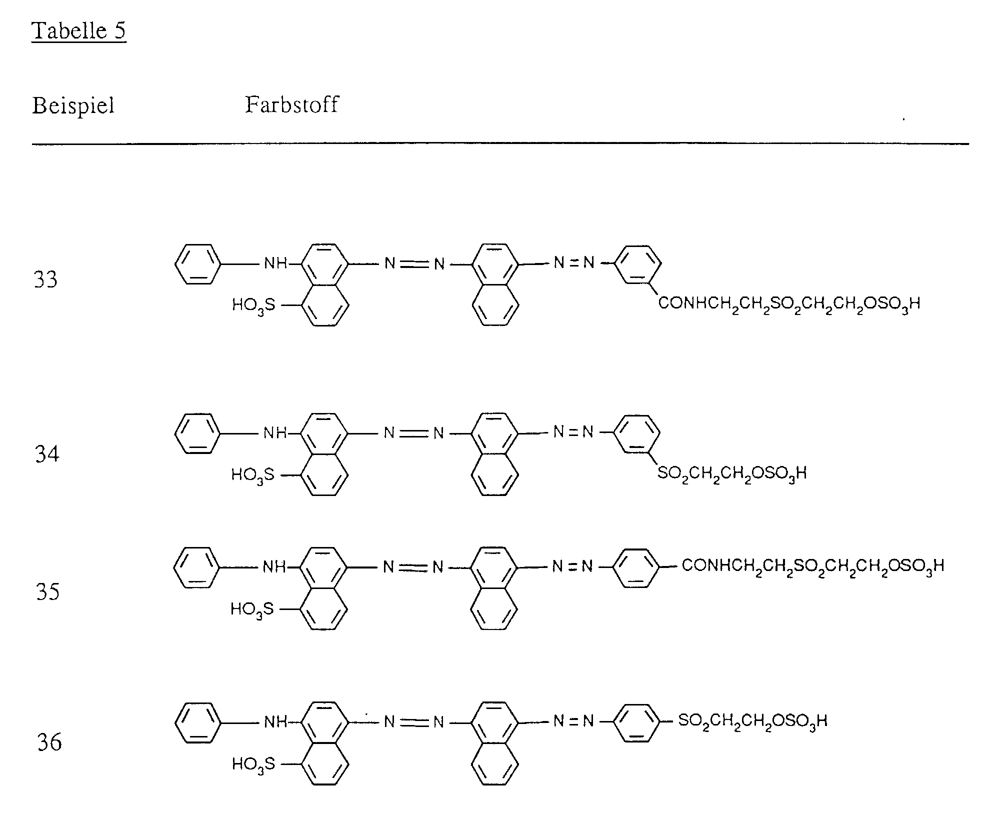

Beispiel 37: 111 Teile o-Nitrobenzolsulfochlorid werden mit 135 Teilen 3-Amino-2'-(2-hydroxyäthylsulfonyl)-äthyl-benzamid in 200 Teilen Toluol bei 25° gerührt und innerhalb von 30 Minuten mit 40 Teilen Natriumcarbonat versetzt. Man heizt auf eine Temperatur von 50 bis 55° auf, rührt 2 Stunden bei dieser Temperatur nach und verdünnt anschliessend mit 300 Teilen Wasser. Die toluolische Phase wird abgetrennt, mit 5 Teilen Raney-Nickel unter Normaldruck katalytisch reduziert, filtriert und eingedampft.

Der Rückstand wird in 300 Teilen Oleum (10%) bei Raumtemperatur sulfatiert. Anschliessend wird die Reaktionsmasse auf ein Eis/Wasser-Gemisch gegossen, das in Form der freien Säure der Verbindung der Formel 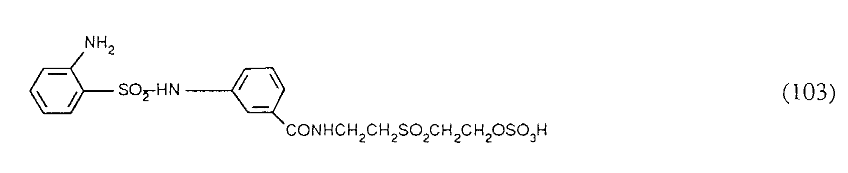 entsprechende Amin abgenutscht.

26,8 Teile des Amins der Formel (103) werden unter Erwärmen in 100 Teilen Äthanol gelöst. Anschliessend werden 30 Teile 10-normaler Salzsäure zugegeben und die Reaktionsmischung auf eine Temperatur von -10° abgekühlt. Dann werden 20 Teile einer wässrigen 5-molaren Natriumnitritlösung zugetropft und die Mischung 2 Stunden bei einer Temperatur von -10 bis 0° gerührt. Die so erhaltene Lösung des Diazoniumsalzes wird mit einem Teil Sulfaminsäure versetzt und 15 Minuten nachgerührt.

Es wird eine zweite, separate Lösung hergestellt, indem 25 Teile 2-Amino-8-hydroxynaphthalin-6-sulfonsäure und 10 Teile Tetrahydronaphthalinsulfonsäure in 200 Teilen Wasser und 12 Teilen 10-normaler wässriger Natriumhydroxidlösung zusammengegeben werden. Zu der so erhaltenen Lösung werden 10 Teile Eisessig zugegeben und die wie oben beschrieben hergestellte Lösung des Diazoniumsalzes wird unter Rühren zugetropft, wobei der pH durch Zugabe von 2-normaler wässriger Natriumhydroxidlösung auf einen Wert von 4 bis 5 gehalten wird. Es wird bis zur vollständigen Bildung des Farbstoffes nachgerührt und dann der pH der Reaktionsmischung mit 2-normaler wässriger Natriumhydroxidlösung auf einen Wert von 9 eingestellt. Die Suspension wird noch 15 Minuten bei einer Temperatur von 40 bis 45° gerührt, der ausgefallene Farbstoff abfiltriert, mit verdünnter Natriumchloridlösung gewaschen und getrocknet. Man erhält den Farbstoff der Formel 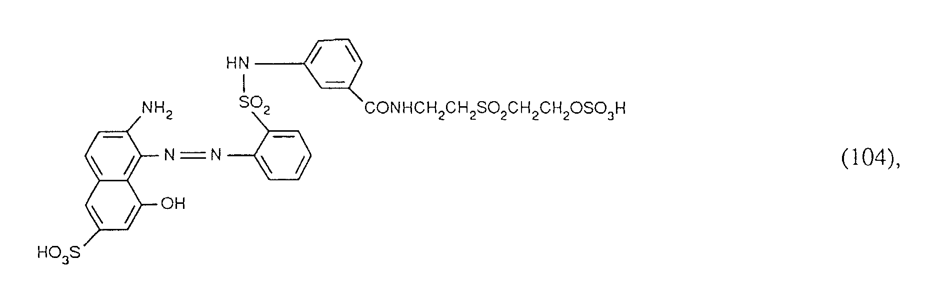 der natürliches und synthetisches Polyamidfasermaterial in roten Farbtönen färbt.

Beispiele 38 bis 48: Verfährt man wie in Beispiel 37 angegeben, verwendet jedoch gegebenenfalls statt 135 Teilen 3-Amino-2'-(2-hydroxyäthylsulfonyl)-äthyl-benzamid eine äquimolare Menge
4-Amino-2'-(2-hydroxyäthylsulfonyl)-äthyl-benzamid,
3- oder 4-Methylamino-2'-(2-hydroxyäthylsulfonyl)-äthyl-benzamid,
3- oder 4-Äthylamino-2'-(2-hydroxyäthylsulfonyl)-äthyl-benzamid,
3- oder 4-(2-Sulfatoäthylsulfonyl)-anilin,
3- oder 4-(2-Sulfatoäthylsulfonyl)-N-methyl-anilin oder
3- oder 4-(2-Sulfatoäthylsulfonyl)-N-äthyl-anilin
so erhält man die in Tabelle 6 in Form der freien Säure angegebenen Farbstoffe, die natürliches und synthetisches Polyamidfasermaterial in roten Farbtönen färben.

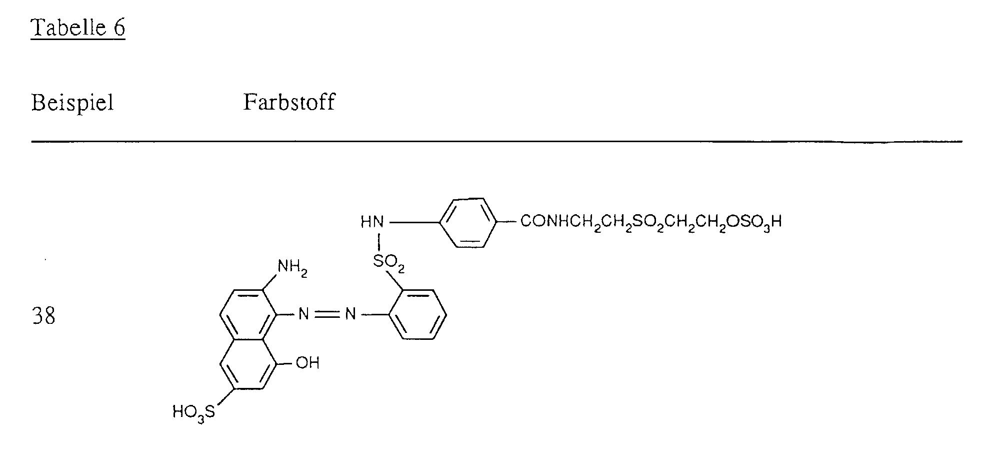

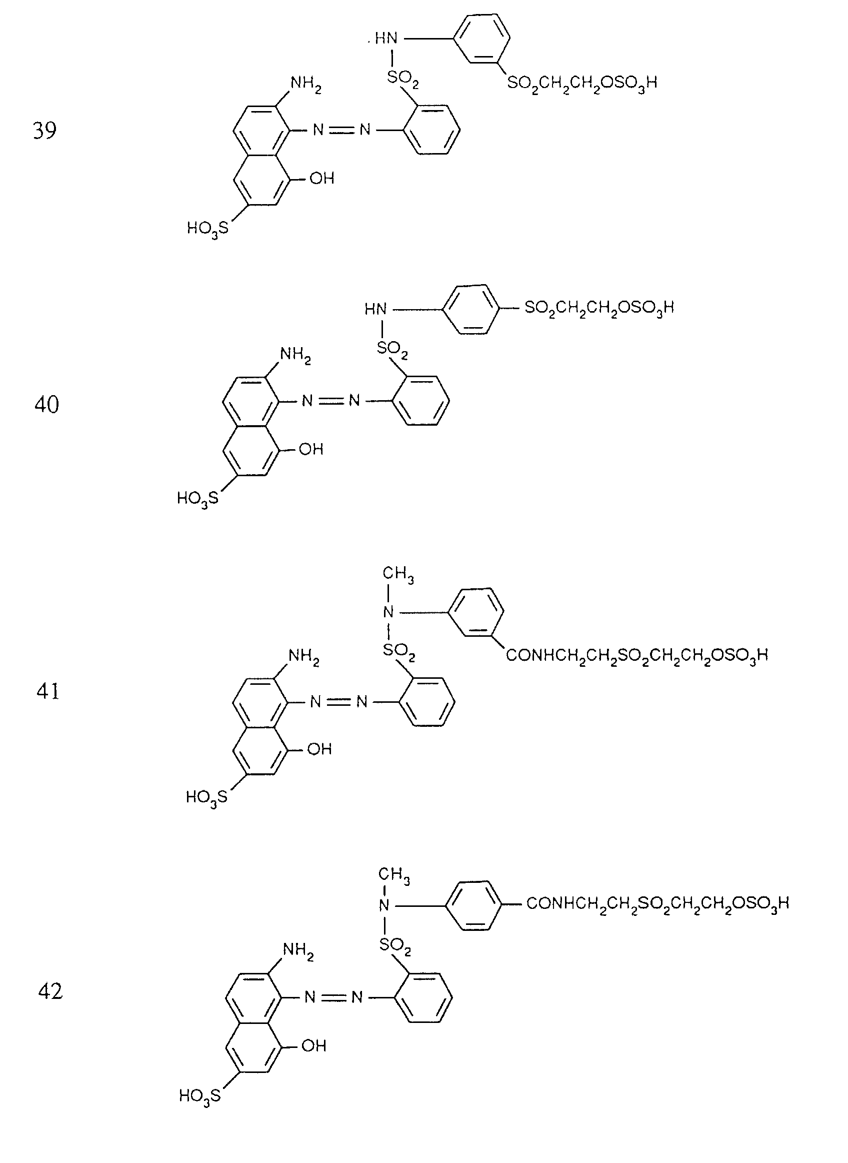

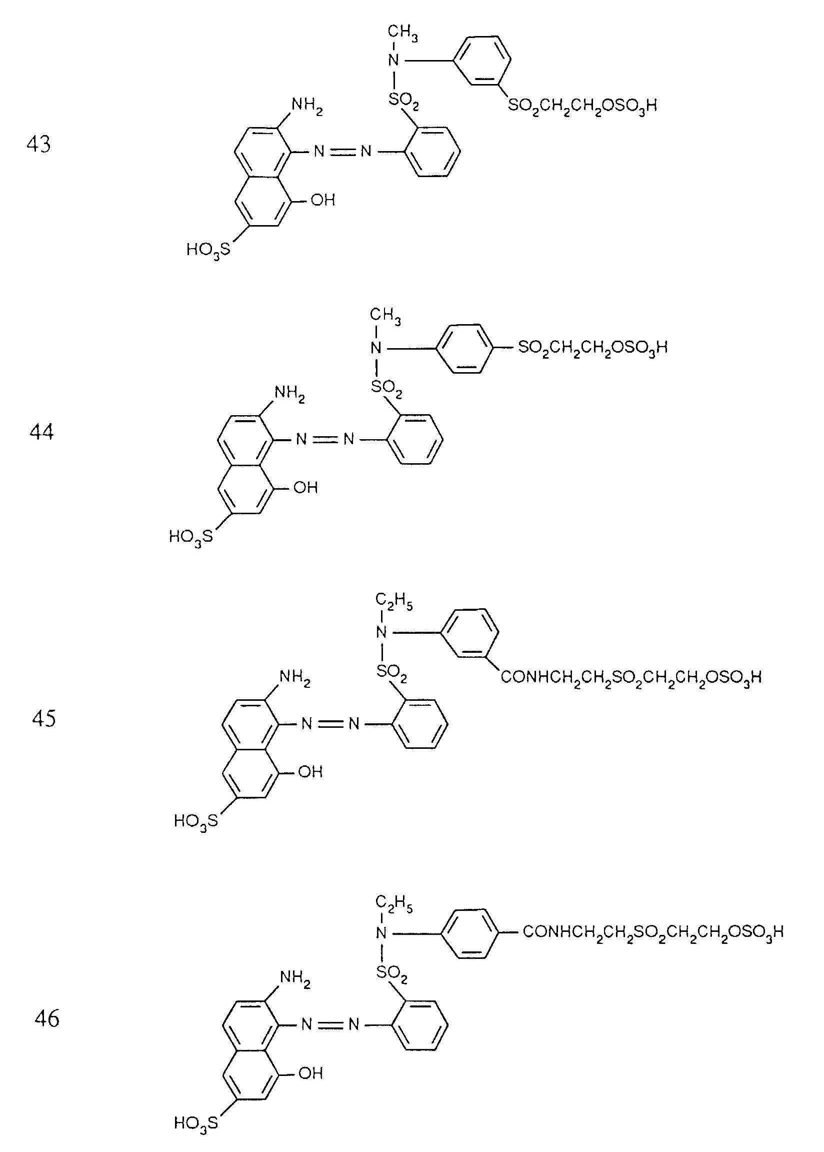

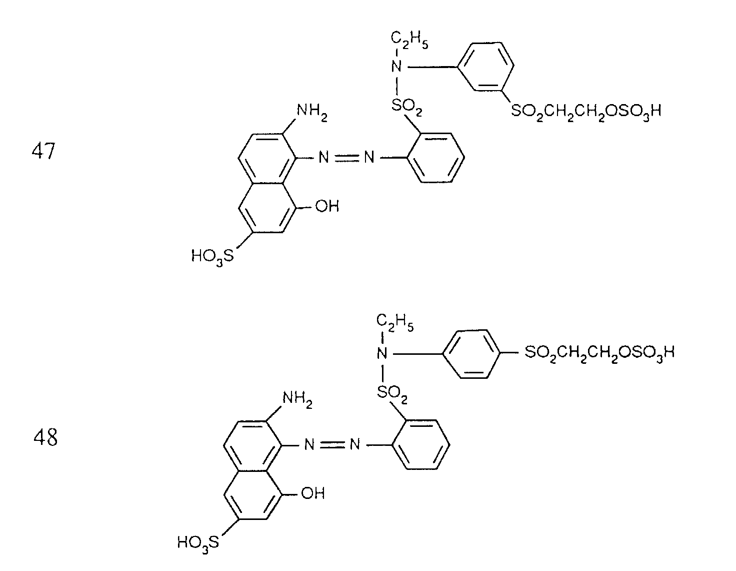

Beispiele 49 bis 64: Verfährt man wie in Beispiel 37 angegeben, verwendet jedoch gegebenenfalls statt 135 Teilen 3-Amino-2'-(2-hydroxyäthylsulfonyl)-äthyl-benzamid eine äquimolare Menge
4-Amino-2'-(2-hydroxyäthylsulfonyl)-äthyl-benzamid,
3- oder 4-Methylamino-2'-(2-hydroxyäthylsulfonyl)-äthyl-benzamid,
3- oder 4-Äthylamino-2'-(2-hydroxyäthylsulfonyl)-äthyl-benzamid,
3- oder 4-(2-Sulfatoäthylsulfonyl)-anilin,
3- oder 4-(2-Sulfatoäthylsulfonyl)-N-methyl-anilin oder
3- oder 4-(2-Sulfatoäthylsulfonyl)-N-äthyl-anilin
und statt 25 Teile 2-Amino-8-hydroxynaphthalin-6-sulfonsäure eine äquimolare Menge 2-Methylindol oder 2-Phenylindol, so erhält man die in Tabelle 7 in Form der freien Säure angegebenen Farbstoffe, die natürliches und synthetisches Polyamidfasermaterial in gelben Farbtönen färben.

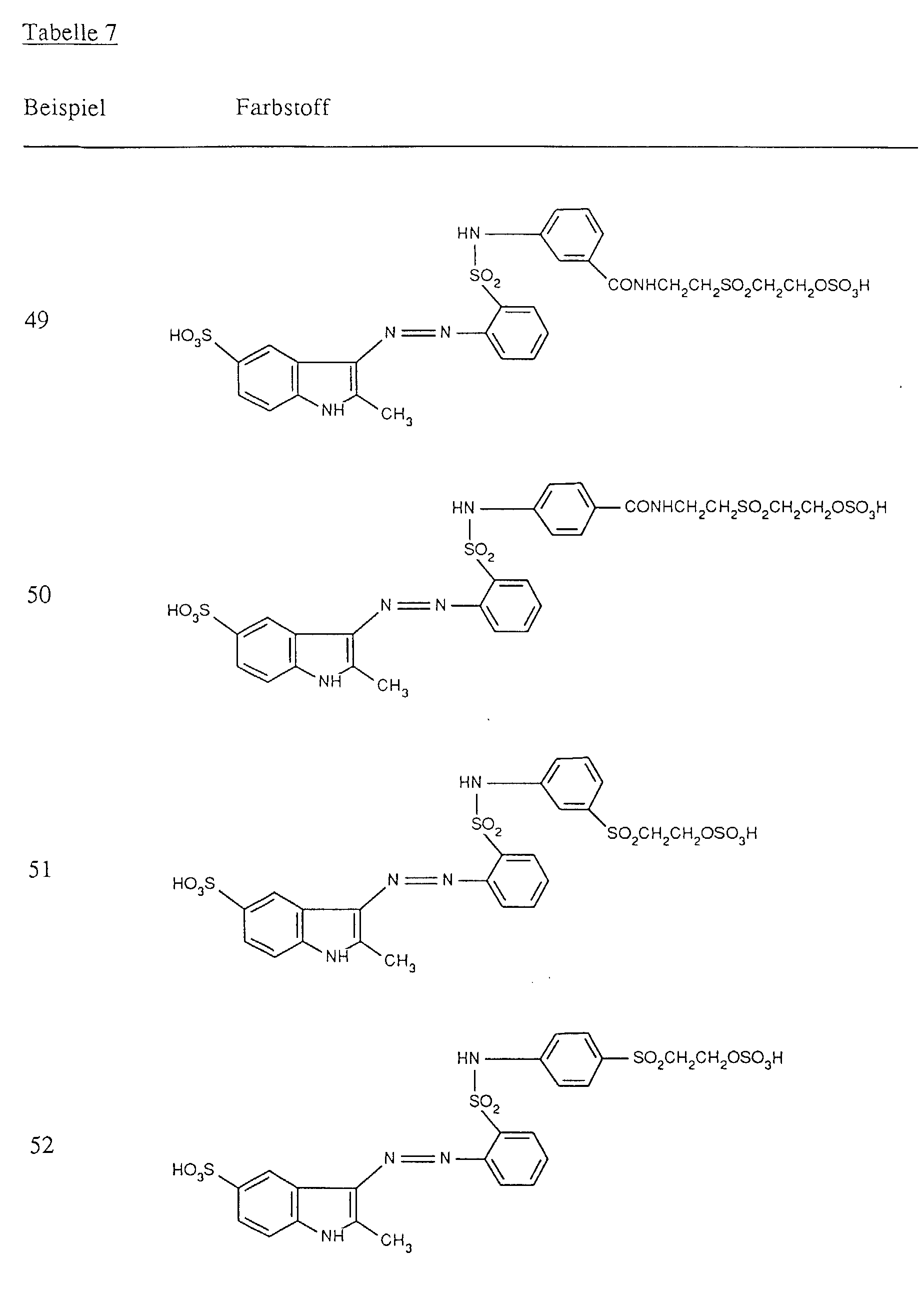

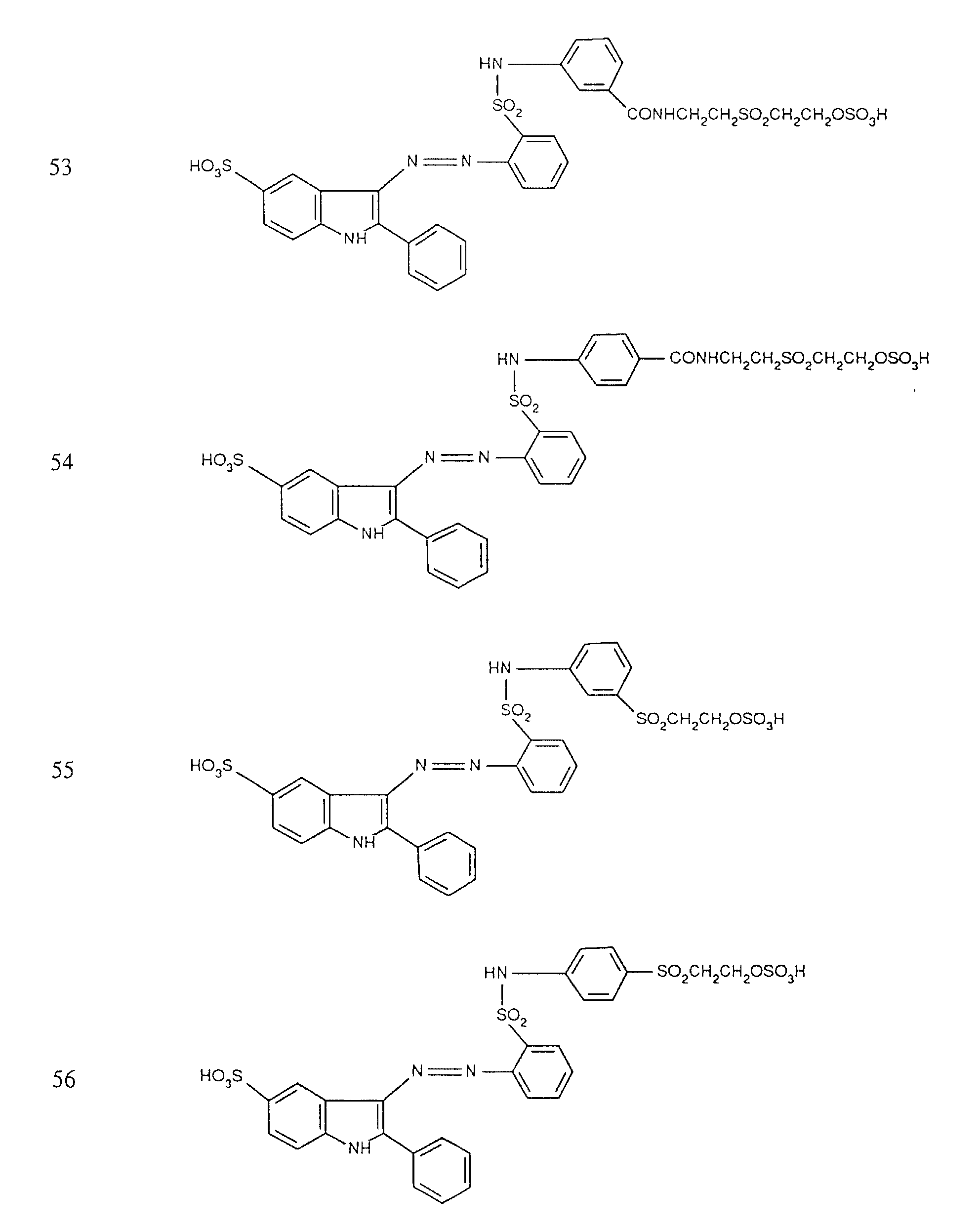

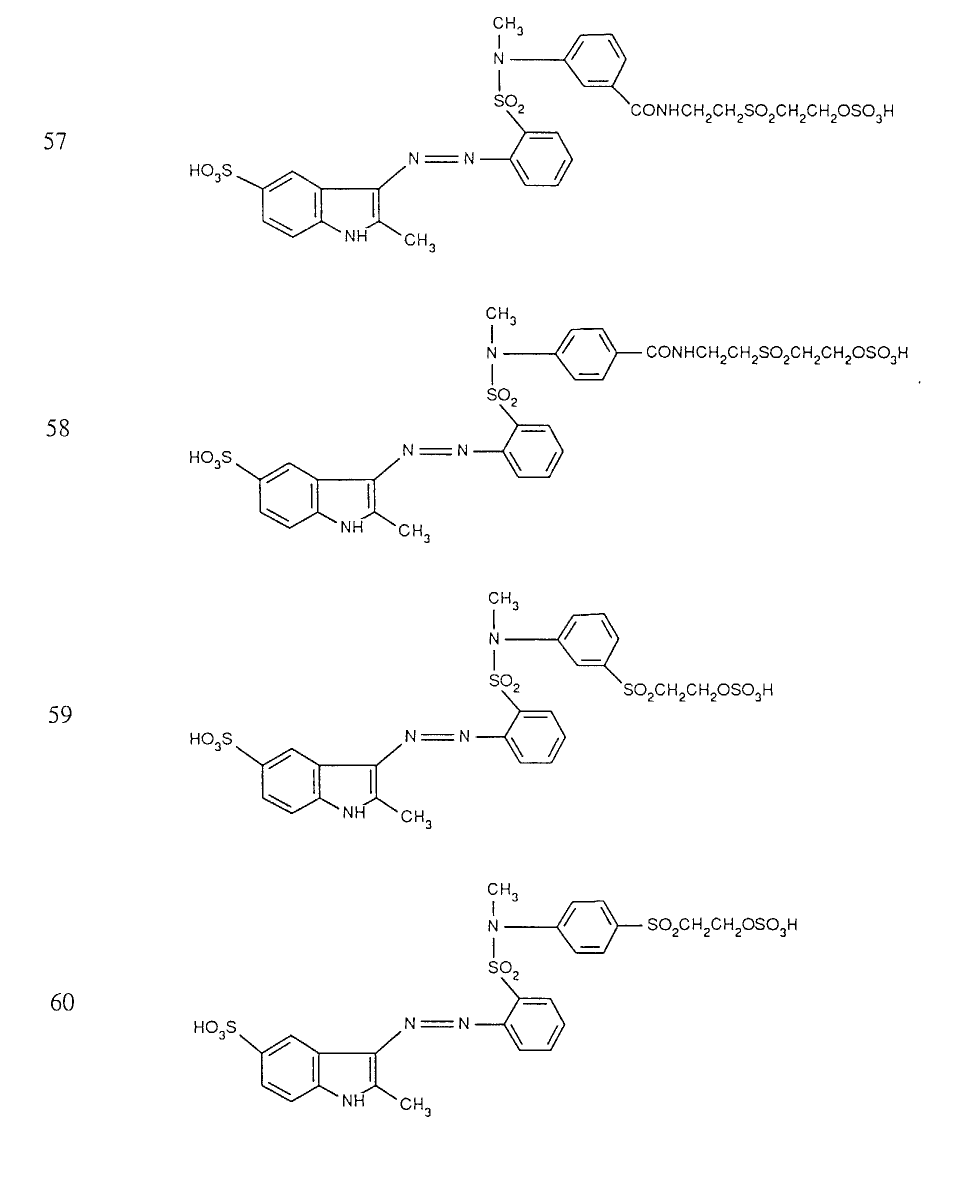

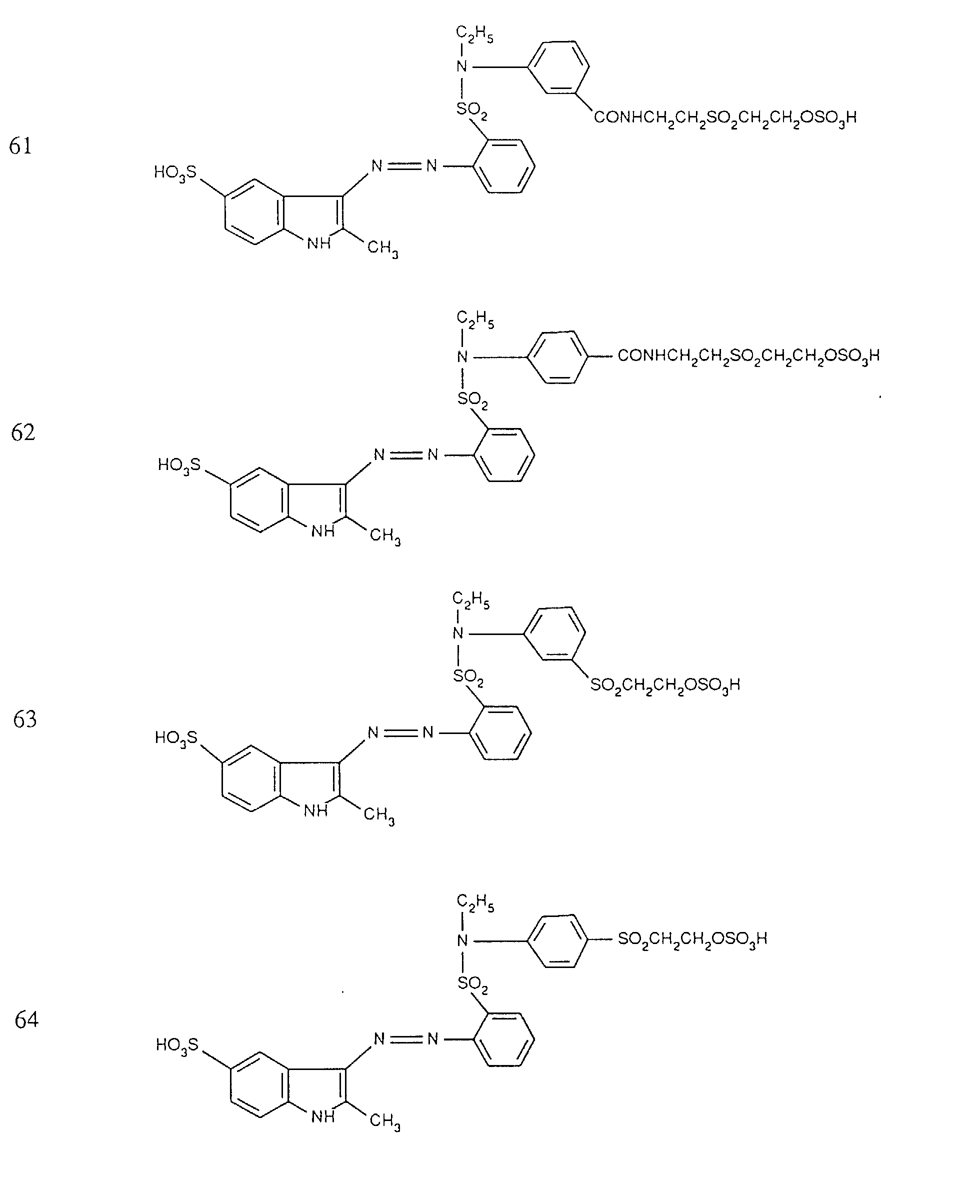

Beispiel 65: 111 Teile m-Nitrobenzolsulfochlorid werden mit 135 Teilen 3-(2-Hydroxyäthylsulfonyl)-anilin in 200 Teile Toluol bei 25° gerührt und innerhalb von 30 Minuten mit 40 Teilen Natriumcarbonat versetzt. Man heizt auf eine Temperatur von 50 bis 55° auf, rührt 2 Stunden bei dieser Temperatur nach und verdünnt anschliessend mit 300 Teilen Wasser. Die toluolische Phase wird abgetrennt, mit 5 Teilen Raney-Nickel unter Normaldruck katalytisch reduziert, filtriert und eingedampft. Der Rückstand wird in 300 Teilen Oleum (10%) bei Raumtemperatur sulfatiert. Anschliessend wird die Reaktionsmasse auf ein Eis/Wasser-Gemisch gegossen, und das der Verbindung der Formel 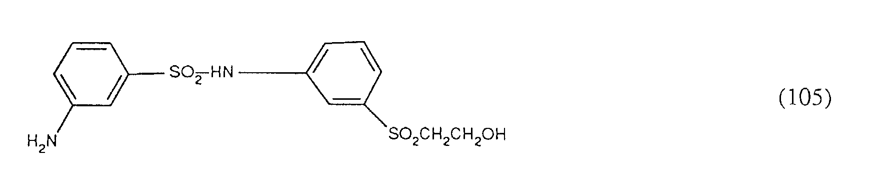 entsprechende Amin abgenutscht.

60 Teile des so erhaltenen Amins der Formel (105) werden mit 38 Teilen 1-Amino-4-bromanthrachinon-2-sulfonsäure in 300 Teile eines Gemisches aus Äthanol und Wasser (1:1) gegeben und mit 20 Teilen Natriumbicarbonat und 0,5 Teilen eines Gemisches von Kupferpulver und Kupfer-(I)-chlorid (1:1) versetzt. Die Reaktionsmischung wird 24 Stunden bei einer Temperatur von 80° belassen, wobei das Reaktionsprodukt ausfällt. Dieses wird abgenutscht, mit Wasser gewaschen und getrocknet. 10 Teile des so erhaltenen Produktes werden mit 50 Teilen Oleum (10%) bei Raumtemperatur sulfatiert. Die Reaktionsmasse wird auf ein Eis/Wasser-Gemisch gegossen, wobei der Farbstoff ausfällt. Nach Filtration und Trocknung erhält man einen Farbstoff, der in Form der freien Säure der Verbindung der Formel 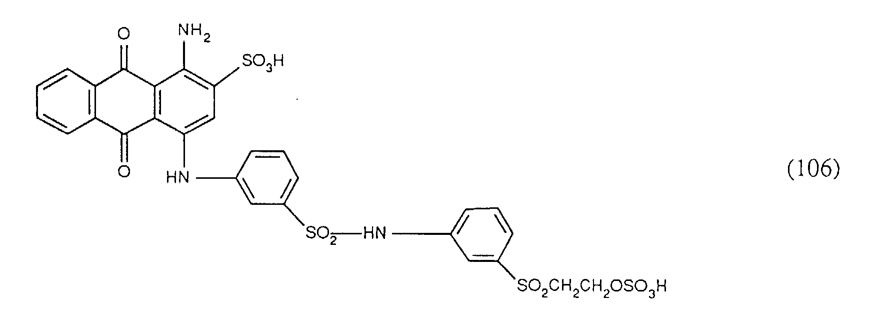 entspricht. Der Farbstoff der Formel (106) farbt natürliches und synthetisches Polyamidfasermaterial in blauen Farbtönen.

Beispiel 66: Verfährt man wie in Beispiel 65 angegeben, verwendet jedoch statt 135 Teilen 3-(2-Hydroxyäthylsulfonyl)-anilin eine äquimolare Menge 3-(2-Hydroxyäthylsulfonyl)-N-äthylanilin, so erhält man einen Farbstoff, der in Form der freien Säure der Verbindung der Formel 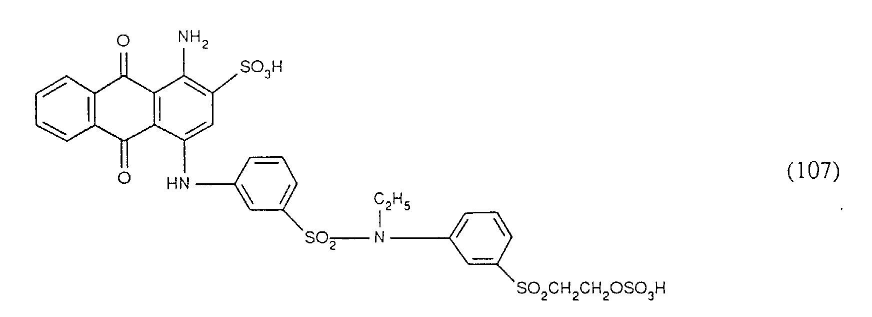 entspricht. Der Farbstoff der Formel (107) färbt natürliches und synthetisches Polyamidfasermaterial in blauen Farbtönen.

Beispiel 67: Eine neutrale, 70 bis 80° heisse Lösung von 28 Teilen 4-Amino-azobenzol-4'-sulfonsäure in 500 Teilen Wasser lässt man gleichzeitig mit 26 Teilen einer wässrigen 4-normalen Natriumnitritlösung in eine Mischung von 28 Teilen Salzsäure (32%) in 200 Teilen Wasser einlaufen und hält die Temperatur des Reaktionsgemisches bei 20 bis 25°. Nach beendeter Zugabe wird 2 Stunden nachgerührt und der Nitritüberschuss mit wenig Amidosulfonsäure zerstört. Das so bereitete Reaktionsgemisch lässt man langsam in eine 0 bis 5° kalte Lösung von 14 Teilen 2,4-Hexandion und 180 Teilen Natriumacetat in 500 Teilen Wasser einfliessen. Nach mehrstündigem Rühren bei einer Temperatur von 0 bis 5° wird zur Vervollständigung der Reaktion auf 30° erwärmt und mit Natriumacetat der pH auf einen Wert von 5,5 gestellt. Anschliessend wird der Niederschlag abgesaugt und getrocknet.

8 Teile des nach obigen Angaben hergestellten Reaktionsproduktes werden in ein Gemisch aus 50 Teilen Eisessig und 20 Teilen Wasser bei Raumtemperatur suspendiert. Unter Rühren werden in einer Portion 2,9 Teile 3-Hydrazino-2'-(2-hydroxyäthylsulfonyl)-äthyl-benzamid zugefügt. Das Reaktionsgemisch wird langsam auf eine Temperatur von 100° erhitzt und so lange gerührt, bis kein Edukt mehr nachweisbar ist. Das Reaktionsprodukt wird mit Salzsäure (32%) ausgefällt, abgenutscht und getrocknet.

5 Teile des so erhaltenen Produktes werden mit 25 Teilen Oleum (10%) bei Raumtemperatur sulfatiert. Die Reaktionsmasse wird auf ein Eis/Wasser-Gemisch gegossen, wobei der Farbstoff ausfällt. Nach Filtration und Trocknung erhält man einen Farbstoff, der in Form der freien Säure der Verbindung der Formel 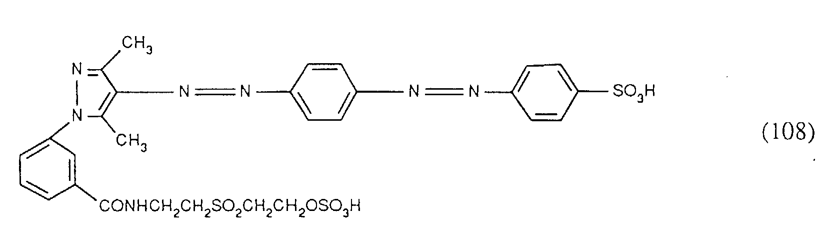 entspricht. Der Farbstoff der Formel (108) färbt natürliches und synthetisches Polyamidfasermaterial in gelben Farbtönen.

Beispiel 68: Verfährt man wie in Beispiel 67 angegeben, verwendet jedoch statt 2,9 Teile 3-Hydrazino-2'-(2-hydroxyäthylsulfonyl)-äthyl-benzamid eine äquimolare Menge 3-Hydrazino-(2'-hydroxyäthylsulfonyl)-benzol und statt 28 Teilen 4-Amino-azobenzol-4'-sulfonsäure eine äquimolare Menge 4-Amino-azobenzol-3'-sulfonsäure, so erhält man einen Farbstoff, der in Form der freien Säure der Verbindung der Formel 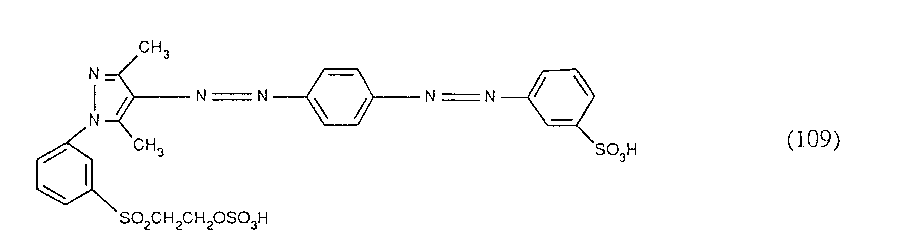 entspricht. Der Farbstoff der Formel (109) färbt natürliches und synthetisches Polyamidfasermaterial in gelben Farbtönen.

Färbebeispiel 1: Man färbt 10 Teile Polyamid-6,6-Garn in einem wässrigen Färbebad bei einem Flottenverhältnis von 1:25. Als Farbstoff werden 0,5% des Farbstoffs der Formel 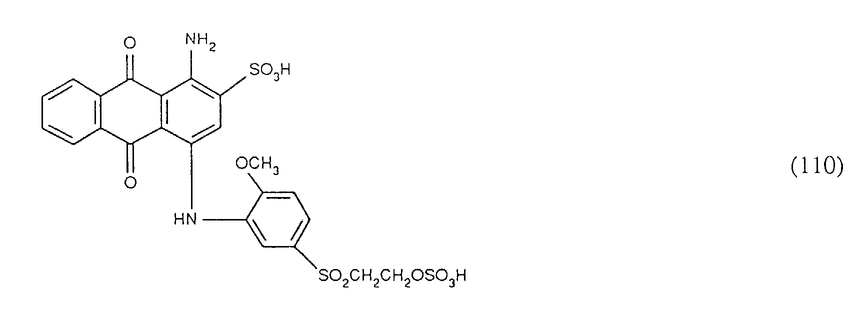 verwendet, wobei sich die Mengenangabe auf das Fasergewicht bezieht. Das Färbebad wird durch Zugabe einer wässrigen Natriumhydroxidlösung auf einen pH-Wert von 7,0 gestellt, innerhalb von 15 Minuten auf 80° geheizt und innerhalb von 30 Minuten von 80° auf eine Temperatur von 100° geheizt, wobei der pH bei einem Wert von 7,0 konstant gehalten wird. Man färbt noch 40 Minuten bei einer Temperatur von 100°. Während des Färbens wird der pH kontinuierlich bestimmt und durch Zugabe einer wässrigen Natriumhydroxidlösung auf einen Wert von 7,0 gehalten. Das gefärbte Garn wird anschliessend aus dem Färbebad herausgenommen und wie üblich gespült und getrocknet. Man erhält ein in einem blauen Farbton gefärbtes Garn. Die Färbung ist sehr egal und weist eine ausgezeichnete Nassechtheit auf.

In Färbebeispiel 1 kann die Temperatur anstelle von 30 Minuten auch innerhalb von 20 Minuten von 80° auf eine Temperatur von 100° erhöht werden.

Verfährt man wie in Färbebeispiel 1 angegeben, verwendet jedoch statt 0,5% des Farbstoffs der Formel (110) eine äquimolare Menge eines der gemäss den Beispielen 1 bis 68 hergestellten Farbstoffe, so werden Färbungen mit den in den jeweiligen Beispielen angegebenen Farbtönen erhalten.

Färbebeispiele 2 bis 4: Verfährt man wie in Färbebeispiel 1 angegeben, verwendet jedoch statt 0,5% des Farbstoffs der Formel (110) eine äquimolare Menge eines der Farbstoffe der Formeln 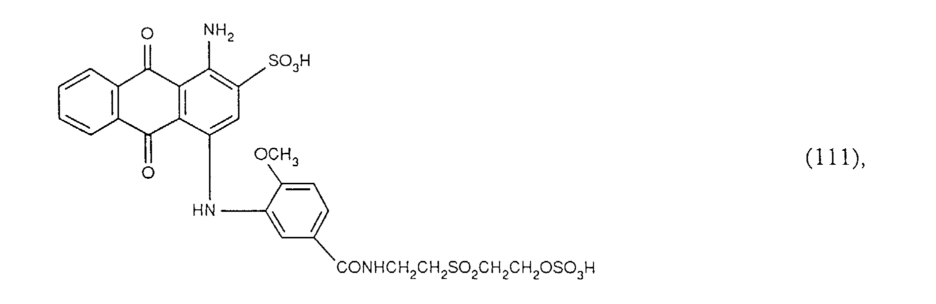 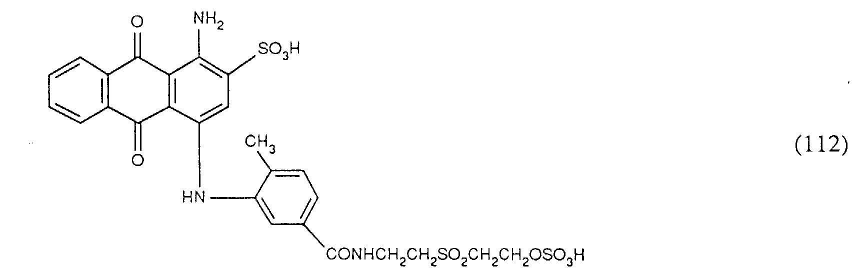 und 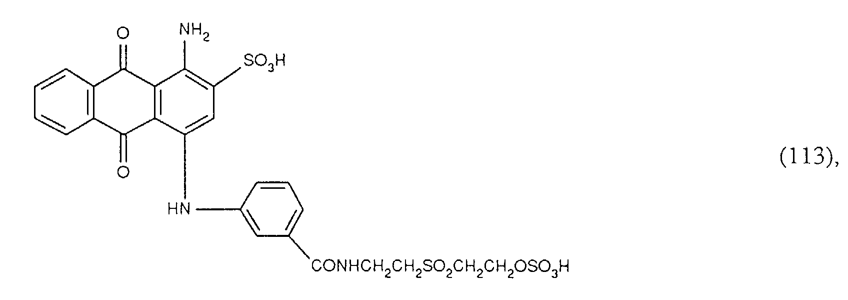 so werden Färbungen in blauen Farbtönen erhalten.

## Patentansprüche

1. Verfahren zum Färben von synthetischen Polyamidfasermaterialien, dadurch gekennzeichnet, dass man diese Fasermaterialien mit Reaktivfarbstoffen der Formel
HO₃S―Fa(̵X-SO₂CH₂CH₂OSO₃H)ₘ (1),
worin Fa ein Farbstoffrest, X die direkte Bindung oder ein Rest der Formel -CONHCH₂CH₂-, m die Zahl 1 oder 2 ist und der Farbstoff der Formel (1) nur eine Sulfogruppe enthält, aus wässriger Flotte bei einem pH-Wert von 5 bis 9 färbt und zur. Einstellung der Färbetemperatur innerhalb eines Zeitraumes von mindestens 20 Minuten die Temperatur von 80°C auf eine Temperatur von mindestens 95°C erhöht.

2. Verfahren gemäss Anspruch 1, dadurch gekennzeichnet, dass man Reaktivfarbstoffe der Formel (1) verwendet, worin Fa der Rest eines Monoazo-, Polyazo- oder Anthrachinon-Farbstoffes ist.

3. Verfahren gemäss einem der Ansprüche 1 und 2, dadurch gekennzeichnet, dass man Reaktivfarbstoffe der Formel 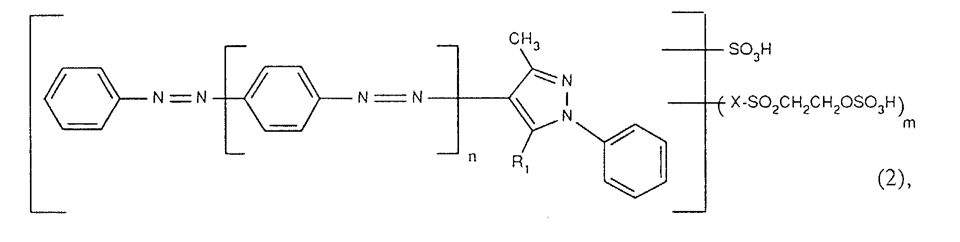 worin R₁ Wasserstoff, C₁-C₄-Alkyl, Amino oder Hydroxyl und n die Zahl 0 oder 1 bedeutet, 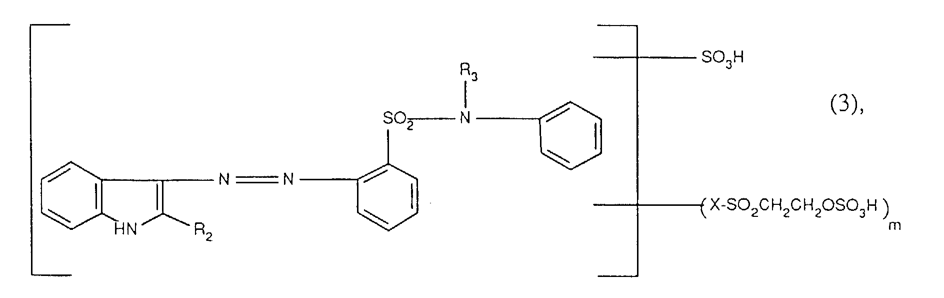 worin R₂ Wasserstoff, C₁-C₄-Alkyl oder gegebenenfalls durch C₁-C₄-Alkyl, C₁-C₄-Alkoxy, C₂-C₄-Alkanoylamino oder Halogen substituiertes Phenyl und R₃ Wasserstoff oder C₁-C₄-Alkyl ist, 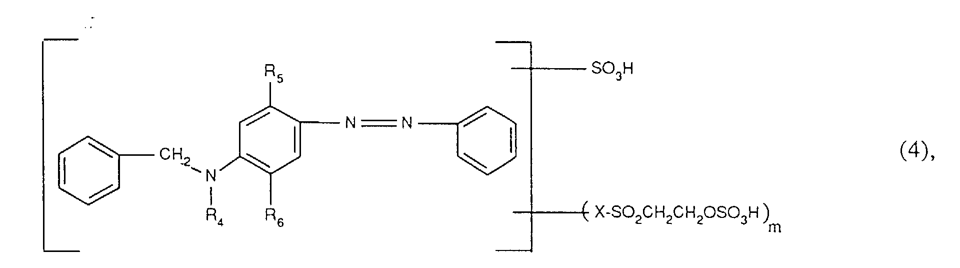 worin R₄ Wasserstoff oder C₁-C₄-Alkyl, R₅ und R₆ Wasserstoff, C₁-C₄-Alkyl, C₁-C₄-Alkoxy, C₂-C₄-Alkanoylamino oder Halogen sind und R₄ und R₆ gegebenenfalls zusammen mit den sie verbindenden Atomen einen Tetrahydropyridinring bilden, 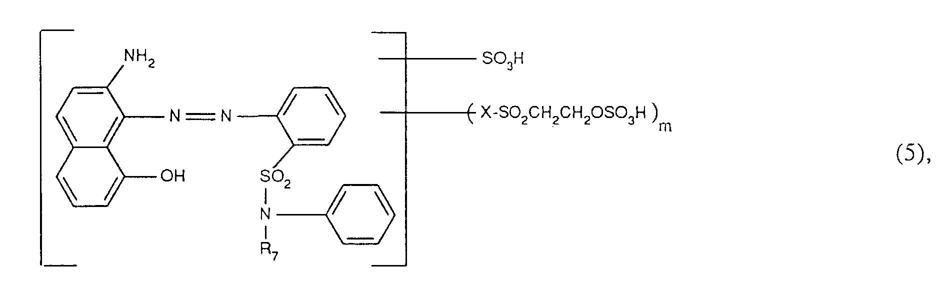 worin R₇ Wasserstoff oder C₁-C₄-Alkyl ist, 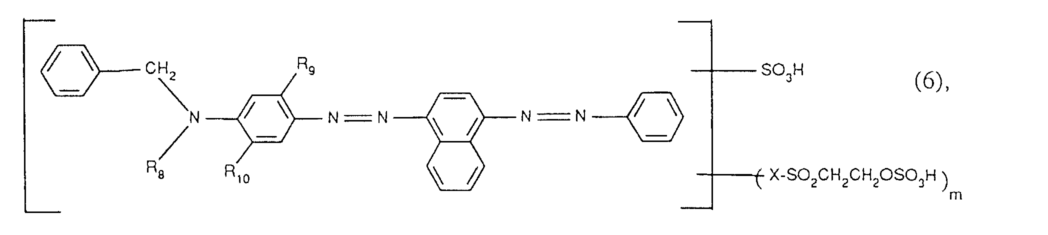 worin R₈ Wasserstoff oder C₁-C₄-Alkyl, R₉ und R₁₀ Wasserstoff, C₁-C₄-Alkyl, C₁-C₄-Alkoxy, C₂-C₄-Alkanoylamino oder Halogen sind und R₈ und R₁₀ gegebenenfalls zusammen mit den sie verbindenden Atomen einen Tetrahydropyridinring bilden, 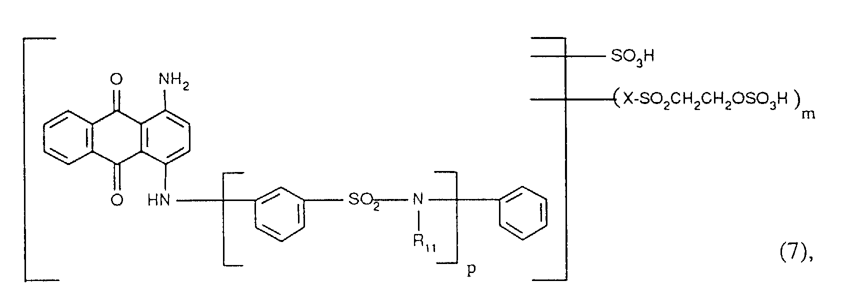 worin R₁₁ Wasserstoff oder C₁-C₄-Alkyl und p die Zahl 0 oder 1 ist,
oder 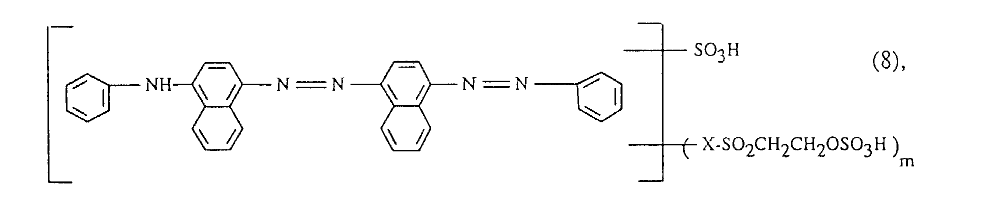 verwendet, wobei in den Farbstoffen der Formeln (2) bis (8) X die direkte Bindung oder ein Rest der Formel -CONHCH₂CH₂- und m die Zahl 1 oder 2 ist, und die Farbstoffe der Formeln (2) bis (8) gegebenenfalls durch C₁-C₄-Alkyl, C₁-C₄-Alkoxy, C₂-C₄-Alkanoylamino oder Halogen weitersubstituiert sind.

4. Verfahren gemäss einem der Ansprüche 1 bis 3, dadurch gekennzeichnet, dass man Reaktivfarbstoffe der Formel (1) verwendet, worin m die Zahl 1 ist.

5. Verfahren gemäss einem der Ansprüche 1 bis 4, dadurch gekennzeichnet, dass man nach der Ausziehmethode färbt.

6. Verfahren gemäss einem der Ansprüche 1 bis 5, dadurch gekennzeichnet, dass man bei einer Temperatur von 95 bis 102°C färbt.

7. Verfahren gemäss einem der Ansprüche 1 bis 6, dadurch gekennzeichnet, dass man zur Einstellung der Färbetemperatur innerhalb eines Zeitraumes von mindestens 20 Minuten, insbesondere mindestens 30 Minuten, die Temperatur von 80°C auf eine Temperatur von 95 bis 102°C erhöht.

8. Verfahren gemäss einem der Ansprüche 1 bis 7, dadurch gekennzeichnet, dass man in Gegenwart eines Puffers färbt oder während des Färbens eine zur Konstanthaltung des pH-Wertes erforderliche Menge einer Base zudosiert.

9. Verfahren gemäss einem der Ansprüche 1 bis 8, dadurch gekennzeichnet, dass man bei einem pH-Wert von 5,5 bis 8, insbesondere 6 bis 7, färbt.

10. Verfahren gemäss einem der Ansprüche 1 bis 9, dadurch gekennzeichnet, dass man nach der Ausziehmethode bei einer Temperatur von 95 bis 102°C färbt, in Gegenwart eines Puffers färbt oder während des Färbens eine zur Konstanthaltung des pH-Wertes erforderliche Menge einer Base zudosiert, und zur Einstellung der Färbetemperatur innerhalb eines Zeitraumes von mindestens 20 Minuten, insbesondere mindestens 30 Minuten, die Temperatur von 80°C auf eine Temperatur von 95 bis 102°C erhöht.

11. Reaktivfarbstoffe der Formel
HO₃S―Fa'―X - SO₂CH₂CH₂OSO₃H (17),
worin X die direkte Bindung oder ein Rest der Formel -CONHCH₂CH₂- ist und Fa' ein Rest der Formel 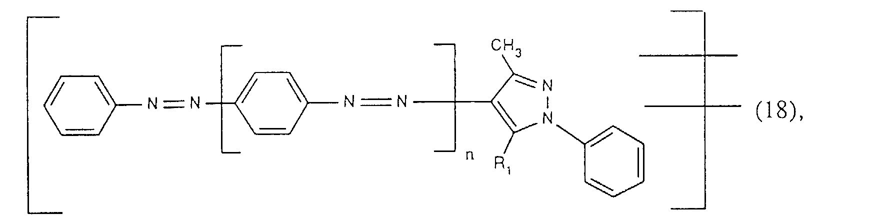 worin R₁ Wasserstoff, C₁-C₄-Alkyl, Amino oder Hydroxyl und n die Zahl 0 oder 1 ist, wobei X den Rest der Formel -CONCH₂CH₂- bedeutet wenn n die Zahl 0 ist,
oder 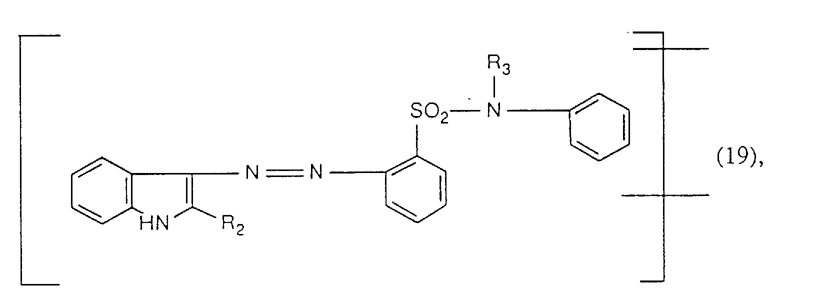 worin R₂ Wasserstoff, C₁-C₄-Alkyl oder gegebenenfalls durch C₁-C₄-Alkyl, C₁-C₄-Alkoxy, C₂-C₄-Alkanoylamino oder Halogen substituiertes Phenyl und R₃ Wasserstoff oder C₁-C₄-Alkyl ist,
oder 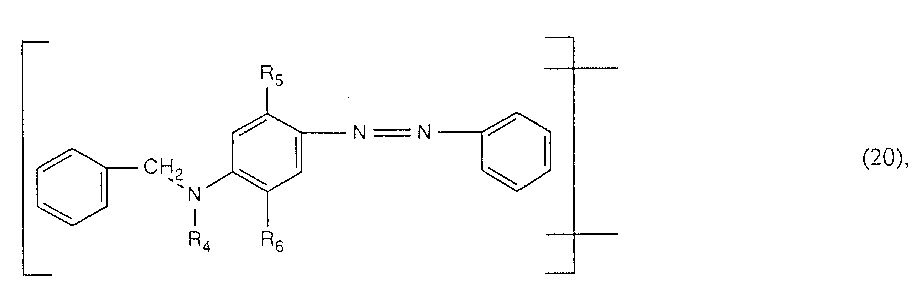 worin R₄ Wasserstoff oder C₁-C₄-Alkyl, R₅ und R₆ Wasserstoff, C₁-C₄-Alkyl, C₁-C₄-Alkoxy, C₂-C₄-Alkanoylamino oder Halogen sind und R₄ und R₆ gegebenenfalls zusammen mit den sie verbindenden Atomen einen Tetrahydropyridinring bilden,
oder 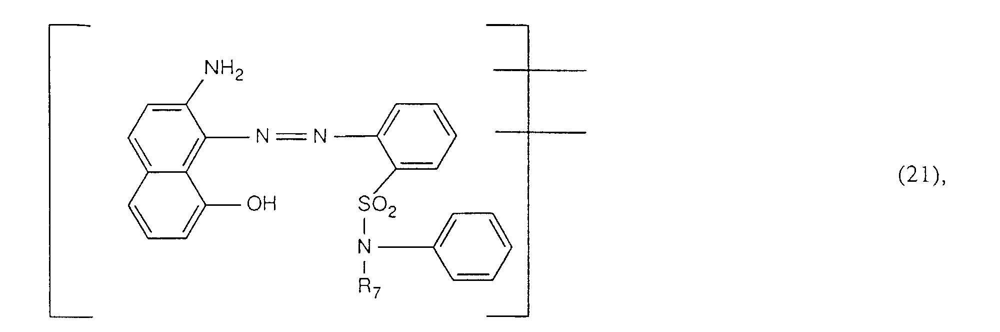 worin R₇ Wasserstoff oder C₁-C₄-Alkyl ist,
oder 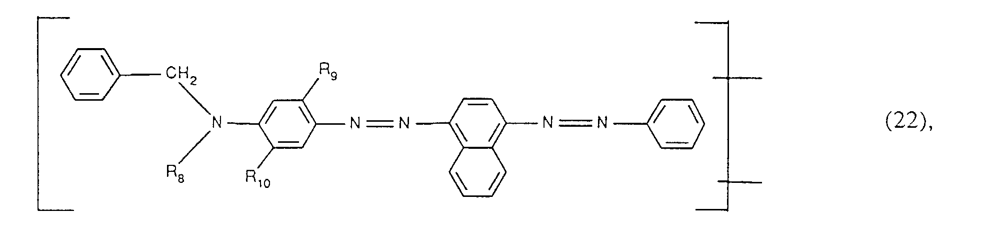 worin R₈ Wasserstoff oder C₁-C₄-Alkyl, R₉ und R₁₀ Wasserstoff, C₁-C₄-Alkyl, C₁-C₄-Alkoxy, C₂-C₄-Alkanoylamino oder Halogen sind und R₈ und R₁₀ gegebenenfalls zusammen mit den sie verbindenden Atomen einen Tetrahydropyridinring bilden,
oder 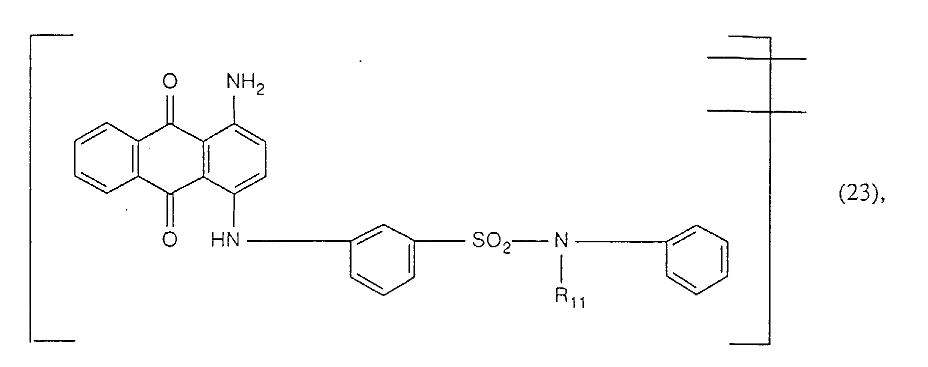 worin R₁₁ Wasserstoff oder C₁-C₄-Alkyl ist,
oder 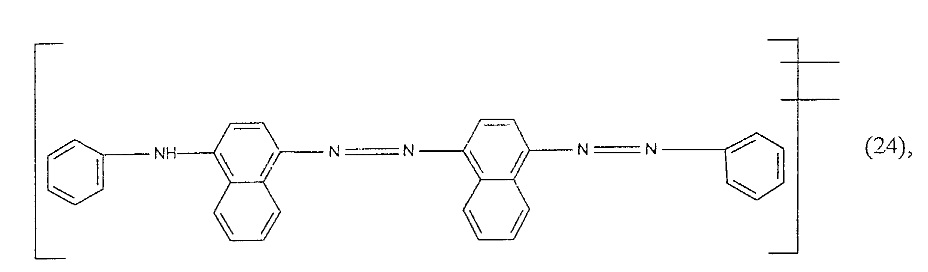 ist, wobei die Reste Fa' der Formeln (18) bis (24) jeweils unabhängig voneinander gegebenenfalls durch C₁-C₄-Alkyl, C₁-C₄-Alkoxy, C₂-C₄-Alkanoylamino oder Halogen substituiert sind,
oder Reaktivfarbstoffe der Formel 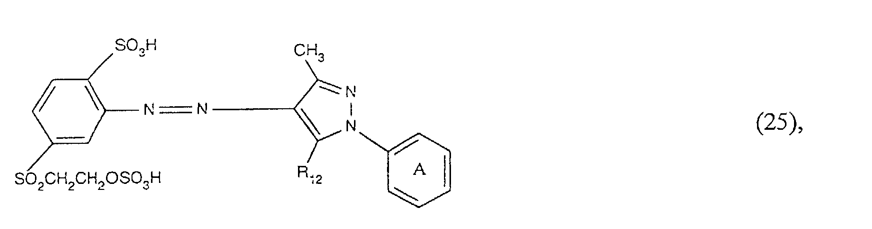 worin R₁₂ Amino oder Hydroxyl ist und der Benzolring A gegebenenfalls durch C₁-C₄-Alkyl, C₁-C₄-Alkoxy, C₂-C₄-Alkanoylamino oder Halogen substituiert ist.

12. Reaktivfarbstoffe gemäss Anspruch 11 der Formel 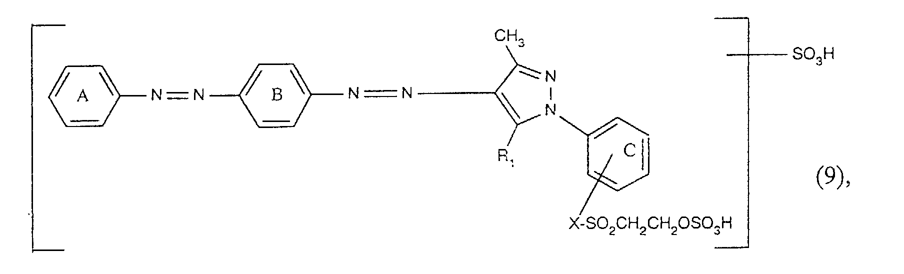 worin R₁ C₁-C₄-Alkyl ist, die Benzolringe A, B und C unabhängig voneinander gegebenenfalls durch C₁-C₄-Alkyl, C₁-C₄-Alkoxy, C₂-C₄-Alkanoylamino oder Halogen substituiert sind und X die direkte Bindung oder ein Rest der Formel -CONHCH₂CH₂- ist.

13. Reaktivfarbstoffe gemäss Anspruch 11 der Formel 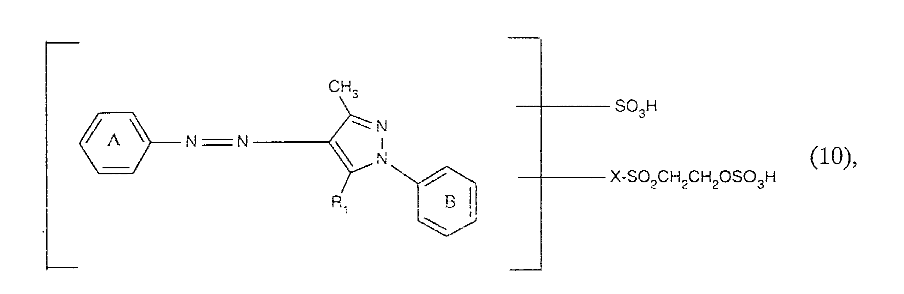 worin R₁ Amino oder Hydroxyl ist, die Benzolringe A und B unabhängig voneinander gegebenenfalls durch C₁-C₄-Alkyl, C₁-C₄-Alkoxy, C₂-C₄-Alkanoylamino oder Halogen substituiert sind und X ein Rest der Formel -CONHCH₂CH₂- ist.

14. Reaktivfarbstoffe gemäss Anspruch 11 der Formel 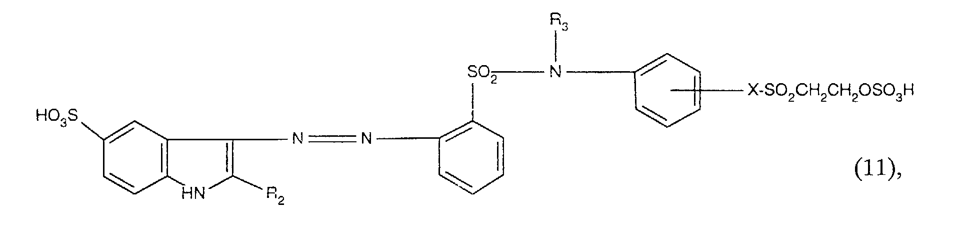 worin R₂ C₁-C₄-Alkyl oder Phenyl, R₃ Wasserstoff oder C₁-C₄-Alkyl und X die direkte Bindung oder ein Rest der Formel -CONHCH₂CH₂- ist.

15. Reaktivfarbstoffe gemäss Anspruch 11 der Formel 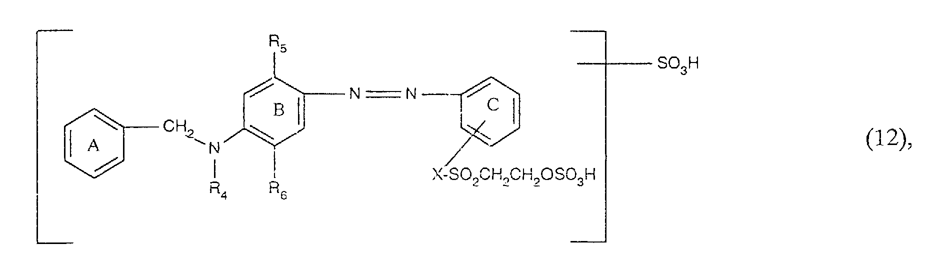 worin R₄ Wasserstoff oder C₁-C₄-Alkyl, R₅ Wasserstoff, C₁-C₄-Alkyl, C₁-C₄-Alkoxy oder C₂-C₄-Alkanoylamino, R₆ Wasserstoff, C₁-C₄-Alkyl, C₁-C₄-Alkoxy oder Halogen ist, X die direkte Bindung oder ein Rest der Formel -CONHCH₂CH₂- ist, der Benzolring C gegebenenfalls durch C₁-C₄-Alkyl, C₁-C₄-Alkoxy oder Halogen substituiert ist und die Sulfogruppe an den Benzolring A, B oder C gebunden ist.

16. Reaktivfarbstoffe gemäss Anspruch 11 der Formel 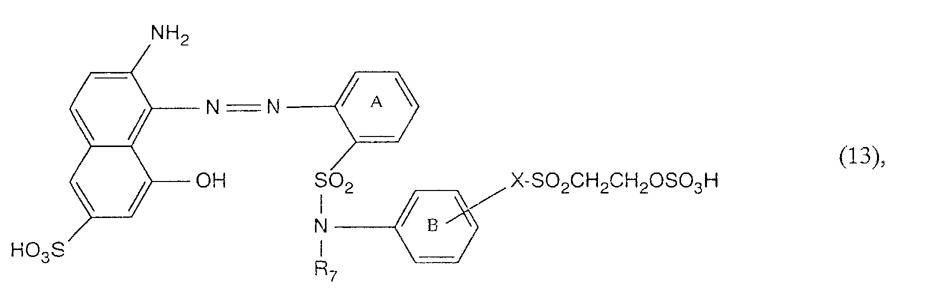 worin R₇ Wasserstoff oder C₁-C₄-Alkyl, X die direkte Bindung oder ein Rest der Formel -CONHCH₂CH₂- ist und die Benzolringe A und B unabhängig voneinander gegebenenfalls durch C₁-C₄-Alkyl, C₁-C₄-Alkoxy oder Halogen substituiert sind.

17. Reaktivfarbstoffe gemäss Anspruch 11 der Formel 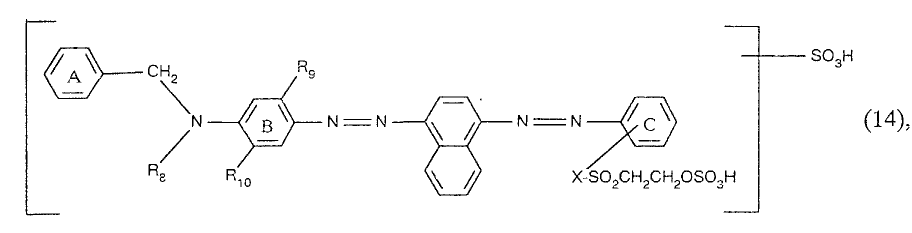 worin R₈ Wasserstoff oder C₁-C₄-Alkyl, R₉ Wasserstoff, C₁-C₄-Alkyl, C₁-C₄-Alkoxy oder C₂-C₄-Alkanoylamino, R₁₀ Wasserstoff, C₁-C₄-Alkyl, C₁-C₄-Alkoxy oder Halogen sind, X die direkte Bindung oder ein Rest der Formel -CONHCH₂CH₂- ist, die Benzolringe A, B und C unabhängig voneinander gegebenenfalls durch C₁-C₄-Alkyl, C₁-C₄-Alkoxy oder Halogen substituiert sind und die Sulfogruppe an den Benzolring A, B oder C gebunden ist.

18. Reaktivfarbstoffe gemäss Anspruch 11 der Formel 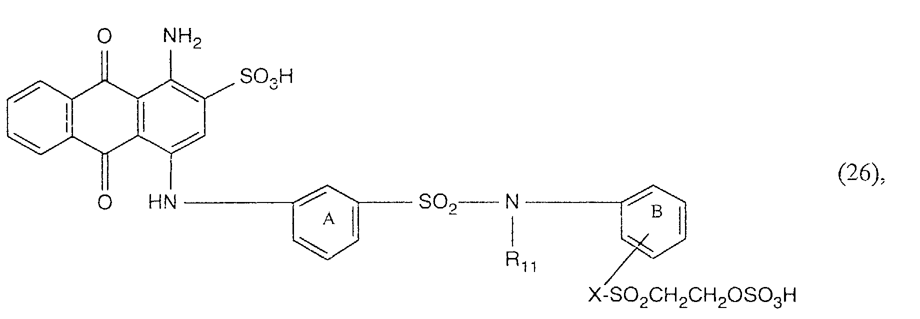 worin R₁₁ Wasserstoff oder C₁-C₄-Alkyl, X die direkte Bindung oder ein Rest der Formel -CONHCH₂CH₂- ist und die Benzolringe A und B unabhängig voneinander gegebenenfalls durch C₁-C₄-Alkyl, C₁-C₄-Alkoxy oder Halogen substituiert sind.

19. Reaktivfarbstoffe gemäss Anspruch 11 der Formel 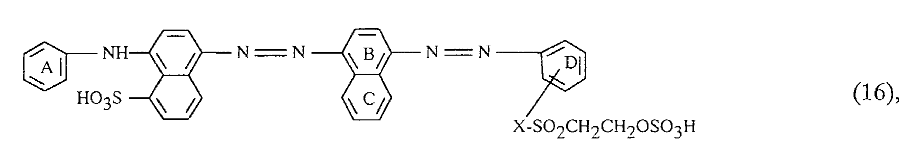 worin X die direkte Bindung oder ein Rest der Formel -CONHCH₂CH₂- ist und die Benzolringe A, B, C und D unabhängig voneinander gegebenenfalls durch C₁-C₄-Alkyl, C₁-C₄-Alkoxy oder Halogen substituiert sind.

## Claims

1. A process for dyeing synthetic polyamide fibre materials, which comprises dyeing these fibre materials with reactive dyes of the formula
HO₃S―Fa(̵X - SO₂CH₂CH₂OSO₃H)ₘ (1),
in which Fa is a dye radical, X is a direct bond or a radical of the formula -CONHCH₂CH₂- and m is the number 1 or 2, the dye of the formula (1) containing only one sulfo group, from an aqueous liquor at a pH of 5 to 9 and, to set the dyeing temperature, raising the temperature from 80°C to at least 95°C over a period of at least 20 minutes.

2. A process according to claim 1, wherein reactive dyes of the formula (1) are used in which Fa is the radical of a monoazo, polyazo or anthraquinone dye.

3. A process according to either claims 1 and 2, wherein the reactive dyes used have the formula 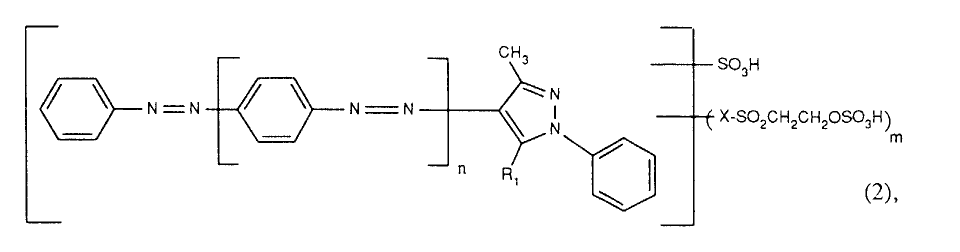 in which R₁ is hydrogen, C₁-C₄alkyl, amino or hydroxyl and n is 0 or 1, 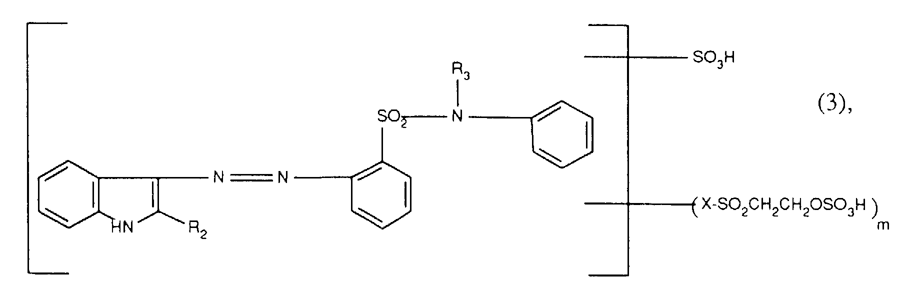 in which R₂ is hydrogen, C₁-C₄alkyl or phenyl which is unsubstituted or substituted by C₁-C₄alkyl, C₁-C₄alkoxy, C₂-C₄alkanoylamino or halogen, and R₃ is hydrogen or C₁-C₄alkyl, 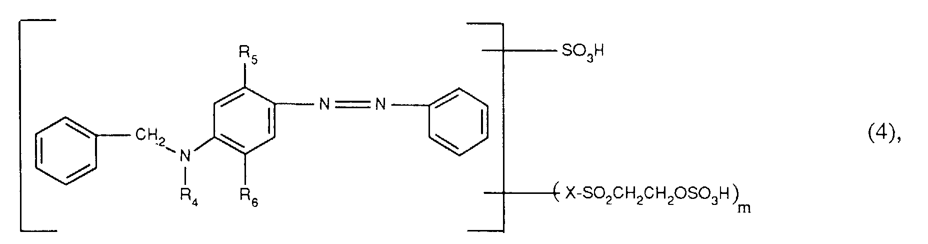 in which R₄ is hydrogen or C₁-C₄alkyl, R₅ and R₆ are hydrogen, C₁-C₄alkyl, C₁-C₄alkoxy, C₂-C₄alkanoylamino or halogen, and R₄ and R₆, if desired together with the atoms linking them, form a tetrahydropyridine ring, 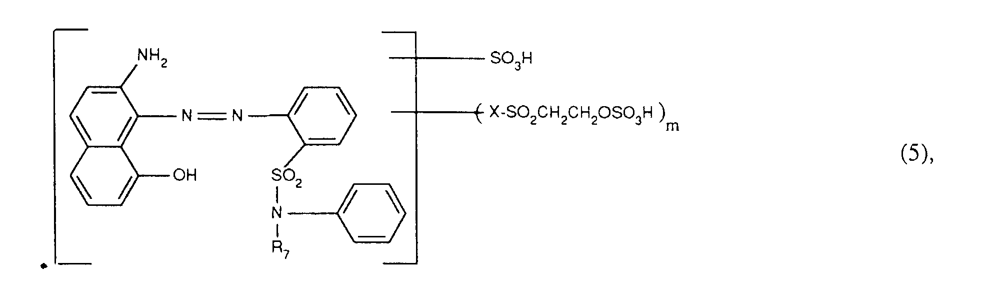 in which R₇ is hydrogen or C₁-C₄alkyl is, 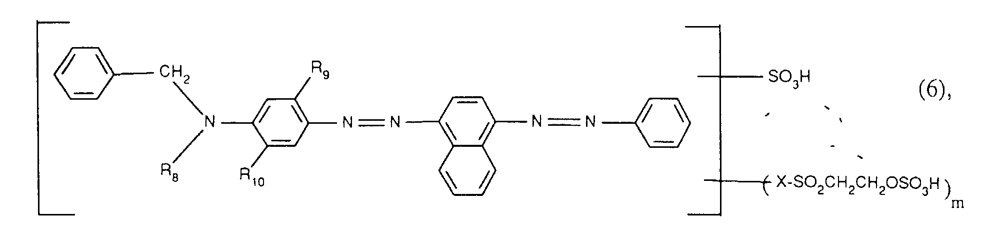 in which R₈ is hydrogen or C₁-C₄alkyl, R₉ and R₁₀ are hydrogen, C₁-C₄alkyl, C₁-C₄alkoxy, C₂-C₄alkanoylamino or halogen, and R₈ and R₁₀, if desired together with the atoms linking them, form a tetrahydropyridine ring, 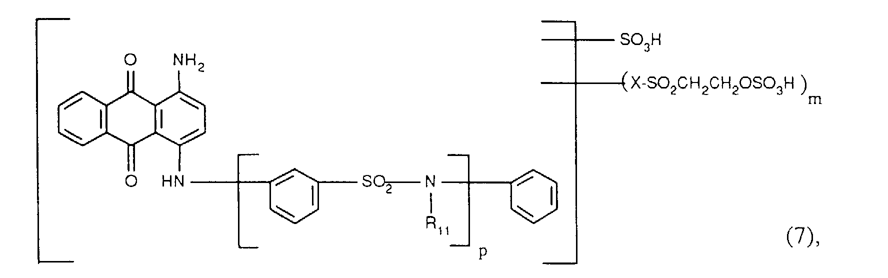 in which R₁₁ is hydrogen or C₁-C₄alkyl and p is the number 0 or 1,
or 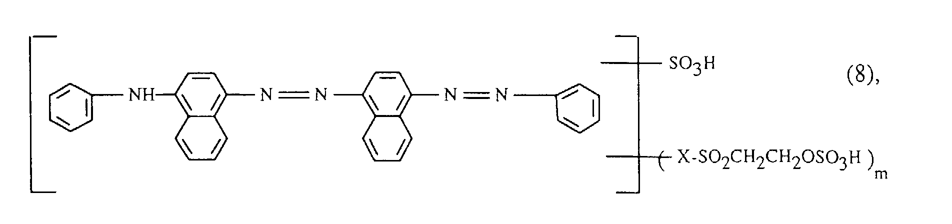 where X in the dyes of the formulae (2) to (8) is a direct bond or a radical of the formula -CONHCH₂CH₂- and m is 1 or 2, and the dyes of the formulae (2) to (8) contain no further substituents or are further substituted by C₁-C₄alkyl, C₁-C₄alkoxy, C₂-C₄alkanoylamino or halogen.

4. A process according to any one of claims 1 to 3, wherein reactive dyes of the formula (1) are used in which m is is 1.

5. A process according to any one of claims 1 to 4, wherein dyeing is carried out by the exhaust method.

6. A process according to any one of claims 1 to 5, wherein dyeing is carried out at a temperature of 95 to 102°C.

7. A process according to any one of claims 1 to 6, wherein the dyeing temperature is set by raising the temperature from 80°C to 95-102°C over a period of at least 20 minutes, in particular at least 30 minutes.

8. A process according to any one of claims 1 to 7, wherein dyeing is carried out in the presence of a buffer or an amount of a base necessary for keeping the pH constant is metered in during dyeing.

9. A process according to any one of claims I to 8, wherein dyeing is carried out at a pH of 5.5 to 8, in particular 6 to 7.

10. A process according to any one of claims 1 to 9, wherein dyeing is carried out by the exhaust method at a temperature of 95 to 102°C, in the presence of a buffer, or an amount of a base necessary for keeping the pH constant is metered in during dyeing, and, to set the dyeing temperature, the temperature is raised from 80°C to 95-102°C over a period of at least 20 minutes, in particular at least 30 minutes.

11. A reactive dye of the formula
HO₃S―Fa'―X - SO₂CH₂CH₂OSO₃H (17),
in which X is a direct bond or a radical of the formula -CONHCH₂CH₂- and Fa' is a radical of the formula 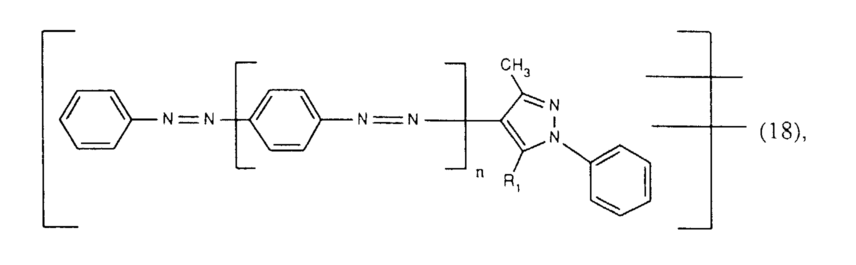 in which R₁ is hydrogen,C₁-C₄alkyl, amino or hydroxyl and n is 0 or 1, X being a radical of the formula -CONHCH₂CH₂- in the case where n is 0,
or 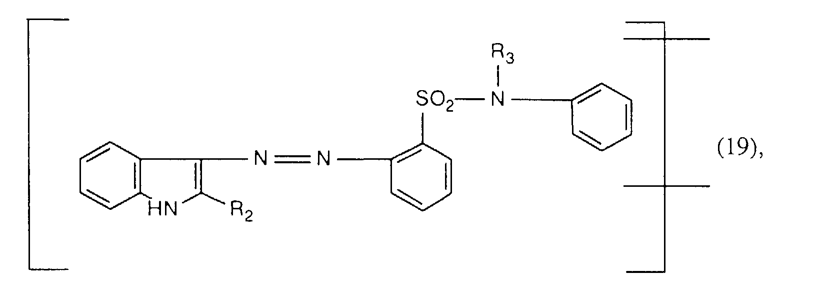 in which R₂ is hydrogen, C₁-C₄alkyl or phenyl which is unsubstituted or substituted by C₁-C₄alkyl, C₁-C₄alkoxy, C₂-C₄alkanoylamino or halogen, and R₃ is hydrogen or C₁-C₄alkyl,
or 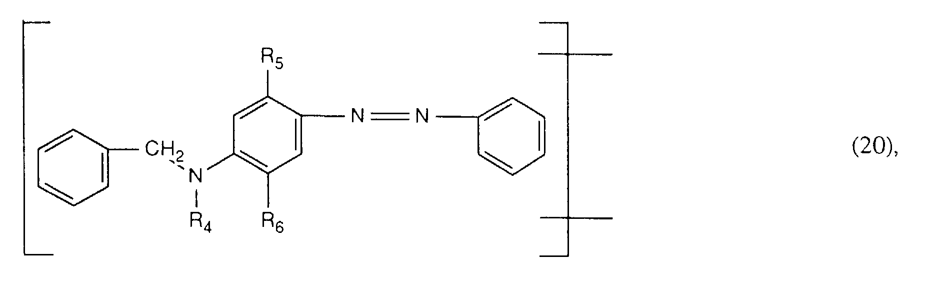 in which R₄ is hydrogen or C₁-C₄alkyl, R₅ and R₆ are hydrogen, C₁-C₄alkyl, C₁-C₄alkoxy, C₂-C₄alkanoylamino or halogen and R₄ and R₆, if desired together with the atoms linking them, form a tetrahydropyridine ring,
or 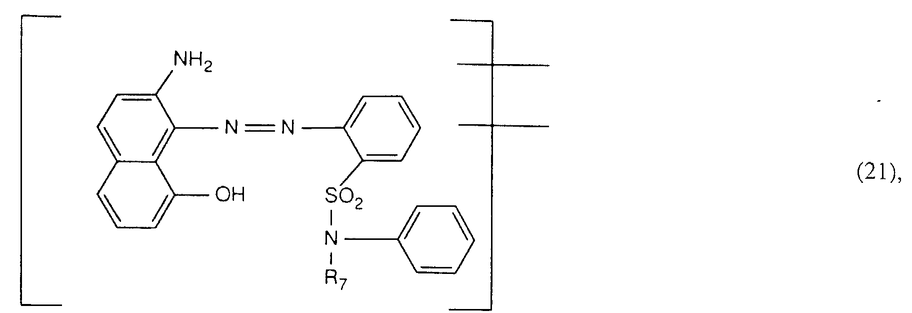 in which R₇ is hydrogen or C₁-C₄alkyl,
or 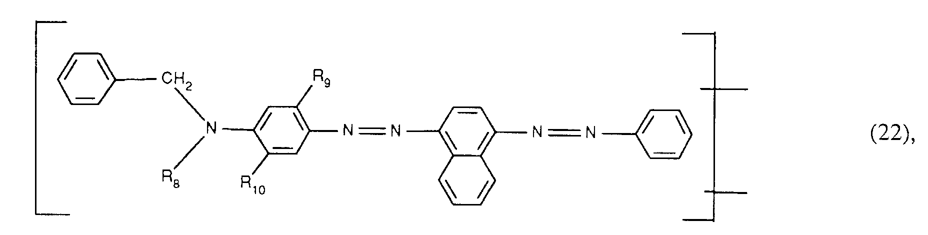 in which R₈ is hydrogen or C₁-C₄alkyl, R₉ and R₁₀ are hydrogen, C₁-C₄alkyl, C₁-C₄alkoxy, C₂-C₄alkanoylamino or halogen and R₈ and R₁₀, if desired together with the atoms linking them, form a tetrahydropyridine ring,
or 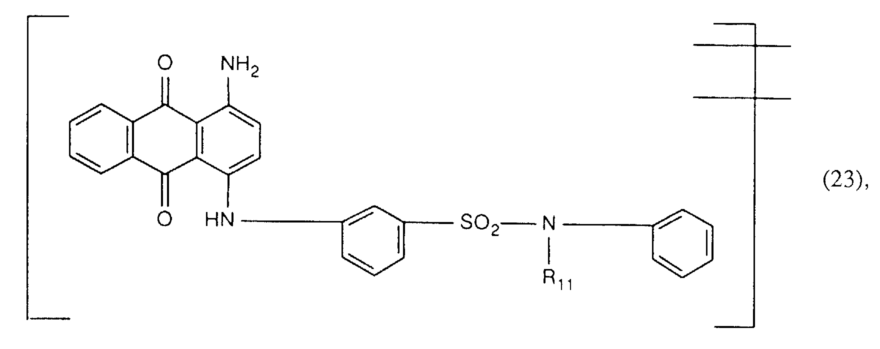 in which R₁₁ is hydrogen or C₁-C₄alkyl,
or 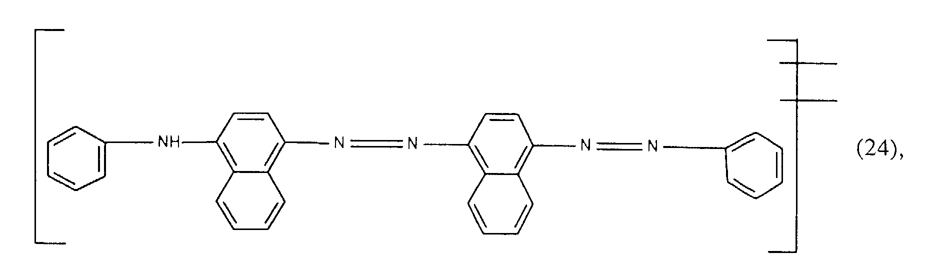 the radicals Fa' of the formulae (18) to (24) being each unsubstituted or substituted, independently of one another, by C₁-C₄alkyl, C₁-C₄alkoxy, C₂-C₄alkanoylamino or halogen,
or a reactive dye of the formula 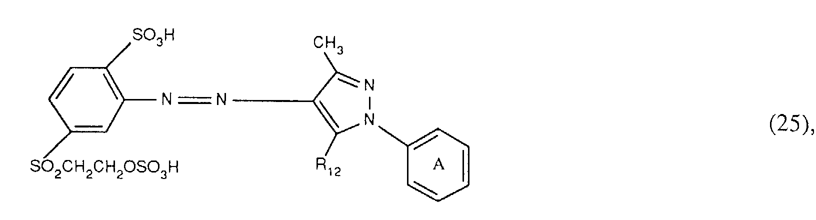 in which R₁₂ is amino or hydroxyl and benzene ring A is unsubstituted or substituted by C₁-C₄alkyl, C₁-C₄alkoxy, C₂-C₄alkanoylamino or halogen.

12. A reactive dye according to claim 11 of the formula 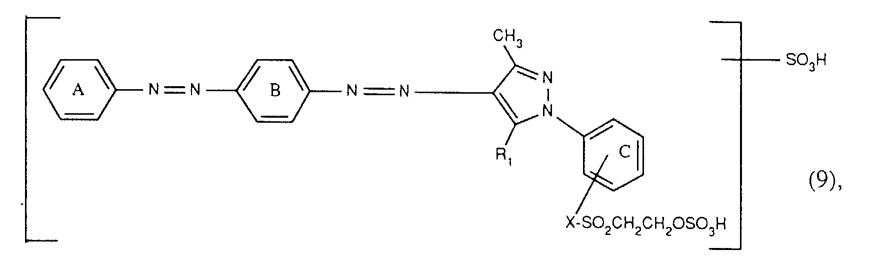 in which R₁ is C₁-C₄alkyl, benzene rings A, B and C, independently of one another, are unsubstituted or substituted by C₁-C₄alkyl, C₁-C₄alkoxy, C₂-C₄alkanoylamino or halogen, and X is a direct bond or a radical of the formula -CONHCH₂CH₂-.

13. A reactive dye according to claim 11 of the formula 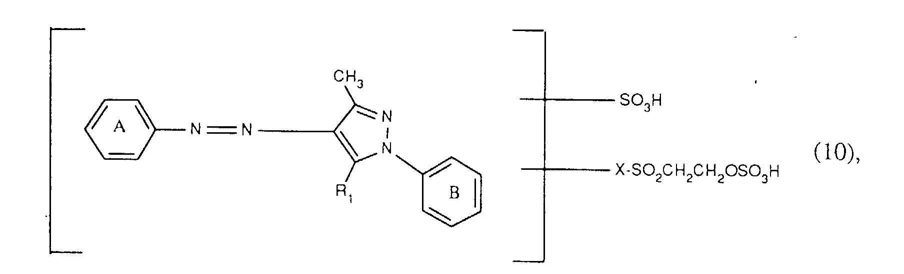 in which R₁ is amino or hydroxyl, benzene rings A and B, independently of one another, are unsubstituted or substituted by C₁-C₄alkyl, C₁-C₄alkoxy, C₂-C₄alkanoylamino or halogen, and X is a radical of the formula -CONHCH₂CH₂-.

14. A reactive dye according to claim 11 of the formula 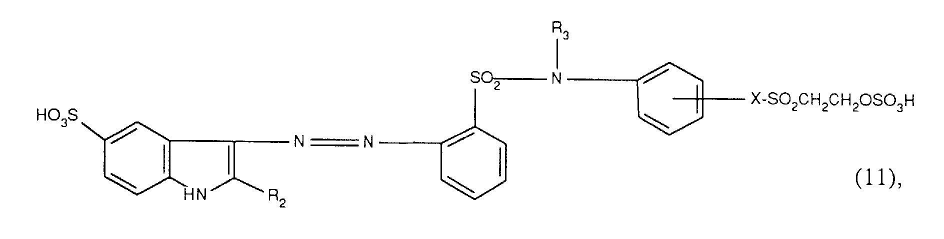 in which R₂ is C₁-C₄alkyl or phenyl, R₃ is hydrogen or C₁-C₄alkyl and X is a direct bond or a radical of the formula -CONHCH₂CH₂-.

15. A reactive dye according to claim 11 of the formula 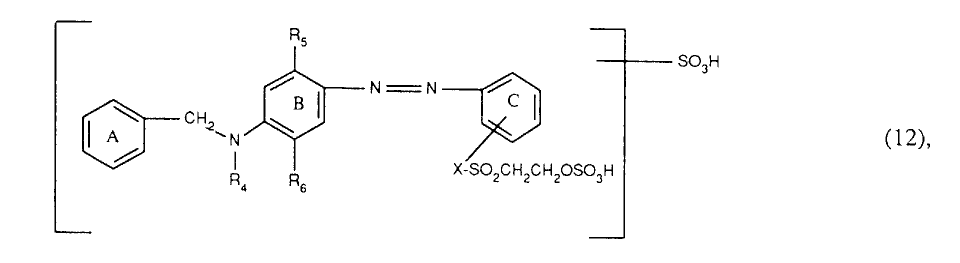 in which R₄ is hydrogen or C₁-C₄alkyl, R₅ is hydrogen, C₁-C₄alkyl, C₁-C₄alkoxy or C₂-C₄alkanoylamino, R₆ is hydrogen, C₁-C₄alkyl, C₁-C₄alkoxy or halogen, X is a direct bond or a radical of the formula -CONHCH₂CH₂-, benzene ring C is unsubstituted or substituted by C₁-C₄alkyl, C₁-C₄alkoxy or halogen, and the sulfo group is attached to benzene ring A, B or C.

16. A reactive dye according to claim 11 of the formula 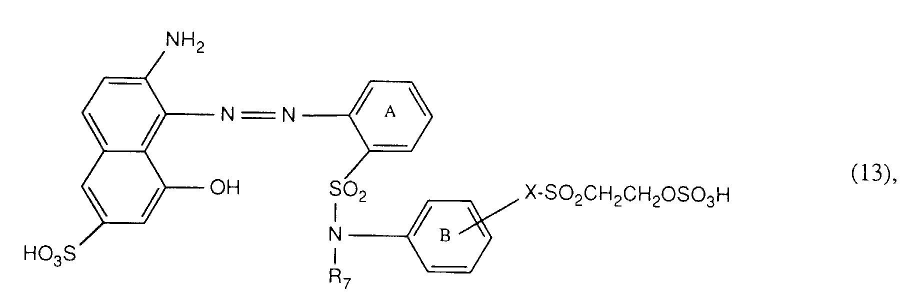 in which R₇ is hydrogen or C₁-C₄alkyl, X is a direct bond or a radical of the formula -CONHCH₂CH₂-, and benzene rings A and B, independently of one another, are unsubstituted or substituted by C₁-C₄alkyl, C₁-C₄alkoxy or halogen.

17. A reactive dye according to claim 11 of the formula 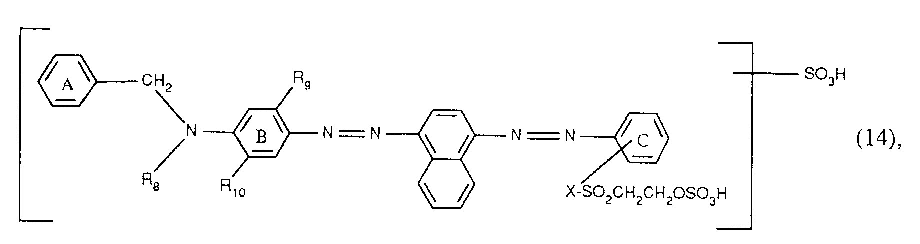 in which R₈ is hydrogen or C₁-C₄alkyl, R₉ is hydrogen, C₁-C₄alkyl, C₁-C₄alkoxy or C₂-C₄alkanoylamino, R₁₀ is hydrogen, C₁-C₄alkyl, C₁-C₄alkoxy or halogen, X is a direct bond or a radical of the formula -CONHCH₂CH₂-, benzene rings A, B and C, independently of one another, are unsubstituted or substituted by C₁-C₄alkyl, C₁-C₄alkoxy or halogen, and the sulfo group is attached to benzene ring A, B or C.

18. A reactive dye according to claim 11 of the formula 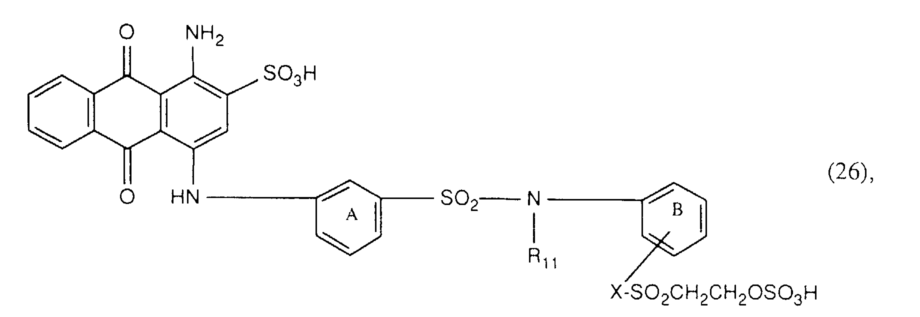 in which R₁₁ is hydrogen or C₁-C₄alkyl, X is a direct bond or a radical of the formula -CONHCH₂CH₂-, and benzene rings A and B, independently of one another, are unsubstituted or substituted by C₁-C₄alkyl, C₁-C₄alkoxy or halogen.

19. A reactive dye according to claim 11 of the formula 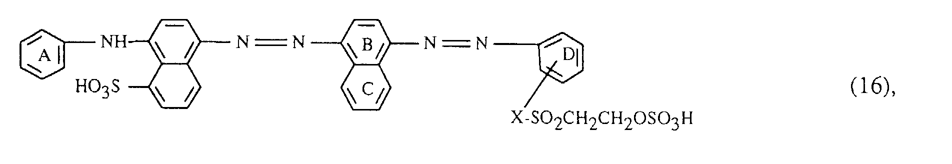 in which X is a direct bond or a radical of the formula -CONHCH₂CH₂-, and benzene rings A, B, C and D, independently of one another, are unsubstituted or substituted by C₁-C₄alkyl, C₁-C₄alkoxy or halogen.

## Revendications

1. Procédé de teinture de matériaux fibreux en polyamide synthétique, caractérisé par le fait que l'on teint ces matériaux fibreux avec des colorants réactifs de formule
(1) HO₃-Fa-(X-SO₂CH₂CH₂OSO₃H)ₘ
où Fa représente le résidu d'un colorant, X représente une liaison directe ou un résidu de formule -CONHCH₂CH₂-, m vaut 1 ou 2 et le colorant de formule (1) ne contient qu'un seul groupe sulfo,
dans un bain aqueux ayant un pH compris entre 5 et 9, et en ce que l'on ajuste la température de teinture en augmentant la température sur un intervalle de temps d'au moins 20 minutes d'une valeur de 80 °C à une valeur d'au moins 95 °C.

2. Procédé selon la revendication 1, caractérisé en ce que l'on utilise des colorants réactifs de formule (1) dans lesquels Fa représente un résidu d'un colorant monoazoïque, polyazoïque ou anthraquinonique.

3. Procédé selon l'une des revendications 1 et 2, caractérisé en ce que l'on utilise des colorants de formule 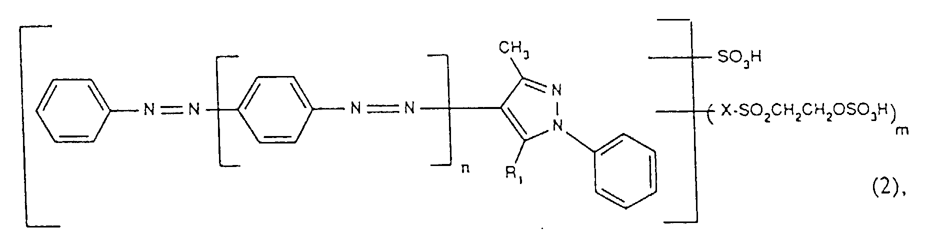 où R₁ représente un atome d'hydrogène ou un groupe alkyle en C₁₋₄, amino ou hydroxyle et n vaut 0 ou 1, 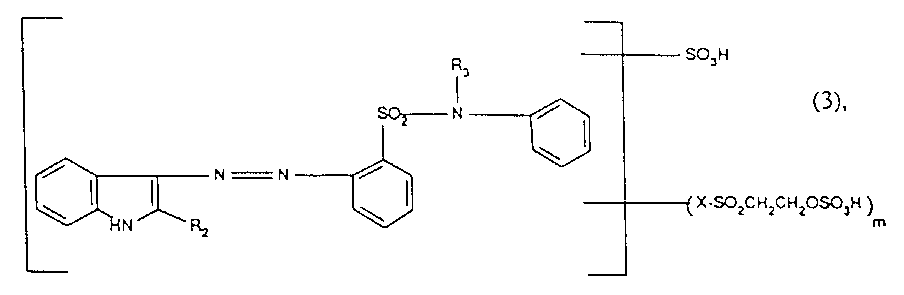 dans laquelle R₂ représente un atome d'hydrogène ou un groupe alkyle en C₁₋₄ ou phényle portant éventuellement un ou plusieurs groupes alkyle en C₁₋₄, alcoxy en C₁₋₄, alcanoylamino en C₂₋₄ ou halogéno, et R₃ représente un atome d'hydrogène ou un groupe alkyle en C₁₋₄, 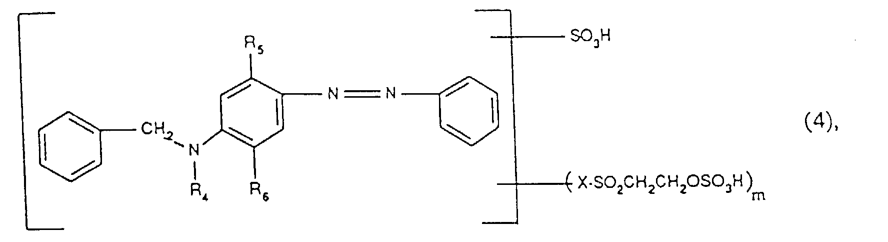 où R₄ représente un atome d'hydrogène ou un groupe alkyle en C₁₋₄, R₅ et R₆ représentent chacun un atome d'hydrogène ou un groupe alkyle en C₁₋₄, alcoxy en C₁₋₄, alcanoylamino en C₂₋₄ ou halogéno, et R₄ et R₆ peuvent former, avec les atomes qui les relient, un noyau tétrahydropyridine. 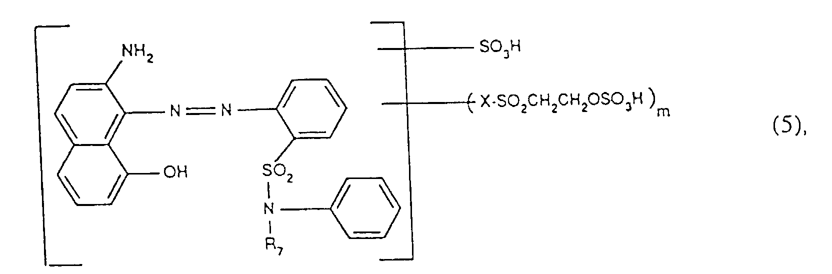 où R₇ représente un atome d'hydrogène ou un groupe alkyle en C₁₋₄, 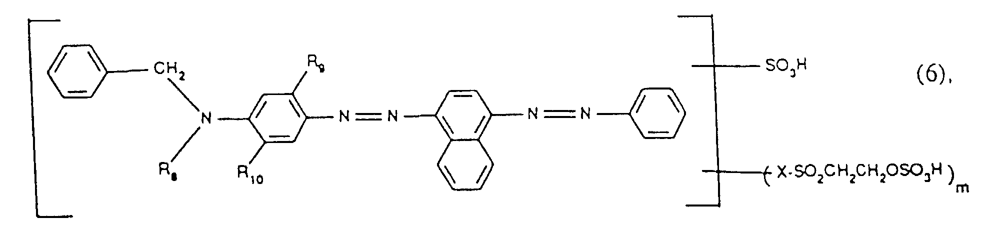 où R₈ représente un atome d'hydrogène ou un groupe alkyle en C₁₋₄, R₉ et R₁₀ représentent chacun un atome d'hydrogène ou un groupe alkyle en C₁₋₄, alcoxy en C₁₋₄, alcanoylamino en C₂₋₄ ou halogéno, et R₈ et R₁₀ peuvent former avec les atomes qui les relient, un noyau tétrahydropyridine, 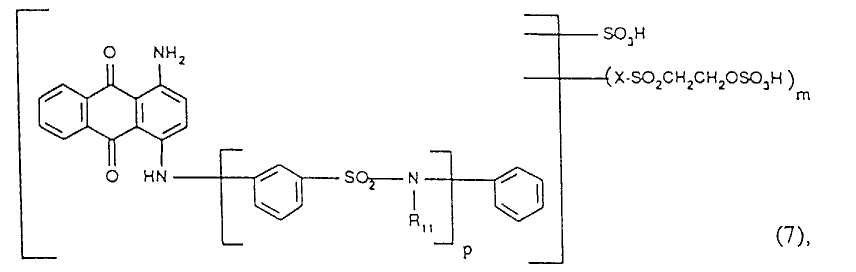 où R₁₁ représente un atome d'hydrogène ou un groupe alkyle en C₁₋₄ et vaut 0 ou 1 ; ou 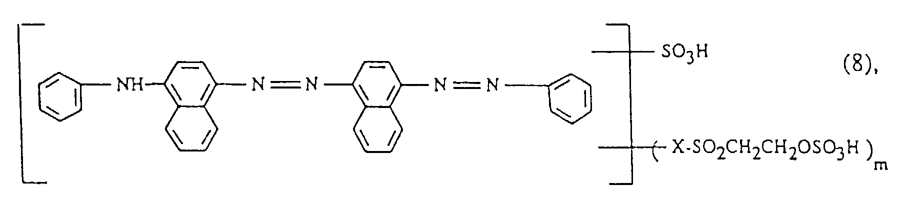 X dans les formules (2) à (8) représentant une liaison directe ou un résidu de formule -CONHCH₂CH₂- et m valant 1 ou 2, et les colorants de formule (2) à (8) portant éventuellement d'autres substituants alkyle en C₁₋₄, alcoxy en C₁₋₄, alcanoylamino en C₂₋₄ ou halogéno.

4. Procédé selon l'une des revendications 1 à 3, caractérisé en ce que l'on utilise des colorants réactifs de formule (1) dans lesquels m vaut 1.

5. Procédé selon une des revendications 1 à 4, caractérisé en ce que l'on teint selon un procédé par épuisement.

6. Procédé selon une des revendication 1 à 5, caractérisé en ce que l'on teint à une température comprise entre 95 et 102 °C.

7. Procédé selon une des revendications 1 à 6, caractérisé en ce que l'on ajuste la température de teinture en augmentant la température de 80 °C à une valeur de 95 à 102 °C sur une période d'au moins 20 minutes, en particulier d'au moins 30 minutes.

8. Procédé selon l'une des revendications 1 à 7, caractérisé en ce que l'on effectue la teinture en présence d'un tampon ou en ce que l'on ajoute au cours de l'opération de teinture la quantité de base nécessaire pour maintenir le pH à une valeur constante.

9. Procédé selon l'une des revendications 1 à 8, caractérisé en ce que l'on teint à un pH compris entre 5,5 et 8, en particulier entre 6 et 7.

10. Procédé selon une des revendications 1 à 9, caractérisé en ce que l'on teint selon un procédé par épuisement à une température de 95 à 102 °C, en présence d'un tampon ou en ajoutant en cours de teinture la quantité de base nécessaire pour maintenir le pH à une valeur constante, et en ce que l'on ajuste la température de teinture en chauffant le bain d'une température de 80 °C à une température de 95 à 102 °C sur une période d'au moins 20 minutes, de préférence d'au moins 30 minutes.

11. Colorants réactifs de formule
(17) HO₃S-Fa'-X-SO₂CH₂CH₂OSO₃H
où X représente une liaison directe ou un résidu de formule -CONHCH₂CH₂- et Fa' représente un résidu de formule 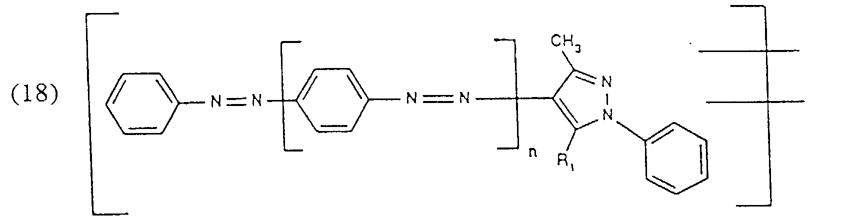 où R₁ représente un atome d'hydrogène ou un groupe alkyle en C₁₋₄, amino ou hydroxyle et n vaut 0 ou 1, et où X représente un résidu de formule -CONHCH₂CH₂- lorsque n vaut 0, ou 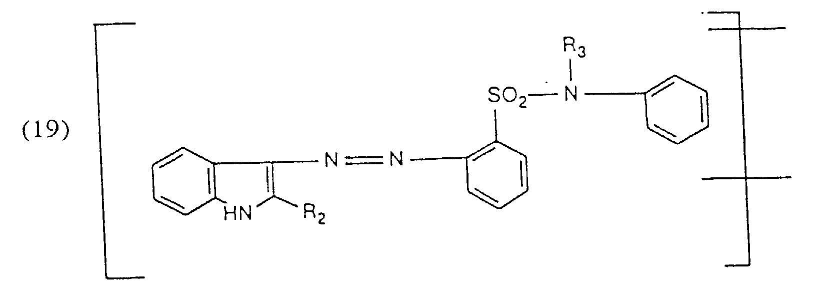 dans laquelle R₂ représente un atome d'hydrogène ou un groupe alkyle en C₁₋₄ ou phényle portant éventuellement un ou plusieurs groupes alkyle en C₁₋₄, alcoxy en C₁₋₄, alcanoylamino en C₂₋₄ ou halogéno, et R₃ représente un atome d'hydrogène ou un groupe alkyle en C₁₋₄, ou 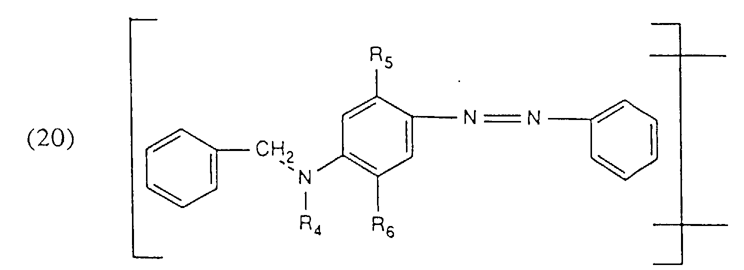 où R₄ représente un atome d'hydrogène ou un groupe alkyle en C₁₋₄, R₅ et R₆ représentent chacun un atome d'hydrogène ou un groupe alkyle en C₁₋₄, alcoxy en C₁₋₄, alcanoylamino en C₂₋₄ ou halogéno, et R₄ et R₆ peuvent former, avec les atomes qui les relient, un noyau tétrahydropyridine, ou 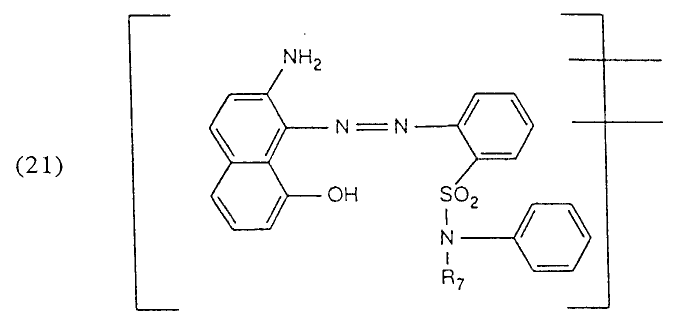 où R₇ représente un atome d'hydrogène ou un groupe alkyle en C₁₋₄, ou 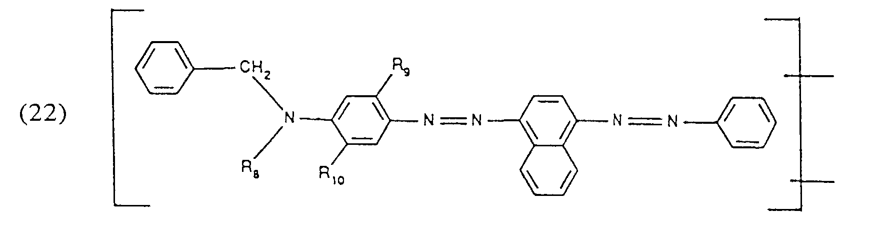 où R₈ représente un atome d'hydrogène ou un groupe alkyle en C₁₋₄, R₉ et R₁₀ représentent chacun un atome d'hydrogène, un groupe alkyle en C₁₋₄, alcoxy en C₁₋₄, alcanoylamino en C₂₋₄ ou halogéno et R₈ et R₁₀ peuvent former, avec les atomes qui les relient, un noyau tétrahydropyridine, ou 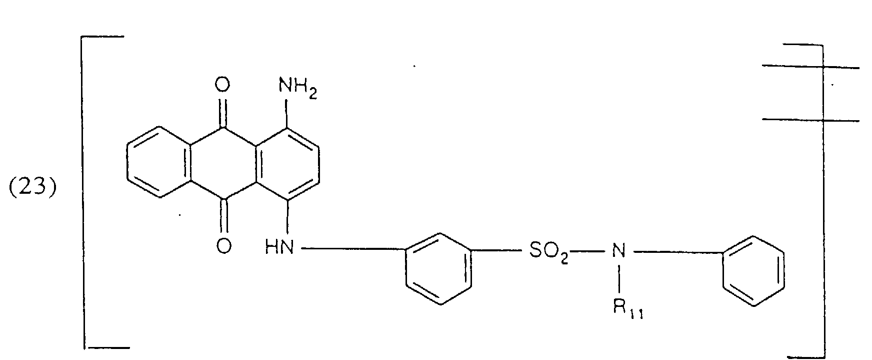 où R₁₁ représente un atome d'hydrogène ou un groupe alkyle en C₁₋₄,
ou 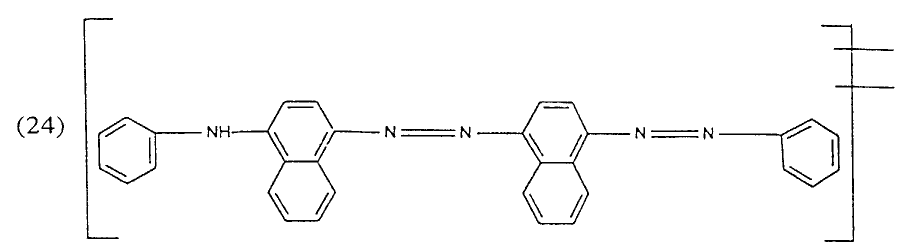 les résidus Fa' des formules (18) à (24) pouvant porter indépendamment des substituants alkyle en C₁₋₄, alcoxy en C₁₋₄, alcanoylarnino en C₂₋₄ ou halogéno,
ou des colorants réactifs de formule 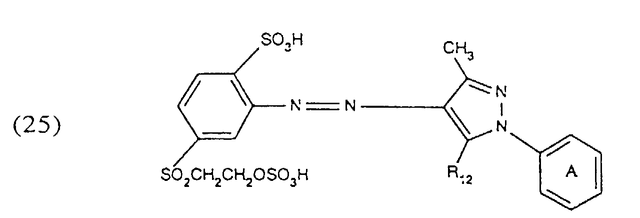 où R₁₂ représente un groupe amino ou hydroxyle et le noyau benzénique A porte éventuellement un ou plusieurs substituants alkyle en C₁₋₄, alcoxy en C₁₋₄, alcanoylamino en C₂₋₄ ou halogéno.

12. Colorants réactifs selon la revendication 11 de formule 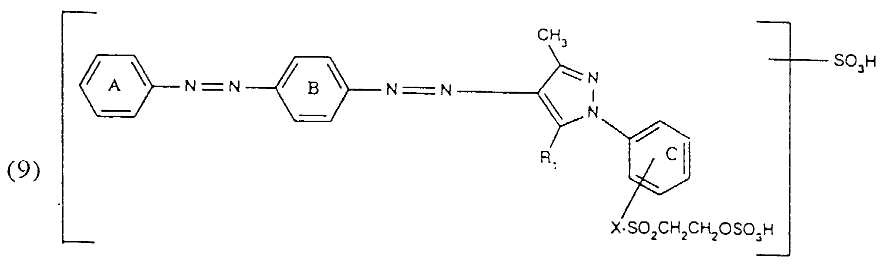 où R₁ représente un groupe alkyle en C₁₋₄, les noyaux benzéniques A, B et C portent éventuellement, indépendamment les uns des autres, un ou plusieurs substituants alkyle en C₁₋₄, alcoxy en C₁₋₄, alcanoylamino en C₂₋₄ ou halogéno, et X représente une liaison directe ou un résidu de formule -CONHCH₂CH₂-.

13. Colorants réactifs selon la revendication 11 de formule 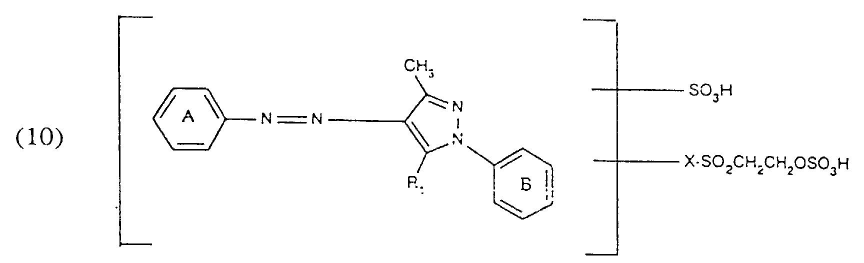 où R₁ représente un groupe amino ou hydroxyle, les noyaux benzéniques A et B portent éventuellement, indépendamment les uns des autres, un ou plusieurs substituants alkyle en C₁₋₄, alcoxy en C₁₋₄, alcanoylamino en C₂₋₄ ou halogéno, et X représente un résidu de formule -CONHCH₂CH₂-.

14. Colorants réactifs de formule 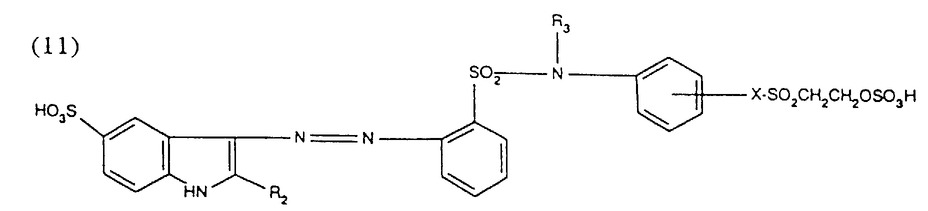 où R₂ représente un groupe alkyle en C₁₋₄ ou un groupe phényle, R₃ représente un atome d'hydrogène ou un groupe alkyle en C₁₋₄ et X représente une liaison directe ou un résidu de formule -CONHCH₂CH₂-.

15. Colorants réactifs selon la revendication 11, de formule 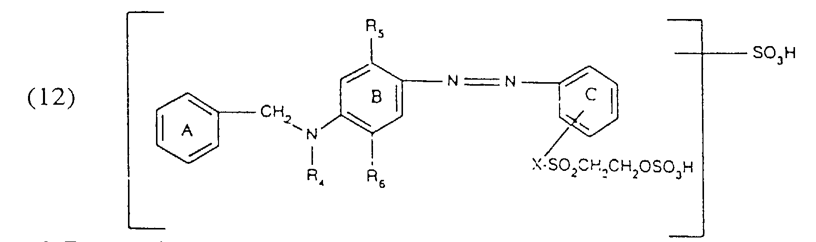 où R₄ représente un atome d'hydrogène ou un groupe alkyle en C₁₋₄, R₅ représente un atome d'hydrogène ou un groupe alkyle en C₁₋₄, alcoxy en C₁₋₄ ou alcanoylamino en C₂₋₄, R₆ représente un atome d'hydrogène ou un groupe alkyle en C₁₋₄, alcoxy en C₁₋₄, ou halogéno, X représente une liaison directe ou un résidu de formule -CONHCH₂CH₂-, le noyau benzénique C peut porter un ou plusieurs substituants alkyle en C₁₋₄, alcoxy en C₁₋₄ ou halogéno, et le groupe sulfo est porté par le noyau benzénique A, B ou C.

16. Colorants réactifs selon la revendication 11 de formule 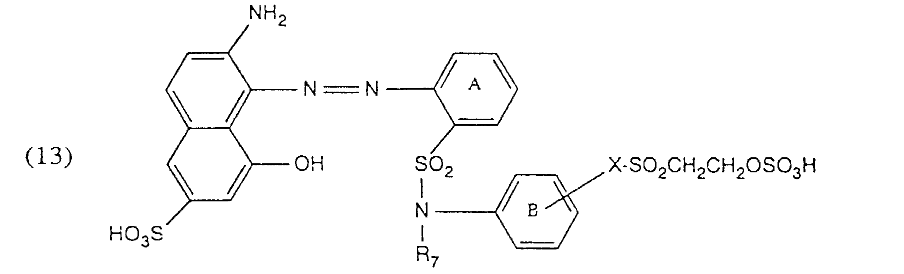 où R₇ représente un atome d'hydrogène ou un groupe alkyle en C₁₋₄, X représente une liaison directe ou un résidu de formule -CONHCH₂CH₂-, et les noyaux benzéniques A et B portent indépendamment l'un de l'autre éventuellement un ou plusieurs substituants alkyle en C₁₋₄, alcoxy en C₁₋₄ ou halogéno.

17. Colorants réactifs selon la revendication 11 de formule 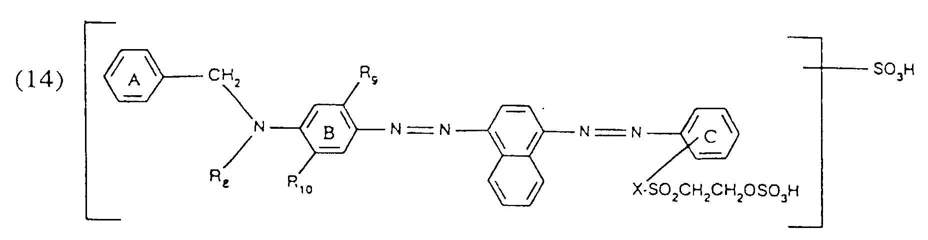 où R₈ représente un atome d'hydrogène ou un groupe alkyle en C₁₋₄, R₉ représente un atome d'hydrogène ou un groupe alkyle en C₁₋₄, alcoxy en C₁₋₄ ou alcanoylamino en C₂₋₄, R₁₀ représente un atome d'hydrogène ou un groupe alkyle en C₁₋₄, alcoxy en C₁₋₄ ou halogéno, X représente une liaison directe ou un résidu de formule -CONHCH₂CH₂-, les noyaux benzéniques A, B et C peuvent porter indépendamment un ou plusieurs substituants alkyle en C₁₋₄, alcoxy en C₁₋₄ ou halogéno, et le groupe sulfo est porté par le noyau benzénique A, B ou C.

18. Colorants réactifs selon la revendication 11 de formule 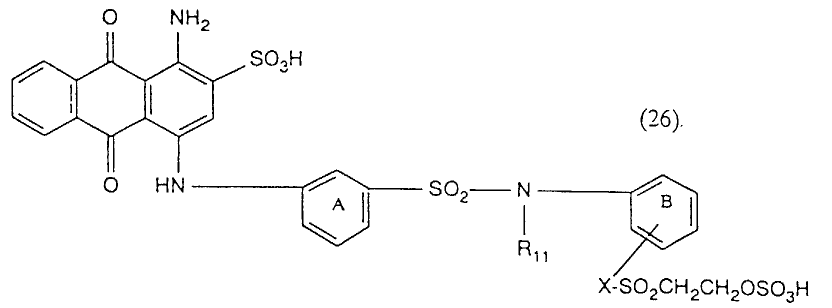 où R₁₁ représente un atome d'hydrogène ou un groupe alkyle en C₁₋₄, X représente une liaison directe ou un résidu de formule -CONHCH₂CH₂-, les noyaux benzéniques A et B peuvent porter, indépendamment l'un de l'autre, un ou plusieurs substituants alkyle en C₁₋₄, alcoxy en C₁₋₄ ou halogéno.

19. Colorants réactifs selon la revendication 11 de formule 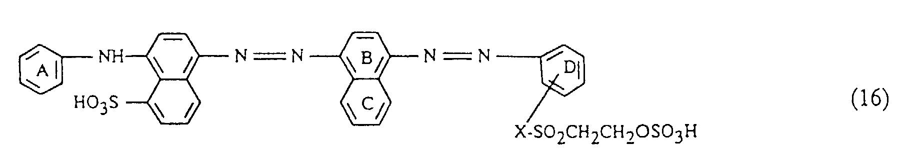 dans lesquels X représente une liaison directe ou un résidu de formule -CONHCH₂CH₂-, les noyaux benzéniques A, B, C et D peuvent porter, indépendamment les uns des autres, un ou plusieurs substituants alkyle en C₁₋₄, alcoxy en C₁₋₄ ou halogéno.
